# EUROPEAN PATENT SPECIFICATION

(11) **EP 1 863 350 B1**
(45) Date of publication and mention of the grant of the patent: **12.01.2011**
(21) Application number: 06725266.8
(22) Date of filing: 23.03.2006
(51) Int. Cl.: A01N 41/06

(54) **2-CYANOBENZENESULFONAMIDE COMPOUNDS FOR SEED TREATMENT**
2-CYANOBENZOLSULFONAMIDVERBINDUNGEN ZUR BEHANDLUNG VON SAMEN
COMPOSES A BASE DE 2-CYANOBENZENESULFONAMIDE, DESTINES AU TRAITEMENT DES SEMENCES

(30) Priority: 24.03.2005 US 664771 P
(43) Date of publication of application: 12.12.2007
(73) Proprietor: BASF SE, 67056 Ludwigshafen (DE)
(72) Inventor: VON DEYN, Wolfgang, 67435 Neustadt (DE); KAISER, Florian, 68167 Mannheim (DE); POHLMAN, Matthias, 69115 Heidelberg (DE); BASTIAANS, Henricus Maria Martinus, 61250 Usingen (DE); BAUMANN, Ernst, 67373 Dudenhofen (DE); RACK, Michael, 69214 Eppelheim (DE); ANSPAUGH, Douglas D., Apex, Nc 27502 (US); COTTER, Henry Van Tuyl, Raleigh, Nc 27613 (US); CULBERTSON, Deborah L., Fuquay Varina, Nc 27526 (US); HOFMANN, Michael, 67059 Ludwigshafen (DE); HICKS, Carol, Raleigh, North Carolina 27612 (US)
(86) International application number: PCT/EP2006/060988
(87) International publication number: WO 2006/100288

(56) References cited:
- EP-A1- 0 033 984
- WO-A-2005/035486
- DATABASE WPI Week 198116 Derwent Publications Ltd., London, GB; AN 1981-28284D XP002403494 & JP 56 020564 A (MEIJI SEIKA KAISHA) 26 February 1981 (1981-02-26)
- DATABASE WPI Week 198652 Derwent Publications Ltd., London, GB; AN 1986-343380 XP002403495 & JP 61 257960 A (MITSUI TOATSU CHEM INC) 15 November 1986 (1986-11-15)

## Description

The present invention provides a method for the for the protection of seeds from soil insects and of the resulting plant's roots and shoots from soil and foliar insects comprising contacting the seeds before sowing and/or after pregermination with a 2-cyanobenzenesulfonamide compound of the general formula I 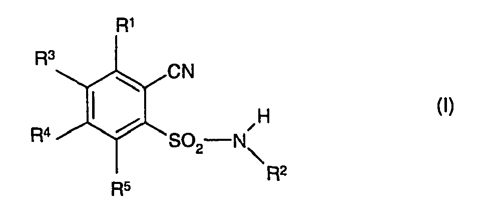 where
- R¹: is C₁-C₄-alkyl, C₁-C₄-haloalkyl, C₁-C₄-alkoxy or C₁-C₄-haloalkoxy;
- R²: is hydrogen, C₁-C₆-alkyl, C₂-C₆-alkenyl, C₂-C₆-alkinyl, C₃-C₈-cycloalkyl or C₁-C₄- alkoxy, wherein the five last-mentioned radicals may be unsubstituted, partially or fully halogenated and/or may carry one, two, or three radicals selected from the group consisting of C₁-C₄-alkoxy, C₁-C₄-alkylthio, C₁-C₄-alkylsulfinyl, C₁-C₄- alkylsulfonyl, C₁-C₄-haloalkoxy, C₁-C₄-haloalkylthio, C₁-C₄-alkoxycarbonyl, cyano, amino, (C₁-C₄-alkyl)amino, di-(C₁-C₄-alkyl)amino, C₃-C₈-cycloalkyl and phenyl, it being possible for phenyl to be unsubstituted, partially or fully halogenated and/or to carry one, two or three substituents selected from the group consisting of C₁- C₄-alkyl, C₁-C₄-haloalkyl, C₁-C₄-alkoxy, C₁-C₄-haloalkoxy; and
- R³, R⁴ and R⁵: are independently of one another selected from the group consisting of hydrogen, halogen, cyano, nitro, C₁-C₆-alkyl, C₃-C₈-cycloalkyl, C₁-C₄-haloalkyl, C₁-C₄-alkoxy, C₁-C₄-alkylthio, C₁-C₄-alkylsulfinyl, C₁-C₄-alkylsulfonyl, C₁-C₄- haloalkoxy, C₁-C₄-haloalkylthio, C₂-C₆-alkenyl, C₂-C₆-alkinyl, C₁-C₄- alkoxycarbonyl, amino, (C₁-C₄-alkyl)amino, di-(C₁-C₄-alkyl)amino, aminocarbonyl, (C₁-C₄-alkyl)aminocarbonyl and di-(C₁-C₄-alkyl)aminocarbonyl;
or the enantiomers and or agriculturally acceptable salts.

The invention also relates to seed comprising compounds of formula I.

One of the problems the farmer is faced with is that seeds and plant roots and shoots are constantly threatened by foliar and soil insects and other pests.

Another difficulty in relation to the use of seed protection pesticides is that the repeated and exclusive application of an individual pesticidal compound leads in many cases to a rapid selection of soil pests, which have developed natural or adapted resistance against the active compound in question. Therefore there is a need for seed protection agents that help prevent or overcome resistance.

It was therefore an object of the present invention to provide compounds which solve the problems of protection of the protection of seeds and growing plants and/or reducing the dosage rate and / or enhancing the spectrum of activity and / or to resistance management.

We have found that these objects are in part or in whole achieved by a method for the protection of seeds from soil insects and of the resulting plant's roots and shoots from soil and foliar insects comprising contacting the seeds before sowing and/or after pregermination with a compound of formula I.

The aphicidal or insecticidal activity in plant protection in the agricultural field of the compounds of formula I has been respectively described in EP0033984 A1 and PCT/EP/04/011004.

However, EP0033984 A1 and PCT/EP/04/011004 do not mention a method for the protection of seeds, from soil insects and of the resulting plant's roots and shoots from soil and foliar insects comprising contacting the seeds before sowing and/or after pregermination with a 2-cyanobenzenesulfonamide compound I.

Surprisingly it has now been found that compounds of formula I are suitable for the protection of seeds from soil insects and of the resulting plant's roots and shoots from soil and foliar insects.

Salts of the compounds of the formula I which are suitable for the use according to the invention are especially agriculturally acceptable salts. They can be formed in a customary method, e.g. by reacting the compound with an acid of the anion in question.

Suitable agriculturally useful salts are especially the salts of those cations or the acid addition salts of those acids whose cations and anions, respectively, do not have any adverse effect on the action of the compounds according to the present invention, which are useful for combating harmful insects or arachnids. Thus, suitable cations are in particular the ions of the alkali metals, preferably lithium, sodium and potassium, of the alkaline earth metals, preferably calcium, magnesium and barium, and of the transition metals, preferably manganese, copper, zinc and iron, and also the ammonium ion which may, if desired, carry one to four C₁-C₄-alkyl substituents and/or one phenyl or benzyl substituent, preferably diisopropylammonium, tetramethylammonium, tetrabutylammonium, trimethylbenzylammonium, furthermore phosphonium ions, sulfonium ions, preferably tri(C₁-C₄-alkyl)sulfonium, and sulfoxonium ions, preferably tri(C₁-C₄-alkyl)sulfoxonium.

Anions of useful acid addition salts are primarily chloride, bromide, fluoride, hydrogen sulfate, sulfate, dihydrogen phosphate, hydrogen phosphate, phosphate, nitrate, hydrogen carbonate, carbonate, hexafluorosilicate, hexafluorophosphate, benzoate, and the anions of C₁-C₄-alkanoic acids, preferably formate, acetate, propionate and butyrate. They can be formed by reacting the compounds of the formulae Ia and Ib with an acid of the corresponding anion, preferably of hydrochloric acid, hydrobromic acid, sulfuric acid, phosphoric acid or nitric acid.

The organic moieties mentioned in the above definitions of the variables are - like the term halogen - collective terms for individual listings of the individual group members. The prefix Cₙ-Cₘ indicates in each case the possible number of carbon atoms in the group.

The term halogen denotes in each case fluorine, bromine, chlorine or iodine.

Examples of other meanings are :
The term "C₁-C₄-alkyl" as used herein and the alkyl moieties of alkylamino and dialkylamino refer to a saturated straight-chain or branched hydrocarbon radical having 1 to 4 carbon atoms, i.e., for example methyl, ethyl, propyl, 1-methylethyl, butyl, 1-methylpropyl, 2-methylpropyl or 1,1-dimethylethyl.
The term "C₁-C₆-alkyl" as used herein refers to a saturated straight-chain or branched hydrocarbon radical having 1 to 6 carbon atoms, for example one of the radicals mentioned under C₁-C₄-alkyl and also n-pentyl, 1-methylbutyl, 2-methylbutyl, 3-methylbutyl, 2,2-dimethylpropyl, 1-ethylpropyl, n-hexyl, 1,1-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl.
The term "C₁-C₄-haloalkyl" as used herein refers to a straight-chain or branched saturated alkyl radical having 1 to 4 carbon atoms (as mentioned above), where some or all of the hydrogen atoms in these radicals may be replaced by fluorine, chlorine, bromine and/or iodine, i.e., for example chloromethyl, dichloromethyl, trichloromethyl, fluoromethyl, difluoromethyl, trifluoromethyl, chlorofluoromethyl, dichlorofluoromethyl, chlorodifluoromethyl, 2-fluoroethyl, 2-chloroethyl, 2-bromoethyl, 2-iodoethyl, 2,2-difluoroethyl, 2,2,2-trifluoroethyl, 2-chloro-2-fluoroethyl, 2-chloro-2,2-difluoroethyl, 2,2-dichloro-2-fluoroethyl, 2,2,2-trichloroethyl, pentafluoroethyl, 2-fluoropropyl, 3-fluoropropyl, 2,2-difluoropropyl, 2,3-difluoropropyl, 2-chloropropyl, 3-chloropropyl, 2,3-dichloropropyl, 2-bromopropyl, 3-bromopropyl, 3,3,3-trifluoropropyl, 3,3,3-trichloropropyl, 2,2,3,3,3-pentafluoropropyl, heptafluoropropyl, 1-(fluoromethyl)-2-fluoroethyl, 1-(chloromethyl)-2-chloroethyl, 1-(bromomethyl)-2-bromoethyl, 4-fluorobutyl, 4-chlorobutyl, 4-bromobutyl or nonafluorobutyl.
The term "C₁-C₂-fluoroalkyl" as used herein refers to a C₁-C₂-alkyl radical which carries 1, 2, 3, 4, or 5 fluorine atoms, for example difluoromethyl, trifluoromethyl, 1-fluoroethyl, 2-fluoroethyl, 2,2-difluoroethyl, 2,2,2-trifluoroethyl, 1,1,2,2-tetrafluoroethyl or pentafluoroethyl.
The term "C₁-C₄-alkoxy" as used herein refers to a straight-chain or branched saturated alkyl radical having 1 to 4 carbon atoms (as mentioned above) which is attached via an oxygen atom, i.e., for example methoxy, ethoxy, n-propoxy, 1-methylethoxy, n-butoxy, 1-methylpropoxy, 2-methylpropoxy or 1,1-dimethylethoxy.
The term "C₁-C₄-haloalkoxy" as used herein refers to a C₁-C₄-alkoxy radical as mentioned above which is partially or fully substituted by fluorine, chlorine, bromine and/or iodine, i.e., for example, chloromethoxy, dichloromethoxy, trichloromethoxy, fluoromethoxy, difluoromethoxy, trifluoromethoxy, chlorofluoromethoxy, dichlorofluoromethoxy, chlorodifluoromethoxy, 2-fluoroethoxy, 2-chloroethoxy, 2-bromoethoxy, 2-iodoethoxy, 2,2-difluoroethoxy, 2,2,2-trifluoroethoxy, 2-chloro-2-fluoroethoxy, 2-chloro-2,2-difluoroethoxy, 2,2-dichloro-2-fluoroethoxy, 2,2,2-trichloroethoxy, pentafluoroethoxy, 2-fluoropropoxy, 3-fluoropropoxy, 2,2-difluoropropoxy, 2,3-difluoropropoxy, 2-chloropropoxy, 3-chloropropoxy, 2,3-dichloropropoxy, 2-bromopropoxy, 3-bromopropoxy, 3,3,3-trifluoropropoxy, 3,3,3-trichloropropoxy, 2,2,3,3,3-pentafluoropropoxy, heptafluoropropoxy, 1-(fluoromethyl)-2-fluoroethoxy, 1-(chloromethyl)-2-chloroethoxy, 1-(bromomethyl)-2-bromoethoxy, 4-fluorobutoxy, 4-chlorobutoxy, 4-bromobutoxy or nonafluorobutoxy.
The term "C₁-C₄-alkylthio (C₁-C₄-alkylsulfanyl: C₁-C₄-alkyl-S-)" as used herein refers to a straight-chain or branched saturated alkyl radical having 1 to 4 carbon atoms (as mentioned above) which is attached via a sulfur atom, i.e., for example methylthio, ethylthio, n-propylthio, 1-methylethylthio, butylthio, 1-methylpropylthio, 2-methylpropylthio or 1,1-dimethylethylthio.
The term "C₁-C₄-alkylsulfinyl" (C₁-C₄-alkyl-S(=O)-), as used herein refers to a straight-chain or branched saturated hydrocarbon radical (as mentioned above) having 1 to 4 carbon atoms bonded through the sulfur atom of the sulfinyl group at any bond in the alkyl radical, i.e., for example SO-CH₃, SO-C₂H₅, n-propylsulfinyl, 1-methylethylsulfinyl, n-butylsulfinyl, 1-methylpropylsulfinyl, 2-methylpropylsulfinyl, 1,1-dimethylethylsulfinyl, n-pentylsulfinyl, 1-methylbutylsulfinyl, 2-methylbutylsulfinyl, 3-methylbutylsulfinyl, 1,1-dimethylpropylsulfinyl, 1,2-dimethylpropylsulfinyl, 2,2-dimethylpropylsulfinyl or 1-ethylpropylsulfinyl.
The term "C₁-C₄-alkylsulfonyl" (C₁-C₄-alkyl-S(=O)₂-) as used herein refers to a straight-chain or branched saturated alkyl radical having 1 to 4 carbon atoms (as mentioned above) which is bonded via the sulfur atom of the sulfonyl group at any bond in the alkyl radical, i. e., for example SO₂-CH₃, SO₂-C₂H₅, n-propylsulfonyl, SO₂-CH(CH₃)₂, n-butylsulfonyl, 1-methylpropylsulfonyl, 2-methylpropylsulfonyl or SO₂-C(CH₃)₃.
The term "C₁-C₄-haloalkylthio" as used herein refers to a C₁-C₄-alkylthio radical as mentioned above which is partially or fully substituted by fluorine, chlorine, bromine and/or iodine, i.e., for example, fluoromethylthio, difluoromethylthio, trifluoromethylthio, chlorodifluoromethylthio, bromodifluoromethylthio, 2-fluoroethylthio, 2-chloroethylthio, 2-bromoethylthio, 2-iodoethylthio, 2,2-difluoroethylthio, 2,2,2-trifluoroethylthio, 2,2,2-trichloroethylthio, 2-chloro-2-fluoroethylthio, 2-chloro-2,2-difluoroethylthio, 2,2-dichloro-2-fluoroethylthio, pentafluoroethylthio, 2-fluoropropylthio, 3-fluoropropylthio, 2-chloropropylthio, 3-chloropropylthio, 2-bromopropylthio, 3-bromopropylthio, 2,2-difluoropropylthio, 2,3-difluoropropylthio, 2,3-dichloropropylthio, 3,3,3-trifluoropropylthio, 3,3,3-trichloropropylthio, 2,2,3,3,3-pentafluoropropylthio, heptafluoropropylthio, 1-(fluoromethyl)-2-fluoroethylthio, 1-(chloromethyl)-2-chloroethylthio, 1-(bromomethyl)-2-bromoethylthio, 4-fluorobutylthio, 4-chlorobutylthio, 4-bromobutylthio or nonafluorobutylthio.
The term "C₁-C₄-alkoxycarbonyl" as used herein refers to a straight-chain or branched alkoxy radical (as mentioned above) having 1 to 4 carbon atoms attached via the carbon atom of the carbonyl group, i.e., for example methoxycarbonyl, ethoxycarbonyl, n-propoxycarbonyl, 1-methylethoxycarbonyl, n-butoxycarbonyl, 1-methylpropoxycarbonyl, 2-methylpropoxycarbonyl or 1,1-dimethylethoxycarbonyl.
The term "(C₁-C₄-alkylamino)carbonyl as used herein refers to, for example, methylaminocarbonyl, ethylaminocarbonyl, propylaminocarbonyl, 1-methylethylaminocarbonyl, butylaminocarbonyl, 1-methylpropylaminocarbonyl, 2-methylpropylaminocarbonyl or 1,1-dimethylethylaminocarbonyl.
The term "di-(C₁-C₄-alkyl)aminocarbonyl" as used herein refers to, for example, N,N-dimethylaminocarbonyl, N,N-diethylaminocarbonyl, N,N-di-(1-methylethyl)aminocarbonyl, N,N-dipropylaminocarbonyl, N,N-dibutylaminocarbonyl, N,N-di-(1-methylpropyl)aminocarbonyl, N,N-di-(2-methylpropyl)aminocarbonyl, N,N-di-(1,1-dimethylethyl)aminocarbonyl, N-ethyl-N-methylaminocarbonyl, N-methyl-N-propylaminocarbonyl, N-methyl-N-(1-methylethyl)aminocarbonyl, N-butyl-N-methylaminocarbonyl, N-methyl-N-(1-methylpropyl)aminocarbonyl, N-methyl-N-(2-methylpropyl)aminocarbonyl, N-(1,1-dimethylethyl)-N-methylaminocarbonyl, N-ethyl-N-propylaminocarbonyl, N-ethyl-N-(1-methylethyl)aminocarbonyl, N-butyl-N-ethylaminocarbonyl, N-ethyl-N-(1-methylpropyl)aminocarbonyl, N-ethyl-N-(2-methylpropyl)aminocarbonyl, N-ethyl-N-(1,1-dimethylethyl)aminocarbonyl, N-(1-methylethyl)-N-propylaminocarbonyl, N-butyl-N-propylaminocarbonyl, N-(1-methylpropyl)-N-propylaminocarbonyl, N-(2-methylpropyl)-N-propylaminocarbonyl, N-(1,1-dimethylethyl)-N-propylaminocarbonyl, N-butyl-N-(1-methylethyl)aminocarbonyl, N-(1-methylethyl)-N-(1-methylpropyl)aminocarbonyl, N-(1-methylethyl)-N-(2-methylpropyl)aminocarbonyl, N-(1,1-dimethylethyl)-N-(1-methylethyl)aminocarbonyl, N-butyl-N-(1-methylpropyl)aminocarbonyl, N-butyl-N-(2-methylpropyl)aminocarbonyl, N-butyl-N-(1,1-dimethylethyl)aminocarbonyl, N-(1-methylpropyl)-N-(2-methylpropyl)aminocarbonyl, N-(1,1-dimethylethyl)-N-(1-methylpropyl)aminocarbonyl or N-(1,1-dimethylethyl)-N-(2-methylpropyl)aminocarbonyl.
The term "C₂-C₆-alkenyl" as used herein refers to a straight-chain or branched mono-unsaturated hydrocarbon radical having 2 to 6 carbon atoms and a double bond in any position, i.e., for example ethenyl, 1-propenyl, 2-propenyl, 1-methyl-ethenyl, 1-butenyl, 2-butenyl, 3-butenyl, 1-methyl-1-propenyl, 2-methyl-1-propenyl, 1-methyl-2-propenyl, 2-methyl-2-propenyl, 1-pentenyl, 2-pentenyl, 3-pentenyl, 4-pentenyl, 1-methyl-1-butenyl, 2-methyl-1-butenyl, 3-methyl-1-butenyl, 1-methyl-2-butenyl, 2-methyl-2-butenyl, 3-methyl-2-butenyl, 1-methyl-3-butenyl, 2-methyl-3-butenyl, 3-methyl-3-butenyl, 1,1-dimethyl-2-propenyl, 1,2-dimethyl-1-propenyl, 1,2-dimethyl-2-propenyl, 1-ethyl-1-propenyl, 1-ethyl-2-propenyl, 1-hexenyl, 2-hexenyl, 3-hexenyl, 4-hexenyl, 5-hexenyl, 1-methyl-1-pentenyl, 2-methyl-1-pentenyl, 3-methyl-1-pentenyl, 4-methyl-1-pentenyl, 1-methyl-2-pentenyl, 2-methyl-2-pentenyl, 3-methyl-2-pentenyl, 4-methyl-2-pentenyl, 1-methyl-3-pentenyl, 2-methyl-3-pentenyl, 3-methyl-3-pentenyl, 4-methyl-3-pentenyl, 1-methyl-4-pentenyl, 2-methyl-4-pentenyl, 3-methyl-4-pentenyl, 4-methyl-4-pentenyl, 1,1-dimethyl-2-butenyl, 1,1-dimethyl-3-butenyl, 1,2-dimethyl-1-butenyl, 1,2-dimethyl-2-butenyl, 1,2-dimethyl-3-butenyl, 1,3-dimethyl-1-butenyl, 1,3-dimethyl-2-butenyl, 1,3-dimethyl-3-butenyl, 2,2-dimethyl-3-butenyl, 2,3-dimethyl-1-butenyl, 2,3-dimethyl-2-butenyl, 2,3-dimethyl-3-butenyl, 3,3-dimethyl-1-butenyl, 3,3-dimethyl-2-butenyl, 1-methyl-1-butenyl, 1-ethyl-2-butenyl, 1-ethyl-3-butenyl, 2-ethyl-1-butenyl, 2-ethyl-2-butenyl, 2-ethyl-3-butenyl, 1,1,2-trimethyl-2-propenyl, 1-ethyl-1-methyl-2-propenyl, 1-ethyl-2-methyl-1-propenyl and 1-ethyl-2-methyl-2-propenyl.
The term "C₂-C₆-alkynyl" as used herein refers to a straight-chain or branched aliphatic hydrocarbon radical which contains a C-C triple bond and has 2 to 6 carbons atoms: for example ethynyl, prop-1-yn-1-yl, prop-2-yn-1-yl, n-but-1-yn-1-yl, n-but-1-yn-3-yl, n-but-1-yn-4-yl, n-but-2-yn-1-yl, n-pent-1-yn-1-yl, n-pent-1-yn-3-yl, n-pent-1-yn-4-yl, n-pent-1-yn-5-yl, n-pent-2-yn-1-yl, n-pent-2-yn-4-yl, n-pent-2-yn-5-yl, 3-methylbut-1-yn-3-yl, 3-methylbut-1-yn-4-yl, n-hex-1-yn-1-yl, n-hex-1-yn-3-yl, n-hex-1-yn-4-yl, n-hex-1-yn-5-yl, n-hex-1-yn-6-yl, n-hex-2-yn-1-yl, n-hex-2-yn-4-yl, n-hex-2-yn-5-yl, n-hex-2-yn-6-yl, n-hex-3-yn-1-yl, n-hex-3-yn-2-yl, 3-methylpent-1-yn-1-yl, 3-methylpent-1-yn-3-yl, 3-methylpent-1-yn-4-yl, 3-methylpent-1-yn-5-yl, 4-methylpent-1-yn-1-yl, 4-methylpent-2-yn-4-yl or 4-methylpent-2-yn-5-yl and the like.
The term "C₃-C₈-cycloalkyl" as used herein refers to a monocyclic hydrocarbon radical having 3 to 8 carbon atoms, for example cyclopropyl, cyclobutyl, cyclopentyl, cyclohexyl, cycloheptyl or cyclooctyl.

Among the 2-cyanobenzenesulfonamide compounds of the general formula I, preference is given to those in which the variables R¹ and R², independently of one another, but in particular in combination, have the meanings given below:
- R¹: is C₁-C₂-alkyl, especially methyl, or C₁-C₂-alkoxy, especially methoxy; or C₁-C₂- haloalkoxy, especially difluormethoxy
- R²: is hydrogen or a linear, cyclic or branched-chain hydrocarbon radical having from 1 to 4 carbon atoms e.g. C₁-C₄-alkyl, in particular methyl, ethyl, n-propyl, 1- methylethyl, cyclopropyl, C₁-C₄-haloalkyl, in particular 2-difluorethyl, C₁-C₄- alkoxy-C₁-C₄-alkyl, in particular 2-methoxyethyl, C₁-C₄-alkylthio-C₁-C₄-alkyl, in particular 2-methylthioethyl or C₂-C₄-alkinyl, in particular prop-2-yn-1-yl (propargyl). Most preferred are compounds I wherein R² is selected from methyl, ethyl, 1-methylethyl and prop-2-yn-1-yl.

For the purpose of the present invention, preference is also given to 2-cyanobenzenesulfonamide compounds of the general formula I, wherein R¹ is C₁-C₄-haloalkoxy, in particular C₁-haloalkoxy, especially trifluoromethoxy, difluoromethoxy or chlorodifluoromethoxy. In these compounds R² has the meanings given above, preferably hydrogen or a linear, cyclic or branched-chain hydrocarbon radical having from 1 to 4 carbon atoms e.g. C₁-C₄-alkyl, in particular methyl, ethyl, n-propyl, 1-methylethyl, cyclopropyl, C₁-C₄-alkoxy-C₁-C₄-alkyl, in particular 2-methoxyethyl, C₁-C₄-alkylthio-C₁-C₄-alkyl, in particular 2-methylthioethyl or C₂-C₄-alkinyl, in particular prop-2-yn-1-yl (propargyl). Most preferred are compounds I wherein R² is selected from methyl, ethyl, 1-methylethyl and prop-2-yn-1-yl.

In a preferred embodiment of the present invention the variables R¹ and R² of the 2-cyanobenzene-sulfonamide compounds of the general formula I have the meanings mentioned above and in particular the meanings given as being preferred and at least one of the radicals R³, R⁴ or R⁵ is different from hydrogen. Preferably one or two of the radicals R³, R⁴ and R⁵ represent hydrogen. Amongst these compounds preference is given to those compounds wherein R³ is different from hydrogen and preferably represents halogen, especially chlorine or fluorine, and the other radicals R⁴ and R⁵ are hydrogen.

In another preferred embodiment of the present invention the variables R¹ and R² of the 2-cyanobenzenesulfonamide compounds of the general formula I have the mea nings mentioned above and in particular the meanings given as being preferred and each of the radicals R³, R⁴ and R⁵ represent hydrogen.

In another preferred embodiment of the present invention the variables R² has the meaning mentioned above and in particular the meanings given as being preferred, R¹ represents difluormethoxy and each of the radicals R³, R⁴ and R⁵ represent hydrogen.

Examples of preferred compounds of the formula I for the purpose of the present invention comprise those compounds which are given in the following tables A1 to A16, wherein R³, R⁴, R⁵ are as defined in the tables and wherein R¹ and R² are given in the rows of table A:
Table A1: Compounds of the formula I, wherein each of R³, R⁴ and R⁵ are hydrogen and R¹ and R² are as defined in one row of table A
Table A2: Compounds of the formula I, wherein R³ is chlorine R⁴ and R⁵ are hydrogen and R¹ and R² are as defined in one row of table A
Table A3: Compounds of the formula I, wherein R³ is fluorine R⁴ and R⁵ are hydrogen and R¹ and R² are as defined in one row of table A
Table A4: Compounds of the formula I, wherein R³ is bromine R⁴ and R⁵ are hydrogen and R¹ and R² are as defined in one row of table A
Table A5: Compounds of the formula I, wherein R³ is iodine, R⁴ and R⁵ are hydrogen and R¹ and R² are as defined in one row of table A
Table A6: Compounds of the formula I, wherein R³ is CH₃, R⁴ and R⁵ are hydrogen and R¹ and R² are as defined in one row of table A
Table A7: Compounds of the formula I, wherein R⁴ is chlorine R³ and R⁵ are hydrogen and R¹ and R² are as defined in one row of table A
Table A8: Compounds of the formula I, wherein R⁴ is fluorine R³ and R⁵ are hydrogen and R¹ and R² are as defined in one row of table A
Table A9: Compounds of the formula I, wherein R⁴ is bromine R³ and R⁵ are hydrogen and R¹ and R² are as defined in one row of table A
Table A10: Compounds of the formula I, wherein R⁴ is iodine, R³ and R⁵ are hydrogen and R¹ and R² are as defined in one row of table A
Table A11: Compounds of the formula I, wherein R⁴ is CH₃, R³ and R⁵ are hydrogen and R¹ and R² are as defined in one row of table A
Table A12: Compounds of the formula I, wherein R⁵ is chlorine R³ and R⁴ are hydrogen and R¹ and R² are as defined in one row of table A
Table A13: Compounds of the formula I, wherein R⁵ is fluorine R³ and R⁴ are hydrogen and R¹ and R² are as defined in one row of table A
Table A14: Compounds of the formula I, wherein R⁵ is bromine R³ and R⁴ are hydrogen and R¹ and R² are as defined in one row of table A
Table A15: Compounds of the formula I, wherein R⁵ is iodine, R³ and R⁴ are hydrogen and R¹ and R² are as defined in one row of table A
Table A16: Compounds of the formula I, wherein R⁵ is CH₃, R³ and R⁴ are hydrogen and R¹ and R² are as defined in one row of table A

**Table A:**

| | R¹ | R² |
|---|---|---|
| 1. | CH₃ | H |
| 2. | CH₃ | CH₃ |
| 3. | CH₃ | CH₃CH₂- |
| 4. | CH₃ | (CH₃)₂CH- |
| 5. | CH₃ | CH₃CH₂CH₂- |
| 6. | CH₃ | n-C₄H₉ |
| 7. | CH₃ | (CH₃)₃C- |
| 8. | CH₃ | (CH₃)₂CH-CH₂- |
| 9. | CH₃ | n-C₅H₁₁ |
| 10. | CH₃ | (CH₃)₂CH-CH₂-CH₂- |
| 11. | CH₃ | (C₂H₅)₂-CH- |
| 12. | CH₃ | (CH₃)₃C-CH₂- |
| 13. | CH₃ | (CH₃)₃C-CH₂-CH₂- |
| 14. | CH₃ | C₂H₅CH(CH₃)-CH₂- |
| 15. | CH₃ | CH₃-CH₂-C(CH₃)₂- |
| 16. | CH₃ | (CH₃)₂CH-CH(CH₃)- |
| 17. | CH₃ | (CH₃)₃C-CH(CH₃)- |
| 18. | CH₃ | (CH₃)₂CH-CH₂-CH(CH₃)- |
| 19. | CH₃ | CH₃-CH₂-C(CH₃)(C₂H₅)- |
| 20. | CH₃ | CH₃-CH₂-CH₂-C(CH₃)₂- |
| 21. | CH₃ | C₂H₅-CH₂-CH(CH₃)-CH₂- |
| 22. | CH₃ | cyclopropyl |
| 23. | CH₃ | cyclopropyl-CH₂- |
| 24. | CH₃ | cyclopropyl-CH(CH₃)- |
| 25. | CH₃ | cyclobutyl |
| 26. | CH₃ | cyclopentyl |
| 27. | CH3 | cyclohexyl |
| 28. | CH₃ | HC≡C-CH₂- |
| 29. | CH₃ | HC≡C-CH(CH₃)- |
| 30. | CH₃ | HC≡C-C(CH₃)₂- |
| 31. | CH₃ | HC≡C-C(CH₃)(C₂H₅)- |
| 32. | CH₃ | HC≡C-C(CH₃)(C₃H₇)- |
| 33. | CH₃ | CH₂≡CH-CH₂- |
| 34. | CH₃ | H₂C≡CH-CH(CH₃)- |
| 35. | CH₃ | H₂C≡CH-C(CH₃)₂- |
| 36. | CH₃ | H₂C≡CH-C(C₂H₅)(CH₃)- |
| 37. | CH₃ | C₆H₅-CH₂- |
| 38. | CH₃ | 4-(CH₃)₃C-C₆H₄-CH₂- |
| 39. | CH₃ | C₆H₅-CH₂- |
| 40. | CH₃ | 4-(CH₃)₃C-C₆H₄CH₂- |
| 41. | CH₃ | 4-CI-C₆H₄-CH₂- |
| 42. | CH₃ | 3-(CH₃O)-C₆H₄-CH₂- |
| 43. | CH₃ | 4-(CH₃O)-C₆H₄-CH₂- |
| 44. | CH₃ | 2-(CH₃O)-C₆H₄-CH₂- |
| 45. | CH₃ | 3-CI-C₆H₄-CH₂- |
| 46. | CH₃ | 2-CI-C₆H₄-CH₂- |
| 47. | CH₃ | 4-(F₃C)-C₆H₄-CH₂- |
| 48. | CH₃ | NC-CH₂- |
| 49. | CH₃ | NC-CH₂-CH₂- |
| 50. | CH₃ | NC-CH₂-CH(CH₃)- |
| 51. | CH₃ | NC-CH₂-C(CH₃)₂- |
| 52. | CH₃ | NC-CH₂-CH₂-CH₂- |
| 53. | CH₃ | FH₂C-CH₂- |
| 54. | CH₃ | CIH₂C-CH₂- |
| 55. | CH₃ | BrH₂C-CH₂- |
| 56. | CH₃ | FH₂C-CH(CH₃)- |
| 57. | CH₃ | CIH₂C-CH(CH₃)- |
| 58. | CH₃ | BrH₂C-CH(CH₃)- |
| 59. | CH₃ | F₂HC-CH₂- |
| 60. | CH₃ | F₃C-CH₂- |
| 61. | CH₃ | FH₂C-CH₂-CH₂- |
| 62. | CH₃ | CIH₂C-CH₂-CH₂- |
| 63. | CH₃ | BrH₂C-CH₂-CH₂- |
| 64. | CH₃ | F₂HC-CH₂-CH₂- |
| 65. | CH₃ | F₃C-CH₂-CH₂- |
| 66. | CH₃ | CH₃-O-CH₂-CH₂- |
| 67. | CH₃ | CH₃-S-CH₂-CH₂- |
| 68. | CH₃ | CH₃-SO₂-CH₂-CH₂- |
| 69. | CH₃ | C₂H₅-O-CH₂-CH₂- |
| 70. | CH₃ | (CH₃)₂CH-O-CH₂-CH₂- |
| 71. | CH₃ | C₂H₅-S-CH₂-CH₂- |
| 72. | CH₃ | C₂H₅-SO₂-CH₂-CH₂- |
| 73. | CH₃ | (CH₃)₂N-CH₂-CH₂- |
| 74. | CH₃ | (C₂H₅)₂N-CH₂-CH₂- |
| 75. | CH₃ | [(CH₃)₂CH]₂N-CH₂-CH₂- |
| 76. | CH₃ | CH₃-O-CH₂-CH(CH₃)- |
| 77. | CH₃ | CH₃-S-CH₂-CH(CH₃)- |
| 78. | CH₃ | CH₃-SO₂-CH₂-CH(CH₃)- |
| 79. | CH₃ | C₂H₅-O-CH₂-CH(CH₃)- |
| 80. | CH₃ | C₂H₅-S-CH₂-CH(CH₃)- |
| 81. | CH₃ | C₂H₅-SO₂-CH₂-CH(CH₃)- |
| 82. | CH₃ | (CH₃)₂N-CH₂-CH(CH₃)- |
| 83. | CH₃ | (C₂H₅)₂N-CH₂-CH₂(CH₃)- |
| 84. | CH₃ | [(CH₃)₂CH)₂N-CH₂-CH(CH₃)- |
| 85. | CH₃ | CH₃-O-CH(CH₃)-CH₂- |
| 86. | CH₃ | CH₃-S-CH(CH₃)-CH₂- |
| 87. | CH₃ | CH₃-SO₂-CH(CH₃)-CH₂- |
| 88. | CH₃ | C₂H₅-O-CH(CH₃)-CH₂- |
| 89. | CH₃ | C₂H₅-S-CH(CH₃)-CH₂- |
| 90. | CH₃ | C₂H₅-SO₂-CH(CH₃)-CH₂- |
| 91. | CH₃ | (CH₃)₂N-CH(CH₃)-CH₂- |
| 92. | CH₃ | (C₂H₅)₂N-CH(CH₃)-CH₂- |
| 93. | CH₃ | [(CH₃)₂CH]₂N-CH(CH₃)-CH₂- |
| 94. | CH₃ | CH₃-O-CH₂-CH₂-CH₂- |
| 95. | CH₃ | CH₃-S-CH₂-CH₂-CH₂- |
| 96. | CH₃ | CH₃-SO₂-CH₂-CH₂-CH₂- |
| 97. | CH₃ | C₂H₅-O-CH₂-CH₂-CH₂- |
| 98. | CH₃ | C₂H₅-S-CH₂-CH₂-CH₂- |
| 99. | CH₃ | C₂H₅-SO₂-CH₂-CH₂-CH₂- |
| 100. | CH₃ | (CH₃)₂N-CH₂-CH₂-CH₂- |
| 101. | CH₃ | (C₂H₅)₂N-CH₂-CH₂-CH₂- |
| 102. | CH₃ | CH₃-O-CH₂-C(CH₃)₂- |
| 103. | CH₃ | CH₃-S-CH₂-C(CH₃)₂- |
| 104. | CH₃ | CH₃-SO₂-CH₂-C(CH₃)₂- |
| 105. | CH₃ | C₂H₅-O-CH₂-C(CH₃)₂- |
| 106. | CH₃ | C₂H₅-S-CH₂-C(CH₃)₂- |
| 107. | CH₃ | C₂H₅-SO₂-CH₂-C(CH₃)₂- |
| 108. | CH₃ | (CH₃)₂N-CH₂-C(CH₃)₂- |
| 109. | CH3 | (C₂H₅)₂N-CH₂-C(CH₃)₂- |
| 110. | CH₃ | [(CH₃)₂CH]₂N-CH₂-C(CH₃)₂- |
| 111. | CH₃ | CI-CH₂-C≡C-CH₂- |
| 112. | CH₃ | CH₃-O-C(O)-CH₂ |
| 113. | CH₃ | C₂H₅-O-C(O)-CH₂ |
| 114. | CH₃ | CH₃-O-C(O)-CH(CH₃)- |
| 115. | CH₃ | C₂H₅-O-C(O)-CH(CH₃)- |
| 116. | CH₃ | (CH₃O)₂CH-CH₂- |
| 117. | CH₃ | (C₂H₅O)₂CH-CH₂- |
| 118. | C₂H₅ | H |
| 119. | C₂H₅ | CH₃ |
| 120. | C₂H₅ | CH₃CH₂- |
| 121. | C₂H₅ | (CH₃)₂CH- |
| 122. | C₂H₅ | CH₃CH₂CH₂- |
| 123. | C₂H₅ | n-C₄H₉ |
| 124. | C₂H₅ | (CH₃)₃C- |
| 125. | C₂H₅ | (CH₃)₂CH-CH₂- |
| 126. | C₂H₅ | n-C₅H₁₁ |
| 127. | C₂H₅ | (CH₃)₂CH-CH₂-CH₂- |
| 128. | C₂H₅ | (C₂H₅)₂-CH- |
| 129. | C₂H₅ | (CH₃)₃C-CH₂- |
| 130. | C₂H₅ | (CH₃)₃C-CH₂-CH₂- |
| 131. | C₂H₅ | C₂H₅CH(CH₃)-CH₂- |
| 132. | C₂H₅ | CH₃-CH₂-C(CH₃)₂- |
| 133. | C₂H₅ | (CH₃)₂CH-CH(CH₃)- |
| 134. | C₂H₅ | (CH₃)₃C-CH(CH₃)- |
| 135. | C₂H₅ | (CH₃)₂CH-CH₂-CH(CH₃)- |
| 136. | C₂H₅ | CH₃-CH₂-C(CH₃)(C₂H₅)- |
| 137. | C₂H₅ | CH₃-CH₂-CH₂-C(CH₃)₂- |
| 138. | C₂H₅ | C₂H₅-CH₂-CH(CH₃)-CH₂- |
| 139. | C₂H₅ | cyclopropyl |
| 140. | C₂H₅ | cyclopropyl-CH₂- |
| 141. | C₂H₅ | cyclopropyl-CH(CH₃)- |
| 142. | C₂H₅ | cyclobutyl |
| 143. | C₂H₅ | cyclopentyl |
| 144. | C₂H₅ | cyclohexyl |
| 145. | C₂H₅ | HC≡C-CH₂- |
| 146. | C₂H₅ | HC≡C-CH(CH₃)- |
| 147. | C₂H₅ | HC≡C-C(CH₃)₂- |
| 148. | C₂H₅ | HC≡C-C(CH₃)(C₂H₅)- |
| 149. | C₂H₅ | HC≡C-C(CH₃)(C₃H₇)- |
| 150. | C₂H₅ | CH₂=CH-CH₂- |
| 151. | C₂H₅ | H₂C=CH-CH(CH₃)- |
| 152. | C₂H₅ | H₂C=CH-C(CH₃)₂- |
| 153. | C₂H₅ | H₂C=CH-C(C₂H₅)(CH₃)- |
| 154. | C₂H₅ | C₆H₅-CH₂- |
| 155. | C₂H₅ | 4-(CH₃)₃C-C₆H₄-CH₂- |
| 156. | C₂H₅ | C₆H₅-CH₂- |
| 157. | C₂H₅ | 4-(CH₃)₃C-C₆H₄-CH₂- |
| 158. | C₂H₅ | 4-CI-C₆H₄-CH₂- |
| 159. | C₂H₅ | 3-(CH₃O)-C₆H₄-CH₂- |
| 160. | C₂H₅ | 4-(CH₃O)-C₆H₄-CH₂- |
| 161. | C₂H₅ | 2-(CH₃O)-C₆H₄-CH₂- |
| 162. | C₂H₅ | 3-CI-C₆H₄-CH₂- |
| 163. | C₂H₅ | 2-CI-C₆H₄-CH₂- |
| 164. | C₂H₅ | 4-(F₃C)-C₆H₄-CH₂- |
| 165. | C₂H₅ | NC-CH₂- |
| 166. | C₂H₅ | NC-CH₂-CH₂- |
| 167. | C₂H₅ | NC-CH₂-CH(CH₃)- |
| 168. | C₂H₅ | NC-CH₂-C(CH₃)₂- |
| 169. | C₂H₅ | NC-CH₂-CH₂-CH₂- |
| 170. | C₂H₅ | FH₂C-CH₂- |
| 171. | C₂H₅ | CIH₂C-CH₂- |
| 172. | C₂H₅ | BrH₂C-CH₂- |
| 173. | C₂H₅ | FH₂C-CH(CH₃)- |
| 174. | C₂H₅ | CIH₂C-CH(CH₃)- |
| 175. | C₂H₅ | BrH₂C-CH(CH₃)- |
| 176. | C₂H₅ | F₂HC-CH₂- |
| 177. | C₂H₅ | F₃C-CH₂- |
| 178. | C₂H₅ | FH₂C-CH₂-CH₂- |
| 179. | C₂H₅ | CIH₂C-CH₂-CH₂- |
| 180. | C₂H₅ | BrH₂C-CH₂-CH₂- |
| 181. | C₂H₅ | F₂HC-CH₂-CH₂- |
| 182. | C₂H₅ | F₃C-CH₂-CH₂- |
| 183. | C₂H₅ | CH₃-O-CH₂-CH₂- |
| 184. | C₂H₅ | CH₃-S-CH₂-CH₂- |
| 185. | C₂H₅ | CH₃-SO₂-CH₂-CH₂- |
| 186. | C₂H₅ | C₂H₅-O-CH₂-CH₂- |
| 187. | C₂H₅ | (CH₃)₂CH-O-CH₂-CH₂- |
| 188. | C₂H₅ | C₂H₅-S-CH₂-CH₂- |
| 189. | C₂H₅ | C₂H₅-SO₂-CH₂-CH₂- |
| 190. | C₂H₅ | (CH₃)₂N-CH₂-CH₂- |
| 191. | C₂H₅ | (C₂H₅)₂N-CH₂-CH₂- |
| 192. | C₂H₅ | [(CH₃)₂CH]₂N-CH₂-CH₂- |
| 193. | C₂H₅ | CH₃-O-CH₂-CH(CH₃)- |
| 194. | C₂H₅ | CH₃-S-CH₂-CH(CH₃)- |
| 195. | C₂H₅ | CH₃-SO₂-CH₂-CH(CH₃)- |
| 196. | C₂H₅ | C₂H₅-O-CH₂-CH(CH₃)- |
| 197. | C₂H₅ | C₂H₅-S-CH₂-CH(CH₃)- |
| 198. | C₂H₅ | C₂H₅-SO₂-CH₂-CH(CH₃)- |
| 199. | C₂H₅ | (CH₃)₂N-CH₂-CH(CH₃)- |
| 200. | C₂H₅ | (C₂H₅)₂N-CH₂-CH(CH₃)- |
| 201. | C₂H₅ | [(CH₃)₂CH]₂N-CH₂-CH(CH₃)- |
| 202. | C₂H₅ | CH₃-O-CH(CH₃)-CH₂- |
| 203. | C₂H₅ | CH₃-S-CH(CH₃)-CH₂- |
| 204. | C₂H₅ | CH₃-SO₂-CH(CH₃)-CH₂- |
| 205. | C₂H₅ | C₂H₅-O-CH(CH₃)-CH₂- |
| 206. | C₂H₅ | C₂H₆-S-CH(CH₃)-CH₂- |
| 207. | C₂H₅ | C₂H₅-SO₂-CH(CH₃)-CH₂- |
| 208. | C₂H₅ | (CH₃)₂N-CH(CH₃)-CH₂- |
| 209. | C₂H₅ | (C₂H₅)₂N-CH(CH₃)-CH₂- |
| 210. | C₂H₅ | [(CH₃)₂CH]₂N-CH(CH₃)-CH₂- |
| 211. | C₂H₅ | CH₃-O-CH₂-CH₂-CH₂- |
| 212. | C₂H₅ | CH₃-S-CH₂-CH₂-CH₂- |
| 213. | C₂H₅ | CH₃-SO₂-CH₂-CH₂-CH₂- |
| 214. | C₂H₅ | C₂H₅-O-CH₂-CH₂-CH₂- |
| 215. | C₂H₅ | C₂H₅-S-CH₂-CH₂-CH₂- |
| 216. | C₂H₅ | C₂H₅-SO₂-CH₂-CH₂-CH₂- |
| 217. | C₂H₅ | (CH₃)₂N-CH₂-CH₂-CH₂- |
| 218. | C₂H₅ | (C₂H₅)₂N-CH₂-CH₂-CH₂- |
| 219. | C₂H₅ | CH₃-O-CH₂-C(CH₃)₂- |
| 220. | C₂H₅ | CH₃-S-CH₂-C(CH₃)₂- |
| 221. | C₂H₅ | CH₃-SO₂-CH₂-C(CH₃)₂- |
| 222. | C₂H₅ | C₂H₅-O-CH₂-C(CH₃)₂- |
| 223. | C₂H₅ | C₂H₅-S-CH₂-C(CH₃)₂- |
| 224. | C₂H₅ | C₂H₅-SO₂-CH₂-C(CH₃)₂- |
| 225. | C₂H₅ | (CH₃)₂N-CH₂-C(CH₃)₂- |
| 226. | C₂H₅ | (C₂H₅)₂N-CH₂-C(CH₃)₂- |
| 227. | C₂H₅ | [(CH₃)₂CH]₂N-CH₂-C(CH₃)₂- |
| 228. | C₂H₅ | CI-CH₂-C≡C-CH₂- |
| 229. | C₂H₅ | CH₃-O-C(O)-CH₂ |
| 230. | C₂H₅ | C₂H₅-O-C(O)-CH₂ |
| 231. | C₂H₅ | CH₃-O-C(O)-CH(CH₃)- |
| 232. | C₂H₅ | C₂H₅-O-C(O)-CH(CH₃)- |
| 233. | C₂H₅ | (CH₃O)₂CH-CH₂- |
| 234. | C₂H₅ | (C₂H₅O)₂CH-CH₂- |
| 235. | OCH₃ | H |
| 236. | OCH₃ | CH₃ |
| 237. | OCH₃ | CH₃CH₂- |
| 238. | OCH₃ | (CH₃)₂CH- |
| 239. | OCH₃ | CH₃CH₂CH₂- |
| 240. | OCH₃ | n-C₄H₉ |
| 241. | OCH₃ | (CH₃)₃C- |
| 242. | OCH₃ | (CH₃)₂CH-CH₂- |
| 243. | OCH₃ | n-C₅H₁₁ |
| 244. | OCH₃ | (CH₃)₂CH-CH₂-CH₂- |
| 245. | OCH₃ | (C₂H₅)₂-CH- |
| 246. | OCH₃ | (CH₃)₃C-CH₂- |
| 247. | OCH₃ | (CH₃)₃C-CH₂-CH₂- |
| 248. | OCH₃ | C₂H₅CH(CH₃)-CH₂- |
| 249. | OCH₃ | CH₃-CH₂-C(CH₃)₂- |
| 250. | OCH₃ | (CH₃)₂CH-CH(CH₃)- |
| 251. | OCH₃ | (CH₃)₃C-CH(CH₃)- |
| 252. | OCH₃ | (CH₃)₂CH-CH₂-CH(CH₃)- |
| 253. | OCH₃ | CH₃-CH₂-C(CH₃)(C₂H₅)- |
| 254. | OCH₃ | CH₃-CH₂-CH₂-C(CH₃)₂- |
| 255. | OCH₃ | C₂H₅-CH₂-CH(CH₃)-CH₂- |
| 256. | OCH₃ | cyclopropyl |
| 257. | OCH₃ | cyclopropyl-CH₂- |
| 258. | OCH₃ | cyclopropyl-CH(CH₃)- |
| 259. | OCH₃ | cyclobutyl |
| 260. | OCH₃ | cyclopentyl |
| 261. | OCH₃ | cyclohexyl |
| 262. | OCH₃ | HC≡C-CH₂- |
| 263. | OCH₃ | HC≡C-CH(CH₃)- |
| 264. | OCH₃ | HC≡C-C(CH₃)₂- |
| 265. | OCH₃ | HC≡C-C(CH₃)(C₂H₅)- |
| 266. | OCH₃ | HC≡C-C(CH₃)(C₃H₇)- |
| 267. | OCH₃ | CH₂=CH-CH₂- |
| 268. | OCH₃ | H₂C=CH-CH(CH₃)- |
| 269. | OCH₃ | H₂C=CH-C(CH₃)₂- |
| 270. | OCH₃ | H₂C=CH-C(C₂H₅)(CH₃)- |
| 271. | OCH₃ | C₆H₅-CH₂- |
| 272. | OCH₃ | 4-(CH₃)₃C-C₆H₄-CH₂- |
| 273. | OCH₃ | C₆H₅-CH₂- |
| 274. | OCH₃ | 4-(CH₃)₃C-C₆H₄-CH₂- |
| 275. | OCH₃ | 4-CI-C₆H₄-CH₂- |
| 276. | OCH₃ | 3-(CH₃O)-C₆H₄-CH₂- |
| 277. | OCH₃ | 4-(CH₃O)-C₆H₄-CH₂- |
| 278. | OCH₃ | 2-(CH₃O)-C₆H₄-CH₂- |
| 279. | OCH₃ | 3-CI-C₆H₄-CH₂- |
| 280. | OCH₃ | 2-CI-C₆H₄-CH₂- |
| 281. | OCH₃ | 4-(F₃C)-C₆H₄-CH₂- |
| 282. | OCH₃ | NC-CH₂- |
| 283. | OCH₃ | NC-CH₂-CH₂- |
| 284. | OCH₃ | NC-CH₂-CH(CH₃)- |
| 285. | OCH₃ | NC-CH₂-C(CH₃)₂- |
| 286. | OCH₃ | NC-CH₂-CH₂-CH₂- |
| 287. | OCH₃ | FH₂C-CH₂- |
| 288. | OCH₃ | CIH₂C-CH₂- |
| 289. | OCH₃ | BrH₂C-CH₂- |
| 290. | OCH₃ | FH₂C-CH(CH₃)- |
| 291. | OCH₃ | CIH₂C-CH(CH₃)- |
| 292. | OCH₃ | BrH₂C-CH(CH₃)- |
| 293. | OCH₃ | F₂HC-CH₂- |
| 294. | OCH₃ | F₃C-CH₂- |
| 295. | OCH₃ | FH₂C-CH₂-CH₂- |
| 296. | OCH₃ | CIH₂C-CH₂-CH₂- |
| 297. | OCH₃ | BrH₂C-CH₂-CH₂- |
| 298. | OCH₃ | F₂HC-CH₂-CH₂- |
| 299. | OCH₃ | F₃C-CH₂-CH₂- |
| 300. | OCH₃ | CH₃-O-CH₂-CH₂- |
| 301. | OCH₃ | CH₃-S-CH₂-CH₂- |
| 302. | OCH₃ | CH₃-SO₂-CH₂-CH₂- |
| 303. | OCH₃ | C₂H₅-O-CH₂-CH₂- |
| 304. | OCH₃ | (CH₃)₂CH-O-CH₂-CH₂- |
| 305. | OCH₃ | C₂H₅-S-CH₂-CH₂- |
| 306. | OCH₃ | C₂H₅-SO₂-CH₂-CH₂- |
| 307. | OCH₃ | (CH₃)₂N-CH₂-CH₂- |
| 308. | OCH₃ | (C₂H₅)₂N-CH₂-CH₂- |
| 309. | OCH₃ | [(CH₃)₂CH]₂N-CH₂-CH₂- |
| 310. | OCH₃ | CH₃-O-CH₂-CH(CH₃)- |
| 311. | OCH₃ | CH₃-S-CH₂-CH(CH₃)- |
| 312. | OCH₃ | CH₃-SO₂-CH₂-CH(CH₃)- |
| 313. | OCH₃ | C₂H₅-O-CH₂-CH(CH₃)- |
| 314. | OCH₃ | C₂H₅-S-CH₂-CH(CH₃)- |
| 315. | OCH₃ | C₂H₅-SO₂-CH₂-CH(CH₃)- |
| 316. | OCH₃ | (CH₃)₂N-CH₂-CH(CH₃)- |
| 317. | OCH₃ | (C₂H₅)₂N-CH₂-CH(CH₃)- |
| 318. | OCH₃ | [(CH₃)₂CH]₂N-CH₂-CH(CH₃)- |
| 319. | OCH₃ | CH₃-O-CH(CH₃)-CH₂- |
| 320. | OCH₃ | CH₃-S-CH(CH₃)-CH₂- |
| 321. | OCH₃ | CH₃-SO₂-CH(CH₃)-CH₂- |
| 322. | OCH₃ | C₂H₅-O-CH(CH₃)-CH₂- |
| 323. | OCH₃ | C₂H₅-S-CH(CH₃)-CH₂- |
| 324. | OCH₃ | C₂H₅-SO₂-CH(CH₃)-CH₂- |
| 325. | OCH₃ | (CH₃)₂N-CH(CH₃)-CH₂- |
| 326. | OCH₃ | (C₂H₅)₂N-CH(CH₃)-CH₂- |
| 327. | OCH₃ | [(CH₃)₂CH]₂N-CH(CH₃)-CH₂- |
| 328. | OCH₃ | CH₃-O-CH₂-CH₂-CH₂- |
| 329. | OCH₃ | CH₃-S-CH₂-CH₂-CH₂- |
| 330. | OCH₃ | CH₃-SO₂-CH₂-CH₂-CH₂- |
| 331. | OCH₃ | C₂H₅-O-CH₂-CH₂-CH₂- |
| 332. | OCH₃ | C₂H₅-S-CH₂-CH₂-CH₂- |
| 333. | OCH₃ | C₂H₅-SO₂-CH₂-CH₂-CH₂- |
| 334. | OCH₃ | (CH₃)₂N-CH₂-CH₂-CH₂- |
| 335. | OCH₃ | (C₂H₅)₂N-CH₂-CH₂-CH₂- |
| 336. | OCH₃ | CH₃-O-CH₂-C(CH₃)₂- |
| 337. | OCH₃ | CH₃-S-CH₂-C(CH₃)₂- |
| 338. | OCH₃ | CH₃-SO₂-CH₂-C(CH₃)₂- |
| 339. | OCH₃ | C₂H₅-O-CH₂-C(CH₃)₂- |
| 340. | OCH₃ | C₂H₅-S-CH₂-C(CH₃)₂- |
| 341. | OCH₃ | C₂H₅-SO₂-CH₂-C(CH₃)₂- |
| 342. | OCH₃ | (CH₃)₂N-CH₂-C(CH₃)₂- |
| 343. | OCH₃ | (C₂H₅)₂N-CH₂-C(CH₃)₂- |
| 344. | OCH₃ | [(CH₃)₂CH]₂N-CH₂-C(CH₃)₂- |
| 345. | OCH₃ | CI-CH₂-C≡C-CH₂- |
| 346. | OCH₃ | CH₃-O-C(O)-CH₂ |
| 347. | OCH₃ | C₂H₅-O-C(O)-CH₂ |
| 348. | OCH₃ | CH₃-O-C(O)-CH(CH₃)- |
| 349. | OCH₃ | C₂H₅-O-C(O)-CH(CH₃)- |
| 350. | OCH₃ | (CH₃O)₂CH-CH₂- |
| 351. | OCH₃ | (C₂H₅O)₂CH-CH₂- |
| 352. | OC₂H₅ | H |
| 353. | OC₂H₅ | CH₃ |
| 354. | OC₂H₅ | CH₃CH₂- |
| 355. | OC₂H₅ | (CH₃)₂CH- |
| 356. | OC₂H₅ | CH₃CH₂CH₂- |
| 357. | OC₂H₅ | n-C₄H₉ |
| 358. | OC₂H₅ | (CH₃)₃C- |
| 359. | OC₂H₅ | (CH₃)₂CH-CH₂- |
| 360. | OC₂H₅ | n-C₅H₁₁ |
| 361. | OC₂H₅ | (CH₃)₂CH-CH₂-CH₂- |
| 362. | OC₂H₅ | (C₂H₅)₂-CH- |
| 363. | OC₂H₅ | (CH₃)₃C-CH₂- |
| 364. | OC₂H₅ | (CH₃)₃C-CH₂-CH₂- |
| 365. | OC₂H₅ | C₂H₅CH(CH₃)-CH₂- |
| 366. | OC₂H₅ | CH₃-CH₂-C(CH₃)₂- |
| 367. | OC₂H₅ | (CH₃)₂CH-CH(CH₃)- |
| 368. | OC₂H₅ | (CH₃)₃C-CH(CH₃)- |
| 369. | OC₂H₅ | (CH₃)₂CH-CH₂-CH(CH₃)- |
| 370. | OC₂H₅ | CH₃-CH₂-C(CH₃)(C₂H₅)- |
| 371. | OC₂H₅ | CH₃-CH₂-CH₂-C(CH₃)₂- |
| 372. | OC₂H₅ | C₂H₅-CH₂-CH(CH₃)-CH₂- |
| 373. | OC₂H₅ | cyclopropyl |
| 374. | OC₂H₅ | cyclopropyl-CH₂- |
| 375. | OC₂H₅ | cyclopropyl-CH(CH₃)- |
| 376. | OC₂H₅ | cyclobutyl |
| 377. | OC₂H₅ | cyclopentyl |
| 378. | OC₂H₅ | cyclohexyl |
| 379. | OC₂H₅ | HC≡C-CH₂- |
| 380. | OC₂H₅ | HC≡C-CH(CH₃)- |
| 381. | OC₂H₅ | HC≡C-C(CH₃)₂- |
| 382. | OC₂H₅ | HC≡C-C(CH₃)(C₂H₅)- |
| 383. | OC₂H₅ | HC≡C-C(CH₃)(C₃H₇)- |
| 384. | OC₂H₅ | CH₂=CH-CH₂- |
| 385. | OC₂H₅ | H₂C=CH-CH(CH₃)- |
| 386. | OC₂H₅ | H₂C=CH-C(CH₃)₂- |
| 387. | OC₂H₅ | H₂C=CH-C(C₂H₅)(CH₃)- |
| 388. | OC₂H₅ | C₆H₅-CH₂- |
| 389. | OC₂H₅ | 4-(CH₃)₃C-C₆H₄-CH₂- |
| 390. | OC₂H₅ | C₆H₅-CH₂- |
| 391. | OC₂H₅ | 4-(CH₃)₃C-C₆H₄-CH₂- |
| 392. | OC₂H₅ | 4-CI-C₆H₄-CH₂- |
| 393. | OC₂H₅ | 3-(CH₃O)-C₆H₄-CH₂- |
| 394. | OC₂H₅ | 4-(CH₃O)-C₆H₄-CH₂- |
| 395. | OC₂H₅ | 2-(CH₃O)-C₆H₄-CH₂- |
| 396. | OC₂H₅ | 3-CI-C₆H₄-CH₂- |
| 397. | OC₂H₅ | 2-CI-C₆H₄-CH₂- |
| 398. | OC₂H₅ | 4-(F₃C)-C₆H₄-CH₂- |
| 399. | OC₂H₅ | NC-CH₂- |
| 400. | OC₂H₅ | NC-CH₂-CH₂- |
| 401. | OC₂H₅ | NC-CH₂-CH(CH₃)- |
| 402. | OC₂H₅ | NC-CH₂-C(CH₃)₂- |
| 403. | OC₂H₅ | NC-CH₂-CH₂-CH₂- |
| 404. | OC₂H₅ | FH₂C-CH₂- |
| 405. | OC₂H₅ | CIH₂C-CH₂- |
| 406. | OC₂H₅ | BrH₂C-CH₂- |
| 407. | OC₂H₅ | FH₂C-CH(CH₃)- |
| 408. | OC₂H₅ | CIH₂C-CH(CH₃)- |
| 409. | OC₂H₅ | BrH₂C-CH(CH₃)- |
| 410. | OC₂H₅ | F₂HC-CH₂- |
| 411. | OC₂H₅ | F₃C-CH₂- |
| 412. | OC₂H₅ | FH₂C-CH₂-CH₂- |
| 413. | OC₂H₅ | CIH₂C-CH₂-CH₂- |
| 414. | OC₂H₅ | BrH₂C-CH₂-CH₂- |
| 415. | OC₂H₅ | F₂HC-CH₂-CH₂- |
| 416. | OC₂H₅ | F₃C-CH₂-CH₂- |
| 417. | OC₂H₅ | CH₃-O-CH₂-CH₂- |
| 418. | OC₂H₅ | CH₃-S-CH₂-CH₂- |
| 419. | OC₂H₅ | CH₃-SO₂-CH₂-CH₂- |
| 420. | OC₂H₅ | C₂H₅-O-CH₂-CH₂- |
| 421. | OC₂H₅ | (CH₃)₂CH-O-CH₂-CH₂- |
| 422. | OC₂H₅ | C₂H₅-S-CH₂-CH₂- |
| 423. | OC₂H₅ | C₂H₅-SO₂-CH₂-CH₂- |
| 424. | OC₂H₅ | (CH₃)₂N-CH₂-CH₂- |
| 425. | OC₂H₅ | (C₂H₅)₂N-CH₂-CH₂- |
| 426. | OC₂H₅ | [(CH₃)₂CH]₂N-CH₂-CH₂- |
| 427. | OC₂H₅ | CH₃-O-CH₂-CH(CH₃)- |
| 428. | OC₂H₅ | CH₃-S-CH₂-CH(CH₃)- |
| 429. | OC₂H₅ | CH₃-SO₂-CH₂-CH(CH₃)- |
| 430. | OC₂H₅ | C₂H₅-O-CH₂-CH(CH₃)- |
| 431. | OC₂H₅ | C₂H₅-S-CH₂-CH(CH₃)- |
| 432. | OC₂H₅ | C₂H₅-SO₂-CH₂-CH(CH₃)- |
| 433. | OC₂H₅ | (CH₃)₂N-CH₂-CH(CH₃)- |
| 434. | OC₂H₅ | (C₂H₅)₂N-CH₂-CH(CH₃)- |
| 435. | OC₂H₅ | [(CH₃)₂CH]₂N-CH₂-CH(CH₃)- |
| 436. | OC₂H₅ | CH₃-O-CH(CH₃)-CH₂- |
| 437. | OC₂H₅ | CH₃-S-CH(CH₃)-CH₂- |
| 438. | OC₂H₅ | CH₃-SO₂-CH(CH₃)-CH₂- |
| 439. | OC₂H₅ | C₂H₅-O-CH(CH₃)-CH₂- |
| 440. | OC₂H₅ | C₂H₅-S-CH(CH₃)-CH₂- |
| 441. | OC₂H₅ | C₂H₅-SO₂-CH(CH₃)-CH₂- |
| 442. | OC₂H₅ | (CH₃)₂N-CH(CH₃)-CH₂- |
| 443. | OC₂H₅ | (C₂H₅)₂N-CH(CH₃)-CH₂- |
| 444. | OC₂H₅ | [(CH₃)₂CH]₂N-CH(CH₃)-CH₂- |
| 445. | OC₂H₅ | CH₃-O-CH₂-CH₂-CH₂- |
| 446. | OC₂H₅ | CH₃-S-CH₂-CH₂-CH₂- |
| 447. | OC₂H₅ | CH₃-SO₂-CH₂-CH₂-CH₂- |
| 448. | OC₂H₅ | C₂H₅-O-CH₂-CH₂-CH₂- |
| 449. | OC₂H₅ | C₂H₅-S-CH₂-CH₂-CH₂- |
| 450. | OC₂H₅ | C₂H₅-SO₂-CH₂-CH₂-CH₂- |
| 451. | OC₂H₅ | (CH₃)₂N-CH₂-CH₂-CH₂- |
| 452. | OC₂H₅ | (C₂H₅)₂N-CH₂-CH₂-CH₂- |
| 453. | OC₂H₅ | CH₃-O-CH₂-C(CH₃)₂- |
| 454. | OC₂H₅ | CH₃-S-CH₂-C(CH₃)₂- |
| 455. | OC₂H₅ | CH₃-SO₂-CH₂-C(CH₃)₂- |
| 456. | OC₂H₅ | C₂H₅-O-CH₂-C(CH₃)₂- |
| 457. | OC₂H₅ | C₂H₅-S-CH₂-C(CH₃)₂- |
| 458. | OC₂H₅ | C₂H₅-SO₂-CH₂-C(CH₃)₂- |
| 459. | OC₂H₅ | (CH₃)₂N-CH₂-C(CH₃)₂- |
| 460. | OC₂H₅ | (C₂H₅)₂N-CH₂-C(CH₃)₂- |
| 461. | OC₂H₅ | [(CH₃)₂CH]₂N-CH₂-C(CH₃)₂- |
| 462. | OC₂H₅ | CI-CH₂-C≡C-CH₂- |
| 463. | OC₂H₅ | CH₃-O-C(O)-CH₂ |
| 464. | OC₂H₅ | C₂H₅-O-C(O)-CH₂ |
| 465. | OC₂H₅ | CH₃-O-C(O)-CH(CH₃)- |
| 466. | OC₂H₅ | C₂H₅-O-C(O)-CH(CH₃)- |
| 467. | OC₂H₅ | (CH₃O)₂CH-CH₂- |
| 468. | OC₂H₅ | (C₂H₅O)₂CH-CH₂- |
| 469. | CF₃ | H |
| 470. | CF3 | CH₃ |
| 471. | CF₃ | CH₃CH₂- |
| 472. | CF₃ | (CH₃)₂CH- |
| 473. | CF₃ | CH₃CH₂CH₂- |
| 474. | CF₃ | n-C₄H₉ |
| 475. | CF₃ | (CH₃)₃C- |
| 476. | CF₃ | (CH₃)₂CH-CH₂- |
| 477. | CF₃ | n-C₅H₁₁ |
| 478. | CF₃ | (CH₃)₂CH-CH₂-CH₂- |
| 479. | CF₃ | (C₂H₅)₂-CH- |
| 480. | CF₃ | (CH₃)₃C-CH₂- |
| 481. | CF₃ | (CH₃)₃C-CH₂-CH₂- |
| 482. | CF₃ | C₂H₅CH(CH₃)-CH₂- |
| 483. | CF₃ | CH₃-CH₂-C(CH₃)₂- |
| 484. | CF₃ | (CH₃)₂CH-CH(CH₃)- |
| 485. | CF₃ | (CH₃)₃C-CH(CH₃)- |
| 486. | CF3 | (CH₃)₂CH-CH₂-CH(CH₃)- |
| 487. | CF₃ | CH₃-CH₂-C(CH₃)(C₂H₅)- |
| 488. | CF₃ | CH₃-CH₂-CH₂-C(CH₃)₂- |
| 489. | CF₃ | C₂H₅-CH₂-CH(CH₃)-CH₂- |
| 490. | CF₃ | cyclopropyl |
| 491. | CF₃ | cyclopropyl-CH₂- |
| 492. | CF₃ | cyclopropyl-CH(CH₃)- |
| 493. | CF₃ | cyclobutyl |
| 494. | CF₃ | cyclopentyl |
| 495. | CF₃ | cyclohexyl |
| 496. | CF₃ | HC≡C-CH₂- |
| 497. | CF₃ | HC≡C-CH(CH₃)- |
| 498. | CF₃ | HC≡C-C(CH₃)₂- |
| 499. | CF₃ | HC≡C-C(CH₃)(C₂H₅)- |
| 500. | CF₃ | HC≡C-C(CH₃)(C₃H₇)- |
| 501. | CF₃ | CH₂=CH-CH₂- |
| 502. | CF₃ | H₂C=CH-CH(CH₃)- |
| 503. | CF₃ | H₂C=CH-C(CH₃)₂- |
| 504. | CF₃ | H₂C=CH-C(C₂H₅)(CH₃)- |
| 505. | CF₃ | C₆H₅-CH₂- |
| 506. | CF₃ | 4-(CH₃)₃C-C₆H₄-CH₂- |
| 507. | CF3 | C₆H₅-CH₂- |
| 508. | CF₃ | 4-(CH₃)₃C-C₆H₄-CH₂- |
| 509. | CF₃ | 4-CI-C₆H₄-CH₂- |
| 510. | CF₃ | 3-(CH₃O)-C₆H₄-CH₂- |
| 511. | CF₃ | 4-(CH₃O)-C₆H₄-CH₂- |
| 512. | CF₃ | 2-(CH₃O)-C₆H₄-CH₂- |
| 513. | CF₃ | 3-CI-C₆H₄-CH₂- |
| 514. | CF₃ | 2-CI-C₆H₄-CH₂- |
| 515. | CF₃ | 4-(F₃C)-C₆H₄-CH₂- |
| 516. | CF₃ | NC-CH₂- |
| 517. | CF₃ | NC-CH₂-CH₂- |
| 518. | CF₃ | NC-CH₂-CH(CH₃)- |
| 519. | CF₃ | NC-CH₂-C(CH₃)₂- |
| 520. | CF₃ | NC-CH₂-CH₂-CH₂- |
| 521. | CF₃ | FH₂C-CH₂- |
| 522. | CF₃ | CIH₂C-CH₂- |
| 523. | CF₃ | BrH₂C-CH₂- |
| 524. | CF₃ | FH₂C-CH(CH₃)- |
| 525. | CF₃ | CIH₂C-CH(CH₃)- |
| 526. | CF₃ | BrH₂C-CH(CH₃)- |
| 527. | CF₃ | F₂HC-CH₂- |
| 528. | CF₃ | F₃C-CH₂- |
| 529. | CF₃ | FH₂C-CH₂-CH₂- |
| 530. | CF₃ | CIH₂C-CH₂-CH₂- |
| 531. | CF₃ | BrH₂C-CH₂-CH₂- |
| 532. | CF₃ | F₂HC-CH₂-CH₂- |
| 533. | CF | F₃C-CH₂-CH₂- |
| 534. | CF₃ | CH₃-O-CH₂-CH₂- |
| 535. | CF₃ | CH₃-S-CH₂-CH₂- |
| 536. | CF₃ | CH₃-SO₂-CH₂-CH₂- |
| 537. | CF₃ | C₂H₅-O-CH₂-CH₂- |
| 538. | CF₃ | (CH₃)₂CH-O-CH₂-CH₂- |
| 539. | CF₃ | C₂H₅-S-CH₂-CH₂- |
| 540. | CF₃ | C₂H₅-SO₂-CH₂-CH₂- |
| 541. | CF₃ | (CH₃)₂N-CH₂-CH₂- |
| 542. | CF₃ | (C₂H₅)₂N-CH₂-CH₂- |
| 543. | CF₃ | [(CH₃)₂CH]₂N-CH₂-CH₂- |
| 544. | CF₃ | CH₃-O-CH₂-CH(CH₃)- |
| 545. | CF₃ | CH₃-S-CH₂-CH(CH₃)- |
| 546. | CF₃ | CH₃-SO₂-CH₂-CH(CH₃)- |
| 547. | CF₃ | C₂H₅-O-CH₂-CH(CH₃)- |
| 548. | CF₃ | C₂H₅-S-CH₂-CH(CH₃)- |
| 549. | CF₃ | C₂H₅-SO₂-CH₂-CH(CH₃)- |
| 550. | CF₃ | (CH₃)₂N-CH₂-CH(CH₃)- |
| 551. | CF₃ | (C₂H₅)₂N-CH₂-CH(CH₃)- |
| 552. | CF₃ | [(CH₃)₂CH]₂N-CH₂-CH(CH₃)- |
| 553. | CF₃ | CH₃-O-CH(CH₃)-CH₂- |
| 554. | CF₃ | CH₃-S-CH(CH₃)-CH₂- |
| 555. | CF₃ | CH₃-SO₂-CH(CH₃)-CH₂- |
| 556. | CF₃ | C₂H₅-O-CH(CH₃)-CH₂- |
| 557. | CF₃ | C₂H₅-S-CH(CH₃)-CH₂- |
| 558. | CF₃ | C₂H₅-SO₂-CH(CH₃)-CH₂- |
| 559. | CF₃ | (CH₃)₂N-CH(CH₃)-CH₂- |
| 560. | CF₃ | (C₂H₅)₂N-CH(CH₃)-CH₂- |
| 561. | CF₃ | [(CH₃)₂CH]₂N-CH(CH₃)-CH₂- |
| 562. | CF₃ | CH₃-O-CH₂-CH₂-CH₂- |
| 563. | CF₃ | CH₃-S-CH₂-CH₂-CH₂- |
| 564. | CF₃ | CH₃-SO₂-CH₂-CH₂-CH₂- |
| 565. | CF₃ | C₂H₅-O-CH₂-CH₂-CH₂- |
| 566. | CF₃ | C₂H₅-S-CH₂-CH₂-CH₂- |
| 567. | CF₃ | C₂H₅-SO₂-CH₂-CH₂-CH₂- |
| 568. | CF₃ | (CH₃)₂N-CH₂-CH₂-CH₂- |
| 569. | CF₃ | (C₂H₅)₂N-CH₂-CH₂-CH₂- |
| 570. | CF₃ | CH₃-O-CH₂-C(CH₃)₂- |
| 571. | CF₃ | CH₃-S-CH₂-C(CH₃)₂- |
| 572. | CF₃ | CH₃-SO₂-CH₂-C(CH₃)₂- |
| 573. | CF₃ | C₂H₅-O-CH₂-C(CH₃)₂- |
| 574. | CF₃ | C₂H₅-S-CH₂-C(CH₃)₂- |
| 575. | CF₃ | C₂H₅-SO₂-CH₂-C(CH₃)₂- |
| 576. | CF₃ | (CH₃)₂N-CH₂-C(CH₃)₂- |
| 577. | CF₃ | (C₂H₅)₂N-CH₂-C(CH₃)₂- |
| 578. | CF₃ | [(CH₃)₂CH]₂N-CH₂-C(CH₃)₂- |
| 579. | CF₃ | CI-CH₂-C≡C-CH₂- |
| 580. | CF₃ | CH₃-O-C(O)-CH₂ |
| 581. | CF₃ | C₂H₅-O-C(O)-CH₂ |
| 582. | CF₃ | CH₃-O-C(O)-CH(CH₃)- |
| 583. | CF₃ | C₂H₅-O-C(O)-CH(CH₃)- |
| 584. | CF₃ | (CH₃O)₂CH-CH₂- |
| 585. | CF₃ | (C₂H₅O)₂CH-CH₂- |
| 586. | OCHF₂ | H |
| 587. | OCHF₂ | CH₃ |
| 588. | OCHF₂ | CH₃CH₂- |
| 589. | OCHF₂ | (CH₃)₂CH- |
| 590. | OCHF₂ | CH₃CH₂CH₂- |
| 591. | OCHF₂ | n-C₄H₉ |
| 592. | OCHF₂ | (CH₃)₃C- |
| 593. | OCHF₂ | (CH₃)₂CH-CH₂- |
| 594. | OCHF₂ | n-C₅H₁₁ |
| 595. | OCHF₂ | (CH₃)₂CH-CH₂-CH₂- |
| 596. | OCHF₂ | (C₂H₅)₂-CH- |
| 597. | OCHF₂ | (CH₃)₃C-CH₂- |
| 598. | OCHF₂ | (CH₃)₃C-CH₂-CH₂- |
| 599. | OCHF₂ | C₂H₅CH(CH₃)-CH₂- |
| 600. | OCHF₂ | CH₃-CH₂-C(CH₃)₂- |
| 601. | OCHF₂ | (CH₃)₂CH-CH(CH₃)- |
| 602. | OCHF₂ | (CH₃)₃C-CH(CH₃)- |
| 603. | OCHF₂ | (CH₃)₂CH-CH₂-CH(CH₃)- |
| 604. | OCHF₂ | CH₃-CH₂-C(CH₃)(C₂H₅)- |
| 605. | OCHF₂ | CH₃-CH₂-CH₂-C(CH₃)₂- |
| 606. | OCHF₂ | C₂H₅-CH₂-CH(CH₃)-CH₂- |
| 607. | OCHF₂ | cyclopropyl |
| 608. | OCHF₂ | cyclopropyl-CH₂- |
| 609. | OCHF₂ | cyclopropyl-CH(CH₃)- |
| 610. | OCHF₂ | cyclobutyl |
| 611. | OCHF₂ | cyclopentyl |
| 612. | OCHF₂ | cyclohexyl |
| 613. | OCHF₂ | HC≡C-CH₂- |
| 614. | OCHF₂ | HC≡C-CH(CH₃)- |
| 615. | OCHF₂ | HC≡C-C(CH₃)₂- |
| 616. | OCHF₂ | HC≡C-C(CH₃)(C₂H₅)- |
| 617. | OCHF₂ | HC≡C-C(CH₃)(C₃H₇)- |
| 618. | OCHF₂ | CH₂=CH-CH₂- |
| 619. | OCHF₂ | H₂C=CH-CH(CH₃)- |
| 620. | OCHF₂ | H₂C=CH-C(CH₃)₂- |
| 621. | OCHF₂ | H₂C=CH-C(C₂H₅)(CH₃)- |
| 622. | OCHF₂ | C₆H₅-CH₂- |
| 623. | OCHF₂ | 4-(CH₃)₃C-C₆H₄-CH₂- |
| 624. | OCHF₂ | C₆H₅-CH₂- |
| 625. | OCHF₂ | 4-(CH₃)₃C-C₆H₄-CH₂- |
| 626. | OCHF₂ | 4-CI-C₆H₄-CH₂- |
| 627. | OCHF₂ | 3-(CH₃O)-C₆H₄-CH₂- |
| 628. | OCHF₂ | 4-(CH₃O)-C₆H₄-CH₂- |
| 629. | OCHF₂ | 2-(CH₃O)-C₆H₄-CH₂- |
| 630. | OCHF₂ | 3-CI-C₆H₄-CH₂- |
| 631. | OCHF₂ | 2-CI-C₆H₄-CH₂- |
| 632. | OCHF₂ | 4-(F₃C)-C₆H₄-CH₂- |
| 633. | OCHF₂ | NC-CH₂- |
| 634. | OCHF₂ | NC-CH₂-CH₂- |
| 635. | OCHF₂ | NC-CH₂-CH(CH₃)- |
| 636. | OCHF₂ | NC-CH₂-C(CH₃)₂- |
| 637. | OCHF₂ | NC-CH₂-CH₂-CH₂- |
| 638. | OCHF2 | FH₂C-CH₂- |
| 639. | OCHF₂ | CIH₂C-CH₂- |
| 640. | OCHF₂ | BrH₂C-CH₂- |
| 641. | OCHF₂ | FH₂C-CH(CH₃)- |
| 642. | OCHF₂ | CIH₂C-CH(CH₃)- |
| 643. | OCHF₂ | BrH₂C-CH(CH₃)- |
| 644. | OCHF₂ | F₂HC-CH₂- |
| 645. | OCHF₂ | F₃C-CH₂- |
| 646. | OCHF₂ | FH₂C-CH₂-CH₂- |
| 647. | OCHF₂ | CIH₂C-CH₂-CH₂- |
| 648. | OCHF₂ | BrH₂C-CH₂-CH₂- |
| 649. | OCHF₂ | F₂HC-CH₂-CH₂- |
| 650. | OCHF₂ | F₃C-CH₂-CH₂- |
| 651. | OCHF₂ | CH₃-O-CH₂-CH₂- |
| 652. | OCHF₂ | CH₃-S-CH₂-CH₂- |
| 653. | OCHF₂ | CH₃-SO₂-CH₂-CH₂- |
| 654. | OCHF2 | C₂H₅-O-CH₂-CH₂- |
| 655. | OCHF₂ | (CH₃)₂CH-O-CH₂-CH₂- |
| 656. | OCHF₂ | C₂H₅-S-CH₂-CH₂- |
| 657. | OCHF₂ | C₂H₅-SO₂-CH₂-CH₂- |
| 658. | OCHF₂ | (CH₃)₂N-CH₂-CH₂- |
| 659. | OCHF₂ | (C₂H₅)₂N-CH₂-CH₂- |
| 660. | OCHF₂ | [(CH₃)₂CH]₂N-CH₂-CH₂- |
| 661. | OCHF₂ | CH₃-O-CH₂-CH(CH₃)- |
| 662. | OCHF₂ | CH₃-S-CH₂-CH(CH₃)- |
| 663. | OCHF₂ | CH₃-SO₂-CH₂-CH(CH₃)- |
| 664. | OCHF₂ | C₂H₅-O-CH₂-CH(CH₃)- |
| 665. | OCHF₂ | C₂H₅-S-CH₂-CH(CH₃)- |
| 666. | OCHF₂ | C₂H₅-SO₂-CH₂-CH(CH₃)- |
| 667. | OCHF₂ | (CH₃)₂N-CH₂-CH(CH₃)- |
| 668. | OCHF₂ | (C₂H₅)₂N-CH₂-CH(CH₃)- |
| 669. | OCHF₂ | [(CH₃)₂CH]₂N-CH₂-CH(CH₃)- |
| 670. | OCHF₂ | CH₃-O-CH(CH₃)-CH₂- |
| 671. | OCHF₂ | CH₃-S-CH(CH₃)-CH₂- |
| 672. | OCHF₂ | CH₃-SO₂-CH(CH₃)-CH₂- |
| 673. | OCHF₂ | C₂H₅-O-CH(CH₃)-CH₂- |
| 674. | OCHF₂ | C₂H₅-S-CH(CH₃)-CH₂- |
| 675. | OCHF₂ | C₂H₅-SO₂-CH(CH₃)-CH₂- |
| 676. | OCHF₂ | (CH₃)₂N-CH(CH₃)-CH₂- |
| 677. | OCHF₂ | (C₂H₅)₂N-CH(CH₃)-CH₂- |
| 678. | OCHF₂ | [(CH₃)₂CH]₂N-CH(CH₃)-CH₂- |
| 679. | OCHF₂ | CH₃-O-CH₂-CH₂-CH₂- |
| 680. | OCHF₂ | CH₃-S-CH₂-CH₂-CH₂- |
| 681. | OCHF₂ | CH₃-SO₂-CH₂-CH₂-CH₂- |
| 682. | OCHF₂ | C₂H₅-O-CH₂-CH₂-CH₂- |
| 683. | OCHF₂ | C₂H₅-S-CH₂-CH₂-CH₂- |
| 684. | OCHF₂ | C₂H₅-SO₂-CH₂-CH₂-CH₂- |
| 685. | OCHF₂ | (CH₃)₂N-CH₂-CH₂-CH₂- |
| 686. | OCHF₂ | (C₂H₅)₂N-CH₂-CH₂-CH₂- |
| 687. | OCHF₂ | CH₃-O-CH₂-C(CH₃)₂- |
| 688. | OCHF₂ | CH₃-S-CH₂-C(CH₃)₂- |
| 689. | OCHF₂ | CH₃-SO₂-CH₂-C(CH₃)₂- |
| 690. | OCHF₂ | C₂H₅-O-CH₂-C(CH₃)₂- |
| 691. | OCHF₂ | C₂H₅-S-CH₂-C(CH₃)₂- |
| 692. | OCHF₂ | C₂H₅-SO₂-CH₂-C(CH₃)₂- |
| 693. | OCHF₂ | (CH₃)₂N-CH₂-C(CH₃)₂- |
| 694. | OCHF₂ | (C₂H₅)₂N-CH₂-C(CH₃)₂- |
| 695. | OCHF₂ | [(CH₃)₂CH]₂N-CH₂-C(CH₃)₂- |
| 696. | OCHF₂ | CI-CH₂-C≡C-CH₂- |
| 697. | OCHF₂ | CH₃-O-C(O)-CH₂ |
| 698. | OCHF₂ | C₂H₅-O-C(O)-CH₂ |
| 699. | OCHF₂ | CH₃-O-C(O)-CH(CH₃)- |
| 700. | OCHF₂ | C₂H₅-O-C(O)-CH(CH3₎- |
| 701. | OCHF₂ | (CH₃O)₂CH-CH₂- |
| 702. | OCHF₂ | (C₂H₅O)₂CH-CH₂- |
| 703. | OCF₃ | H |
| 704. | OCF₃ | CH₃ |
| 705. | OCF₃ | CH₃CH₂- |
| 706. | OCF₃ | (CH₃)₂CH- |
| 707. | OCF₃ | CH₃CH₂CH₂- |
| 708. | OCF₃ | n-C₄H₉ |
| 709. | OCF₃ | (CH₃)₃C- |
| 710. | OCF₃ | (CH₃)₂CH-CH₂- |
| 711. | OCF₃ | n-C₅H₁₁ |
| 712. | OCF₃ | (CH₃)₂CH-CH₂-CH₂- |
| 713. | OCF₃ | (C₂H₅)₂-CH- |
| 714. | OCF₃ | (CH₃)₃C-CH₂- |
| 715. | OCF₃ | (CH₃)₃C-CH₂-CH₂- |
| 716. | OCF₃ | C₂H₅CH(CH₃)-CH₂- |
| 717. | OCF₃ | CH₃-CH₂-C(CH₃)₂- |
| 718. | OCF₃ | (CH₃)₂CH-CH(CH₃)- |
| 719. | OCF₃ | (CH₃)₃C-CH(CH₃)- |
| 720. | OCF₃ | (CH₃)₂CH-CH₂-CH(CH₃)- |
| 721. | OCF₃ | CH₃-CH₂-C(CH₃)(C₂H₅)- |
| 722. | OCF₃ | CH₃-CH₂-CH₂-C(CH₃)₂- |
| 723. | OCF₃ | C₂H₅-CH₂-CH(CH₃)-CH₂- |
| 724. | OCF₃ | cyclopropyl |
| 725. | OCF₃ | cyclopropyl-CH₂- |
| 726. | OCF₃ | cyclopropyl-CH(CH₃)- |
| 727. | OCF₃ | cyclobutyl |
| 728. | OCF₃ | cyclopentyl |
| 729. | OCF₃ | cyclohexyl |
| 730. | OCF₃ | HC≡C-CH₂- |
| 731. | OCF₃ | HC≡C-CH(CH₃)- |
| 732. | OCF₃ | HC≡C-C(CH₃)₂- |
| 733. | OCF₃ | HC≡C-C(CH₃)(C₂H₅)- |
| 734. | OCF₃ | HC≡C-C(CH₃)(C₃H₇)- |
| 735. | OCF₃ | CH₂=CH-CH₂- |
| 736. | OCF₃ | H₂C=CH-CH(CH₃)- |
| 737. | OCF₃ | H₂C=CH-C(CH₃)₂- |
| 738. | OCF₃ | H₂C=CH-C(C₂H₅)(CH₃)- |
| 739. | OCF₃ | C₆H₅-CH₂- |
| 740. | OCF₃ | 4-(CH₃)₃C-C₆H₄-CH₂- |
| 741. | OCF₃ | C₆H₅-CH₂- |
| 742. | OCF₃ | 4-(CH₃)₃C-C₆H₄-CH₂- |
| 743. | OCF₃ | 4-CI-C₆H₄-CH₂- |
| 744. | OCF₃ | 3-(CH₃O)-C₆H₄-CH₂- |
| 745. | OCF₃ | 4-(CH₃O)-C₆H₄-CH₂- |
| 746. | OCF₃ | 2-(CH₃O)-C₆H₄-CH₂- |
| 747. | OCF₃ | 3-CI-C₆H₄-CH₂- |
| 748. | OCF₃ | 2-CI-C₆H₄-CH₂- |
| 749. | OCF₃ | 4-(F₃C)-C₆H₄-CH₂- |
| 750. | OCF₃ | NC-CH₂- |
| 751. | OCF₃ | NC-CH₂-CH₂- |
| 752. | OCF₃ | NC-CH₂-CH(CH₃)- |
| 753. | OCF₃ | NC-CH₂-C(CH₃)₂- |
| 754. | OCF₃ | NC-CH₂-CH₂-CH₂- |
| 755. | OCF₃ | FH₂C-CH₂- |
| 756. | OCF₃ | CIH₂C-CH₂- |
| 757. | OCF₃ | BrH₂C-CH₂- |
| 758. | OCF₃ | FH₂C-CH(CH₃)- |
| 759. | OCF₃ | CIH₂C-CH(CH₃)- |
| 760. | OCF₃ | BrH₂C-CH(CH₃)- |
| 761. | OCF₃ | F₂HC-CH₂- |
| 762. | OCF₃ | F₃C-CH₂- |
| 763. | OCF₃ | FH₂C-CH₂-CH₂- |
| 764. | OCF₃ | CIH₂C-CH₂-CH₂- |
| 765. | OCF₃ | BrH₂C-CH₂-CH₂- |
| 766. | OCF₃ | F₂HC-CH₂-CH₂- |
| 767. | OCF₃ | F₃C-CH₂-CH₂- |
| 768. | OCF₃ | CH₃-O-CH₂-CH₂- |
| 769. | OCF₃ | CH₃-S-CH₂-CH₂- |
| 770. | OCF₃ | CH₃-SO₂-CH₂-CH₂- |
| 771. | OCF₃ | C₂H₅-O-CH₂-CH₂- |
| 772. | OCF₃ | (CH₃)₂CH-O-CH₂-CH₂- |
| 773. | OCF₃ | C₂H₅-S-CH₂-CH₂- |
| 774. | OCF₃ | C₂H₅-SO₂-CH₂-CH₂- |
| 775. | OCF₃ | (CH₃)₂N-CH₂-CH₂- |
| 776. | OCF₃ | (C₂H₅)₂N-CH₂-CH₂- |
| 777. | OCF₃ | [(CH₃)₂CH]₂N-CH₂-CH₂- |
| 778. | OCF₃ | CH₃-O-CH₂-CH(CH₃)- |
| 779. | OCF₃ | CH₃-S-CH₂-CH(CH₃)- |
| 780. | OCF₃ | CH₃-SO₂-CH₂-CH(CH₃)- |
| 781. | OCF₃ | C₂H₅-O-CH₂-CH(CH₃)- |
| 782. | OCF₃ | C₂H₅-S-CH₂-CH(CH₃)- |
| 783. | OCF₃ | C₂H₅-SO₂-CH₂-CH(CH₃)- |
| 784. | OCF₃ | (CH₃)₂N-CH₂-CH(CH₃)- |
| 785. | OCF₃ | (C₂H₅)₂N-CH₂-CH(CH₃)- |
| 786. | OCF₃ | [(CH₃)₂CH]₂N-CH₂-CH(CH₃)- |
| 787. | OCF₃ | CH₃-O-CH(CH₃)-CH₂- |
| 788. | OCF₃ | CH₃-S-CH(CH₃)-CH₂- |
| 789. | OCF₃ | CH₃-SO₂-CH(CH₃)-CH₂- |
| 790. | OCF₃ | C₂H₅-O-CH(CH₃)-CH₂- |
| 791. | OCF₃ | C₂H₅-S-CH(CH₃)-CH₂- |
| 792. | OCF₃ | C₂H₅-SO₂-CH(CH₃)-CH₂- |
| 793. | OCF₃ | (CH₃)₂N-CH(CH₃)-CH₂- |
| 794. | OCF₃ | (C₂H₅)₂N-CH(CH₃)-CH₂- |
| 795. | OCF₃ | [(CH₃)₂CH]₂N-CH(CH₃)-CH₂- |
| 796. | OCF₃ | CH₃-O-CH₂-CH₂-CH₂- |
| 797. | OCF₃ | CH₃-S-CH₂-CH₂-CH₂- |
| 798. | OCF₃ | CH₃-SO₂-CH₂-CH₂-CH₂- |
| 799. | OCF₃ | C₂H₅-O-CH₂-CH₂-CH₂- |
| 800. | OCF₃ | C₂H₅-S-CH₂-CH₂-CH₂- |
| 801. | OCF₃ | C₂H₅-SO₂-CH₂-CH₂-CH₂- |
| 802. | OCF₃ | (CH₃)₂N-CH₂-CH₂-CH₂- |
| 803. | OCF₃ | (C₂H₅)₂N-CH₂-CH₂-CH₂- |
| 804. | OCF₃ | CH₃-O-CH₂-C(CH₃)₂- |
| 805. | OCF₃ | CH₃-S-CH₂-C(CH₃)₂- |
| 806. | OCF₃ | CH₃-SO₂-CH₂-C(CH₃)₂- |
| 807. | OCF₃ | C₂H₅-O-CH₂-C(CH₃)₂- |
| 808. | OCF₃ | C₂H₅-S-CH₂-C(CH₃)₂- |
| 809. | OCF₃ | C₂H₅-SO₂-CH₂-C(CH₃)₂- |
| 810. | OCF₃ | (CH₃)₂N-CH₂-C(CH₃)₂- |
| 811. | OCF₃ | (C₂H₅)₂N-CH₂-C(CH₃)₂- |
| 812. | OCF₃ | [(CH₃)₂CH]₂N-CH₂-C(CH₃)₂- |
| 813. | OCF₃ | CI-CH₂-C≡C-CH₂- |
| 814. | OCF₃ | CH₃-O-C(O)-CH₂ |
| 815. | OCF₃ | C₂H₅-O-C(O)-CH₂ |
| 816. | OCF₃ | CH₃-O-C(O)-CH(CH₃)- |
| 817. | OCF₃ | C₂H₅-O-C(O)-CH(CH₃)- |
| 818. | OCF₃ | (CH₃O)₂CH-CH₂- |
| 819. | OCF₃ | (C₂H₅O)₂CH-CH₂- |
| 820. | OCCIF₂ | H |
| 821. | OCCIF₂ | CH₃ |
| 822. | OCCIF₂ | CH₃CH₂- |
| 823. | OCCIF₂ | (CH₃)₂CH- |
| 824. | OCCIF₂ | CH₃CH₂CH₂- |
| 825. | OCCIF₂ | n-C₄H₉ |
| 826. | OCCIF₂ | (CH₃)₃C- |
| 827. | OCCIF₂ | (CH₃)₂CH-CH₂- |
| 828. | OCCIF₂ | n-C₅H₁₁ |
| 829. | OCCIF₂ | (CH₃)₂CH-CH₂-CH₂- |
| 830. | OCCIF₂ | (C₂H₅)₂-CH- |
| 831. | OCCIF₂ | (CH₃)₃C-CH₂- |
| 832. | OCCIF₂ | (CH₃)₃C-CH₂-CH₂- |
| 833. | OCCIF₂ | C₂H₅CH(CH₃)-CH₂- |
| 834. | OCCIF₂ | CH₃-CH₂-C(CH₃)₂- |
| 835. | OCCIF2 | (CH₃)₂CH-CH(CH₃)- |
| 836. | OCCIF₂ | (CH₃)₃C-CH(CH₃)- |
| 837. | OCCIF₂ | (CH₃)₂CH-CH₂-CH(CH₃)- |
| 838. | OCCIF₂ | CH₃-CH₂-C(CH₃)(C₂H₅)- |
| 839. | OCCIF₂ | CH₃-CH₂-CH₂-C(CH₃)₂- |
| 840. | OCHF₂ | C₂H₅-CH₂-CH(CH₃)-CH₂- |
| 841. | OCCIF₂ | cyclopropyl |
| 842. | OCCIF₂ | cyclopropyl-CH₂- |
| 843. | OCCIF₂ | cyclopropyl-CH(CH₃)- |
| 844. | OCCIF₂ | cyclobutyl |
| 845. | OCCIF₂ | cyclopentyl |
| 846. | OCCIF₂ | cyclohexyl |
| 847. | OCCIF₂ | HC≡C-CH₂- |
| 848. | OCCIF₂ | HC≡C-CH(CH₃)- |
| 849. | OCCIF₂ | HC≡C-C(CH₃)₂- |
| 850. | OCCIF₂ | HC≡C-C(CH₃)(C₂H₅)- |
| 851. | OCCIF₂ | HC≡C(CH₃)(C₃H₇)- |
| 852. | OCCIF₂ | CH₂=CH-CH₂- |
| 853. | OCCIF₂ | H₂C=CH-CH(CH₃)- |
| 854. | OCCIF₂ | H₂C=CH-C(CH₃)₂- |
| 855. | OCCIF₂ | H₂C=CH-C(C₂H_{$})(CH₃)- |
| 856. | OCCIF₂ | C₆H₅-CH₂- |
| 857. | OCCIF₂ | 4-(CH₃)₃C-C₆H₄-CH₂- |
| 858. | OCCIF₂ | C₆H₅-CH₂- |
| 859. | OCCIF₂ | 4-(CH₃)₃C-C₆H₄-CH₂- |
| 860. | OCCIF₂ | 4-CI-C₆H₄-CH₂- |
| 861. | OCCIF₂ | 3-(CH₃O)-C₆H₄-CH₂- |
| 862. | OCCIF₂ | 4-(CH₃O)-C₆H₄-CH₂- |
| 863. | OCCIF₂ | 2-(CH₃O)-C₆H₄-CH₂- |
| 864. | OCCIF₂ | 3-CI-C₆H₄-CH₂- |
| 865. | OCCIF₂ | 2-CI-C₆H₄-CH₂- |
| 866. | OCCIF₂ | 4-(F₃C)-C₆H₄-CH₂- |
| 867. | OCCIF₂ | NC-CH₂- |
| 868. | OCCIF₂ | NC-CH₂-CH₂- |
| 869. | OCCIF₂ | NC-CH₂-CH(CH₃)- |
| 870. | OCCIF₂ | NC-CH₂-C(CH₃)₂- |
| 871. | OCCIF₂ | NC-CH₂-CH₂-CH₂- |
| 872. | OCCIF₂ | FH₂C-CH₂- |
| 873. | OCCIF₂ | CIH₂C-CH₂- |
| 874. | OCCIF₂ | BrH₂C-CH₂- |
| 875. | OCCIF₂ | FH₂C-CH(CH₃)- |
| 876. | OCCIF₂ | CIH₂C-CH(CH₃)- |
| 877. | OCCIF₂ | BrH₂C-CH(CH₃)- |
| 878. | OCCIF₂ | F₂HC-CH₂- |
| 879. | OCCIF₂ | F₃C-CH₂- |
| 880. | OCCIF₂ | FH₂C-CH₂-CH₂- |
| 881. | OCCIF₂ | CIH₂C-CH₂-CH₂- |
| 882. | OCCIF₂ | BrH₂C-CH₂-CH₂- |
| 883. | OCCIF₂ | F₂HC-CH₂-CH₂- |
| 884. | OCCIF₂ | F₃C-CH₂-CH₂- |
| 885. | OCCIF₂ | CH₃-O-CH₂-CH₂- |
| 886. | OCCIF₂ | CH₃-S-CH₂-CH₂- |
| 887. | OCCIF₂ | CH₃-SO₂-CH₂-CH₂- |
| 888. | OCCIF₂ | C₂H₅-O-CH₂-CH₂- |
| 889. | OCCIF₂ | (CH₃)₂CH-O-CH₂-CH₂- |
| 890. | OCCIF₂ | C₂H₅-S-CH₂-CH₂- |
| 891. | OCCIF₂ | C₂H₅-SO₂-CH₂-CH₂- |
| 892. | OCCIF₂ | (CH₃)₂N-CH₂-CH₂- |
| 893. | OCCIF₂ | (C₂H₅)₂N-CH₂-CH₂- |
| 894. | OCCIF₂ | [(CH₃)₂CH]₂N-CH₂-CH₂- |
| 895. | OCCIF₂ | CH₃-O-CH₂-CH(CH₃)- |
| 896. | OCCIF₂ | CH₃-S-CH₂-CH(CH₃)- |
| 897. | OCCIF₂ | CH₃-SO₂-CH₂-CH(CH₃)- |
| 898. | OCCIF₂ | C₂H₅-O-CH₂-CH(CH₃)- |
| 899. | OCCIF₂ | C₂H₅-S-CH₂-CH(CH₃)- |
| 900. | OCCIF₂ | C₂H₅-SO₂-CH₂-CH(CH₃)- |
| 901. | OCCIF₂ | (CH₃)₂N-CH₂-CH(CH₃)- |
| 902. | OCCIF₂ | (C₂H₅)₂N-CH₂-CH(CH₃)- |
| 903. | OCCIF₂ | [(CH₃)₂CH]₂N-CH₂-CH(CH₃)- |
| 904. | OCCIF₂ | CH₃-O-CH(CH₃)-CH₂- |
| 905. | OCCIF₂ | CH₃-S-CH(CH₃)-CH₂- |
| 906. | OCCIF₂ | CH₃-SO₂-CH(CH₃)-CH₂- |
| 907. | OCCIF₂ | C₂H₅-O-CH(CH₃)-CH₂- |
| 908. | OCCIF₂ | C₂H₅-S-CH(CH₃)-CH₂- |
| 909. | OCCIF₂ | C₂H₅-SO₂-CH(CH₃)-CH₂- |
| 910. | OCCIF₂ | (CH₃)₂N-CH(CH₃)-CH₂- |
| 911. | OCCIF₂ | (C₂H₅)₂N-CH(CH₃)-CH₂- |
| 912. | OCCIF₂ | [(CH₃)₂CH]₂N-CH(CH₃)-CH₂- |
| 913. | OCCIF₂ | CH₃-O-CH₂-CH₂-CH₂- |
| 914. | OCCIF₂ | CH₃-S-CH₂-CH₂-CH₂- |
| 915. | OCCIF₂ | CH₃-SO₂-CH₂-CH₂-CH₂- |
| 916. | OCCIF₂ | C₂H₅-O-CH₂-CH₂-CH₂- |
| 917. | OCCIF₂ | C₂H₅-S-CH₂-CH₂-CH₂- |
| 918. | OCCIF₂ | C₂H₅-SO₂-CH₂-CH₂-CH₂- |
| 919. | OCCIF₂ | (CH₃)₂N-CH₂-CH₂-CH₂- |
| 920. | OCCIF₂ | (C₂H₅)₂N-CH₂-CH₂-CH₂- |
| 921. | OCCIF₂ | CH₃-O-CH₂-C(CH₃)₂- |
| 922. | OCCIF₂ | CH₃-S-CH₂-C(CH₃)₂- |
| 923. | OCCIF₂ | CH₃-SO₂-CH₂-C(CH₃)₂- |
| 924. | OCCIF₂ | C₂H₅-O-CH₂-C(CH₃)₂- |
| 925. | OCCIF₂ | C₂H₅-S-CH₂-C(CH₃)₂- |
| 926. | OCCIF₂ | C₂H₅-SO₂-CH₂-C(CH₃)₂- |
| 927. | OCCIF₂ | (CH₃)₂N-CH₂-C(CH₃)₂- |
| 928. | OCCIF₂ | (C₂H₅)₂N-CH₂-C(CH₃)₂- |
| 929. | OCCIF₂ | [(CH₃)₂CH]₂N-CH₂-C(CH₃)₂- |
| 930. | OCCIF₂ | CI-CH₂-C≡C-CH₂- |
| 931. | OCCIF₂ | CH₃-O-C(O)-CH₂ |
| 932. | OCCIF₂ | C₂H₅-O-C(O)-CH₂ |
| 933. | OCCIF₂ | CH₃-O-C(O)-CH(CH₃)- |
| 934. | OCCIF₂ | C₂H₅-O-C(O)-CH(CH₃)- |
| 935. | OCCIF₂ | (CH₃O)₂CH-CH₂- |
| 936. | OCCIF₂ | (C₂H₅O)₂CH-CH₂- |

The 2-cyanobenzenesulfonamide compounds of the formula I can be prepared, for example, by reacting a 2-cyanobenzenesulfonylhalide II with ammonia or a primary amine (III), similarly to a process described in J. March, 4^{th} edition 1992, p. 499 (see Scheme 1).

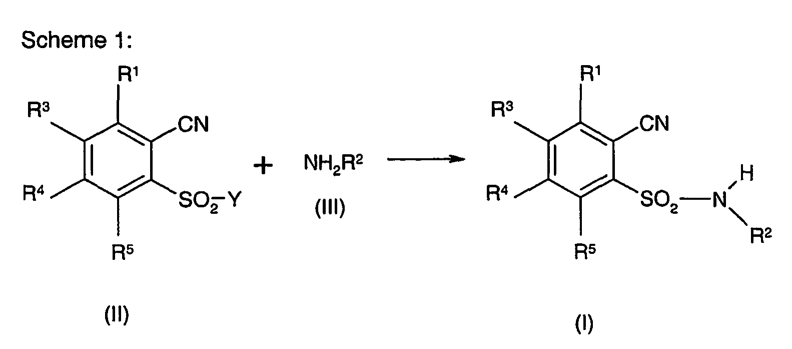

In Scheme 1 the variables R¹ to R⁵ are as defined above and Y is halogen, especially chlorine or bromine. The reaction of a sulfonylhalide II, especially a sulfonylchloride, with an amine III is usually carried out in the presence of a solvent. Suitable solvents are polar solvents which are inert under the reaction conditions, for example C₁-C₄-alkanols such as methanol, ethanol, n-propanol or isopropanol, dialkyl ethers such as diethyl ether, diisopropyl ether or methyl tert-butyl ether, cyclic ethers such as dioxane or tetrahydrofuran, acetonitrile, carboxamides such as N,N-dimethyl formamide, N,N-dimethyl acetamide or N-methylpyrrolidinone, water, (provided the sulfonylhalide II is sufficiently resistent to hydrolysis under the reaction conditions used) or a mixture thereof.

In general, the amine III is employed in an at least equimolar amount, preferably at least 2-fold molar excess, based on the sulfonylhalide II, to bind the hydrogen halide formed. It may be advantageous to employ the primary amine III in an up to 6-fold molar excess, based on the sulfonylhalide II.

It may be advantageous to carry out the reaction in the presence of an auxiliary base. Suitable auxiliary bases include organic bases, for example tertiary amines, such as aliphatic tertiary amines, such as trimethylamine, triethylamine or diisopropylamine, cycloaliphatic tertiary amines such as N-methylpiperidine or aromatic amines such pyridine, substituted pyridines such as 2,3,5-collidine, 2,4,6-collidine, 2,4-lutidine, 3,5-lutidine or 2,6-lutidine and inorganic bases for example alkali metal carbonates and alkaline earth metal carbonates such as lithium carbonate, potassium carbonate and sodium carbonate, calcium carbonate and alkaline metal hydrogencarbonates such as sodium hydrogen carbonate. The molar ratio of auxiliary base to sulfonylhalide II is preferably in the range of from 1:1 to 4:1, preferably 1:1 to 2:1. If the reaction is carried out in the presence of an auxiliary base, the molar ratio of primary amine III to sulfonylhalide II usually is 1:1 to 1.5:1.

The reaction is usually carried out at a reaction temperature ranging from 0°C to the boiling point of the solvent, preferably from 0 to 30°C.

If not commercially available, the sulfonylhalide compounds II may be prepared, for example by one of the processes as described below.

The preparation of the sulfonylchloride compound II can be carried out, for example, according to the reaction sequence shown in Scheme 2 where the variables R¹, R³ to R⁵ are as defined above: 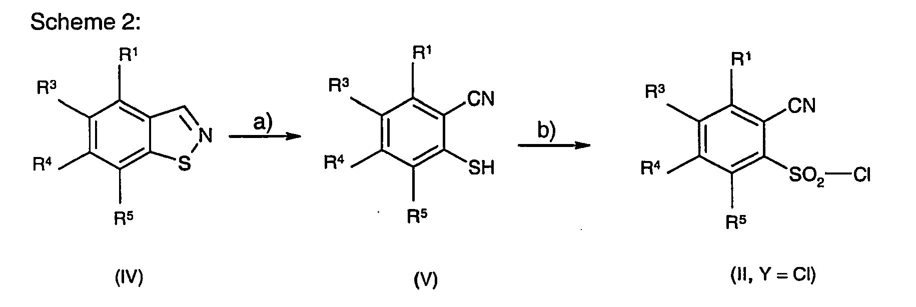
a) conversion of a benzisothiazole IV to a thiol V, for example, in analogy to a process described in Liebigs Ann. Chem. 1980, 768-778, by reacting IV with a base such as an alkali metal hydroxide and alkaline earth metal hydroxide such as sodium hydroxide, potassium hydroxide and calcium hydroxide, an alkali metal hydride such as sodium hydride or potassium hydride or an alkoxide such as sodium methoxide, sodium ethoxide and the like in an inert organic solvent, for example an ether such as diethyl ether, diisopropyl ether, tetrahydrofuran, dioxane, or in a alcohol such as methanol, ethanol, propanol, isopropanol, butanol, 1,2-ethanediol, diethylene glycol, or in a carboxamide such as N,N-dimethyl formamide, N,N-dimethyl acetamide or N-methylpyrrolidinone or in dimethylsulfoxide or in a mixture of the above mentioned solvents; and acidification to yield the thiol V. The benzisothiazole IV can be prepared in analogy to a process described in Liebig Ann. Chem 729, 146-151 (1969); and subsequent
b) oxidation of the thiol V to the sulfonylchloride II (Y = Cl), for example, by reacting the thiol V with chlorine in water or a water-solvent mixture, e.g. a mixture of water and acetic acid, in analogy to a process described in Jerry March, 3rd edition, 1985, reaction 9-27, page 1087.

Compounds II (where Y is chlorine and R⁴ and R⁵ are hydrogen) may be prepared by the reaction sequence shown in Scheme 3 where the variable R¹ has the meanings given above and R³ is H, Cl, Br, I or CN: 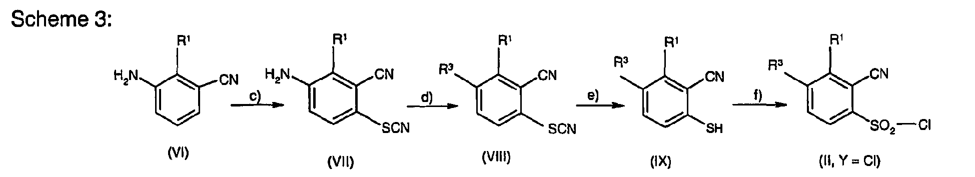
c) preparing a thiocyanato compound VII by thiocyanation of the aniline VI with thiocyanogen, for example, in analogy to a process described in EP 945 449, in Jerry March, 3^{rd} edition, 1985, p. 476, in Neuere Methoden der organischen Chemie, Vol.1, 237 (1944) or in J.L. Wood, Organic Reactions, vol. III, 240 (1946); the thiocyanogen is usually prepared in situ by reacting, for example, sodium thiocyanate with bromine in an inert solvent. Suitable solvents include alkanols such as methanol or ethanol or carboxylic acids such as acetic acid, propionic acid or isobutyric acid and mixtures thereof. Preferably, the inert solvent is methanol to which some sodium bromide may have been added for stabilization.
d) conversion of the amino group in VII into a diazonium group by a conventional diazotation followed by conversion of the diazonium group into hydrogen, chlorine, bromine or iodine or cyano. Suitable nitrosating agents are nitrosonium tetrafluoroborate, nitrosyl chloride, nitrosyl sulfuric acid, alkyl nitrites such as t-butyl nitrite, or salts of nitrous acid such as sodium nitrite. The conversion of the resulting diazonium salt into the corresponding compound VIII where R³ = cyano, chlorine, bromine or iodine may be carried out by treatment of VII with a solution or suspension of a copper(I) salt, such as copper(I) cyanide, chloride, bromide or iodide or with a solution of an alkali metal salt (cf., for example, Houben-Weyl, Methoden der organischen Chemie [Methods of Organic Chemistry], Georg Thieme Verlag Stuttgart, Vol. 5/4, 4th edition 1960, p. 438 ff.) The conversion of the resulting diazonium salt into the corresponding compound VIII where R³ = H, for example, may be carried out by treatment with hypophosphorous acid, phosphorous acid, sodium stannite or in non-aqueous media by treatment with tributyltin hydride or (C₂H₅)₃SnH or with sodium borohydride (cf., for example, Jerry March, 3^{rd} edition, 1985, 646f).
e) reduction of the thiocyanate VIII to the corresponding thiol compound IX by treatment with zinc in the presence of sulfuric acid or by treatment with sodium sulfide; and subsequent
f) oxidation of the thiol IX to obtain the sulfonylchloride II in analogy to step b) of scheme 2.

Furthermore, the benzenesulfonylchloride II (Y = Cl) may be prepared by the reaction sequence shown in Scheme 4 where the variables R¹, R³, R⁴ and R⁵ are as defined above. 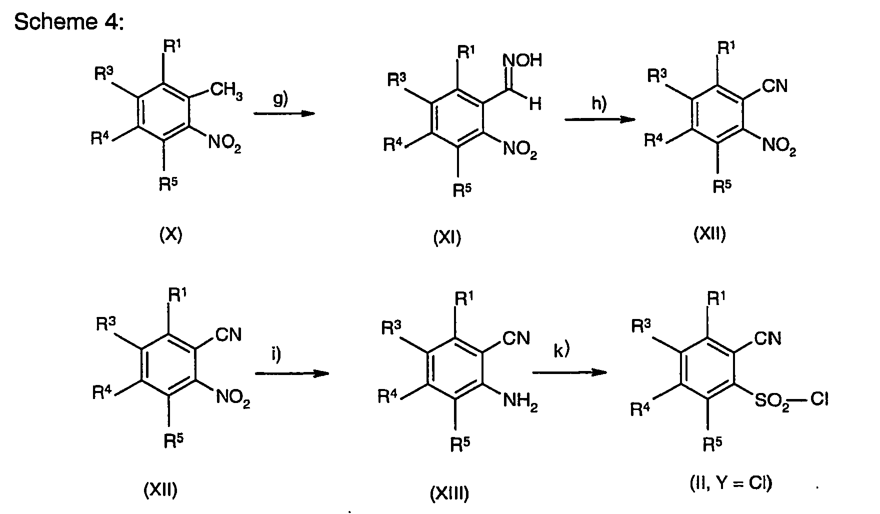
(g) transformation of nitrotoluene X into the benzaldoxime compound XI, for example in analogy to a process described in WO 00/29394. The transformation of X into XI is e.g. achieved by reacting nitro compound X with an organic nitrite R-ONO, wherein R is alkyl in the presence of a base. Suitable nitrites are C₂-C₈-alkyl nitrites such as n-butyl nitrite or (iso)amyl nitrite. Suitable bases are alkali metal alkoxides such as sodium methoxide, potassium methoxide or potassium tert-butoxide, alkali metal hydroxides such as NaOH or KOH or organo magnesium compounds such as Grignard reagents of the formula R'MgX (R' = alkyl, X = halogen). The reaction is usually carried out in an inert solvent, which preferably comprises a polar aprotic solvent. Suitable polar aprotic solvents include carboxamides such as N,N-dialkylformamides, e.g. N,N-dimethylformamide, N,N-dialkylacetamides, e.g. N,N-dimethylacetamide or N-alkyllactames e.g. N-methylpyrrolidone or mixtures thereof or mixtures thereof with non-polar solvents such as alkanes, cycloalkanes and aromatic solvents e.g. toluene and xylenes. When using sodium bases, 1-10 mol % of an alcohol may be added, if appropriate. The stoichiometric ratios are, for example, as follows: 1-4 equivalents of base, 1-2 equivalents of R-ONO; preferably 1.5-2.5 equivalents of base and 1-1.3 equivalents of R-ONO; equally preferably: 1-2 equivalents of base and 1-1.3 equivalents of R-ONO. The reaction is usually carried out in the range from -60°C to room temperature, preferably -50°C to -20°C, in particular from -35°C to -25°C.
(h) dehydration of the aldoxime XI to the nitrile XII, for example by treatment with a dehydrating agent such as acetic anhydride, ethyl orthoformate and H⁺, (C₆H₅)₃P-CCl₄, trichloromethyl chloroformate, methyl (or ethyl) cyanoformate, trifluoromethane sulfonic anhydride in analogy to a procedure described in Jerry March, 4^{th} edition, 1992, 1038f;
(i) reduction of compound XII to the aniline XIII, for example by reacting the nitro compound XII with a metal, such as iron, zinc or tin or with SnCl₂, under acidic conditions, with a complex hydride, such as lithium aluminium hydride and sodium. The reduction may be carried out without dilution or in a solvent or diluent. Suitable solvents are - depending on the reduction reagent chosen - for example water, alkanols, such as methanol, ethanol and isopropanol, or ethers, such as diethyl ether, methyl tert-butyl ether, dioxane, tetrahydrofuran and ethylene glycol dimethyl ether.
   The nitro group in compound XII may also be converted into an amino group by catalytic hydrogenation (see, for example, Houben Weyl, Vol. IV/1c, p. 506 ff or WO 00/29394). Catalysts being suitable are, for example, platinum or palladium catalysts, wherein the metal may be supported on an inert carrier such as activated carbon, clays, celithe, silica, alumina, alkaline or earth alkaline carbonates etc. The metal content of the catalyst may vary from 1 to 20% by weight, based on the support. In general, from 0.001 to 1% by weight of platinum or palladium, based on the nitro compound XII, preferably from 0.01 to 1% by weight of platinum or palladium are used. The reaction is usually carried out either without a solvent or in an inert solvent or diluent. Suitable solvents or diluents include aromatics such as benzene, toluene, xylenes, carboxamides such as N,N-dialkylformamides, e.g. N,N-dimethylformamide, N,N-dialkylacetamides, e.g. N,N-dimethylacetamide or N-alkyl lactames e.g. N-methylpyrrolidone, tetraalkylureas, such as tetramethylurea, tetrabutylurea, N,N'-dimethylpropylene urea and N,N'-dimethylethylene urea, alkanols such as methanol, ethanol, isopropanol, or n-butanol, ethers, such as diethyl ether, methyl tert-butyl ether, dioxane, tetrahydrofuran and ethylene glycol dimethyl ether, carboxylic acids such as acetic acid or propionic acid, carbonic acid ester such as ethyl acetate. The reaction temperature is usually in the range from -20°C to 100 °C, preferably 0°C to 50°C. The hydrogenation may be carried out under atmospheric hydrogen pressure or elevated hydrogen pressure.
(k) conversion of the amino group of compound XIII into the corresponding diazonium group followed by reacting the diazonium salt with sulfur dioxide in the presence of copper(II) chloride to afford the sulfonylchloride II. The diazonium salt may be prepared as described in step d) of scheme 3. Preferably, sodium nitrite is used as alkyl nitrite. In general, the sulfur dioxide is dissolved in glacial acetic acid.

The compounds of formula XIII may also be prepared according to methods described in WO 94/18980 using ortho-nitroanilines as precursors or WO 00/059868 using isatin precursors.

If individual compounds cannot be obtained via the above-described routes, they can be prepared by derivatization other compounds I or by customary modifications of the synthesis routes described.

The reaction mixtures are worked up in the customary manner, for example by mixing with water, separating the phases and, if appropriate, purifying the crude products by chromatography, for example on alumina or silica gel may be employed. Some of the intermediates and end products may be obtained in the form of colorless or pale brown viscous oils which are freed or purified form volatile components under reduced pressure and at moderately elevated temperature. If the intermediates and end products are obtained as solids, they may be purified by recrystallisation or digestion.

2-cyanobenzenesulfonamide compounds of the general formula I obtained as described above and suitable for methods for the protection of seeds from soil insects and of the resulting plant's roots and shoots from soil and foliar insects are characterized in the following tables PI, PII and PIII:

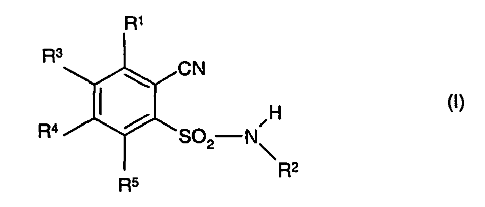

**Table PI (m.p. meltina point):**

| Example no. | R³ | R⁵ | R¹ | R² | m.p. [°C] |
|---|---|---|---|---|---|
| 1 | I | H | CH₃ | CH₃- | 124-126 |
| 2 | F | H | CH₃ | CH₃- | Oil |
| 3 | F | H | CH₃ | (CH₃)₂CH- | 135-139 |
| 4 | F | H | CH₃ | HC≡C-CH₂- | 98-100 |
| 5 | F | H | CH₃ | C₆H₅-CH₂- | 103-108 |
| 6 | F | H | CH₃ | CH₃-O-CH₂-CH₂- | Oil |
| 7 | F | H | CH₃ | CH₃-S-CH₂-CH₂- | 62-66 |
| 8 | F | H | CH₃ | CH₃CH₂CH₂- | 73-77 |
| 9 | F | H | CH₃ | CH₂=CH-CH₂- | 78-82 |
| 10 | F | H | CH₃ | cyclopropyl | 100-103 |
| 11 | F | H | CH₃ | cyclopropyl-CH₂- | 82-88 |
| 12 | H | H | OCF₃ | CH₃- | 69-73 |
| 13 | F | H | CH₃ | CH₃CH₂- | 84-93 |
| 14 | F | H | CH₃ | NC-CH₂-CH₂- | 129-134 |
| 15 | H | H | OCCIF₂ | CH₃- | 87-91 |
| 16 | I | H | CH₃ | (CH₃)₂CH- | 100-104 |
| 17 | I | H | CH₃ | HC≡C-CH₂- | 110-113 |
| 18 | I | H | CH₃ | CH₃CH₂- | 115-117 |
| 19 | I | H | CH₃ | C₆H₅-CH₂- | 133-137 |
| 20 | I | H | CH₃ | CH₃-O-CH₂-CH₂- | Oil |
| 21 | I | H | CH₃ | CH₃-S-CH₂-CH₂- | 131-135 |
| 22 | I | H | CH₃ | CH₃CH₂CH₂- | 118-120 |
| 23 | I | H | CH₃ | CH₂=CH-CH₂- | 106-109 |
| 24 | I | H | CH₃ | cyclopropyl | 135-137 |
| 25 | I | H | CH₃ | cyclopropyl-CH₂- | 111-114 |
| 26 | I | H | CH₃ | CH₃-S-CH₂-CH(CH₃)- | 102-106 |
| 27 | I | H | CH₃ | NC-CH₂-CH₂- | 182-188 |
| 28 | F | H | CH₃ | F₃C-CH₂- | 142-162 |
| 29 | H | H | OCF₃ | CH₃CH₂- | 67-71 |
| 30 | H | H | OCF₃ | (CH₃)₂CH- | Oil |
| 31 | H | H | OCF₃ | HC≡C-CH₂- | 80-83 |
| 32 | H | H | OCF₃ | C₆H₅-CH₂- | 94-96 |
| 33 | H | H | OCF₃ | CH₃-O-CH₂-CH₂- | Oil |
| 34 | H | H | OCF₃ | CH₃-S-CH₂-CH₂- | Oil |
| 35 | H | H | OCF₃ | CH₃CH₂CH₂- | 64-67 |
| 36 | H | H | OCF₃ | F₃C-CH₂- | 118-122 |
| 37 | H | H | OCF₃ | CH₂=CH-CH₂- | Oil |
| 38 | H | H | OCF₃ | cyclopropyl | 86-88 |
| 39 | H | H | OCCIF₂ | CH₃CH₂- | Oil |
| 40 | H | H | OCCIF₂ | (CH₃)₂CH- | Oil |
| 41 | H | H | OCCIF₂ | HC≡C-CH₂- | 92-95 |
| 42 | H | H | OCCIF₂ | C₆H₅-CH₂- | 96-101 |
| 43 | H | H | OCCIF₂ | CH₃-O-CH₂-CH₂- | Oil |
| 44 | H | H | OCCIF₂ | CH₃-S-CH₂-CH₂- | 66-77 |
| 45 | H | H | OCCIF₂ | CH₃CH₂CH₂- | Oil |
| 46 | H | H | OCCIF₂ | F₃C-CH₂- | 119-130 |
| 47 | H | H | OCCIF₂ | CH₂=CH-CH₂- | 69-70 |
| 48 | H | H | OCCIF₂ | cyclopropyl | 98-100 |
| 49 | H | H | OCCIF₂ | cyclopropyl-CH₂- | 70-74 |
| 50 | H | H | OCCIF₂ | CH₃-S-CH₂-CH(CH₃)- | 86-87 |
| 51 | H | H | OCCIF₂ | NC-CH₂-CH₂- | 81-85 |
| 52 | H | H | OCF₃ | cyclopropyl-CH₂- | 72-74 |
| 53 | H | H | OCF₃ | CH₃-S-CH₂-CH(CH₃)- | Oil |
| 54 | H | H | CH₂CH₃ | CH₃CH₂- | Oil |
| 55 | H | H | OCF₃ | NC-CH₂-CH₂- | 106-111 |
| 56 | H | H | CH₂CH₃ | CH₃- | Oil |
| 57 | OCHF₂ | H | CH₃ | CH₃CH₂- | 116-118 |
| 58 | H | H | OCHF₂ | F₂C=CF-CH₂CH₂- | Oil |
| 59 | CH₃ | H | CH₃ | CH₃CH₂- | 104-109 |
| 60 | H | H | CH₂CH₃ | HC≡C-CH₂- | Oil |
| 61 | CH₃ | H | OCH₃ | CH₃CH₂- | Oil |
| 62 | H | H | OCF₂CClF | CH₃CH₂- | Oil |
| 63 | CH₃ | H | OCH₃ | HC≡C-CH₂- | 102-109 |
| 64 | H | H | OCF₂CCIF | (CH₃)₂CH- | Oil |
| 65 | H | H | OCF₂CCIF | HC≡C-CH₂- | Oil |
| 66 | NH₂ | H | CH₃ | CH₃CH₂- | 200-206 |
| 67 | H | H | OCF₂CCIF | CH₃-O-CH₂-CH₂- | Oil |
| 68 | H | H | OCF₂CCIF | CH₃CH₂CH₂- | Oil |
| 69 | F | H | OCH₃ | CH₃- | Oil |
| 70 | F | H | OCH₃ | (CH₃)₂CH- | Oil |
| 71 | F | H | OCH₃ | HC≡C-CH₂- | Oil |
| 72 | F | H | OCH₃ | CH₃CH₂- | Oil |
| 73 | H | H | OCF₂CCIF | C₆H₅-CH₂- | Oil |
| 74 | H | H | OCF₂CCIF | cyclopropyl | Oil |
| 75 | F | H | OCH₃ | CH₃-S-CH₂-CH₂- | Oil |
| 76 | F | H | OCH₃ | cyclopropyl | Oil |
| 77 | F | H | OCH₃ | C₆H₅-CH₂- | Oil |
| 78 | F | H | OCH₃ | cyclopropyl-CH₂- | Oil |

In examples 1-78 of table PI, R⁴ is hydrogen.

**Table PII (m.p. melting point):**

| Example no. | R³ | R⁵ | R¹ | R² | m.p. [ °C]/ *¹H-NMR/ **HPLC/MS |
|---|---|---|---|---|---|
| 1 | H | H | CH₃ | n-CH₂CH₂CH₃ | 74-77 |
| 2 | H | H | OCH₃ | -CH₃ | 121-128 |
| 3 | Cl | H | CH₃ | -CH₂CH₃ | 85-90 |
| 4 | CN | CH₃ | CH₃ | -CH₃ | 178-180 |
| 5 | Br | H | CH₃ | -CH₂CH₃ | 112-114 |
| 6 | Br | H | CH₃ | cyclopropyl | 140-142 |
| 7 | Br | H | CH₃ | n-C₄H₉ | 112-116 |
| 8 | Br | H | CH₃ | -CH(CH₃)₂ | 102-103 |
| 9 | Br | H | CH₃ | n-CH₂CH₂CH₃ | 119-120 |
| 10 | Br | H | CH₃ | C₆H₅-CH₂- | 139-140 |
| 11 | Br | H | CH₃ | 4-(CH₃)₃C-C₆H₄-CH₂- | 147-151 |
| 12 | H | H | CH₃ | C₆H₅-CH₂- | 117-119 |
| 13 | H | H | CH₃ | 4-(CH₃)₃C-C₆H₄-CH₂- | 97-103 |
| 14 | H | H | CH₃ | 4-Cl-C₆H₄-CH₂- | 150-151 |
| 15 | Br | H | CH₃ | 3-(CH₃O)-C₆H₄-CH₂- | 123-125 |
| 16 | H | H | CH₃ | 3-(CH₃O)-C₆H₄-CH₂- | 117-122 |
| 17 | Br | H | CH₃ | 4-(CH₃O)-C₆H₄-CH₂- | 156-161 |
| 18 | H | H | CH₃ | 4-(CH₃O)-C₆H₄-CH₂- | 127-132 |
| 19 | Br | H | CH₃ | 2-(CH₃O)-C₆H₄-CH₂- | 103-108 |
| 20 | H | H | CH₃ | 2-(CH₃O)-C₆H₄-CH₂- | 127-130 |
| 21 | Br | H | CH₃ | 4-Cl-C₆H₄-CH₂- | 127-131 |
| 22 | Br | H | CH₃ | 3-Cl-C₆H₄-CH₂- | 102-108 |
| 23 | H | H | CH₃ | 3-Cl-C₆H₄-CH₂- | 118-125 |
| 24 | Br | H | CH₃ | 2-Cl-C₆H₄-CH₂- | 118-125 |
| 25 | H | H | CH₃ | 2-Cl-C₆H₄-CH₂- | 128-131 |
| 26 | Br | H | CH₃ | 4-(F₃C)-C₆H₄-CH₂- | 153-155 |
| 27 | H | H | CH₃ | 4-(F₃C)-C₆H₄-CH₂- | 135-137 |
| 28 | Br | H | CH₃ | cyclopropyl-CH₂- | 106-110 |
| 29 | H | H | CH₃ | -CH₃ | 83-89 |
| 30 | H | H | CH₃ | -CH₂CH₃ | 98-103 |
| 31 | H | H | CH₃ | prop-2-ynyl | 104-107 |
| 32 | Br | H | CH₃ | -CH₂-CN | 106-110 |
| 33 | H | H | CH₃ | cyclopropyl-CH₂- | 89-93 |
| 34 | H | H | CH₃ | -CH₂-CN | 130-134 |
| 35 | Br | H | CH₃ | prop-2-ynyl | ¹H-NMR |
| 36 | Br | H | CH₃ | (CH₃)₃C-CH₂- | 112-114 |
| 37 | H | H | CH₃ | (CH₃)₃C-CH₂- | 86-93 |
| 38 | H | H | CH₃ | CH₂=CHCH₂- | ¹H-NMR |
| 39 | H | H | OCH₃ | -CH₂CH₃ | 121-126 |
| 40 | H | H | OCH₃ | C₆H₅-CH₂- | 108-119 |
| 41 | H | H | OCH₃ | -CH(CH₃)₂ | 104-113 |
| 42 | H | H | OCH₃ | prop-2-ynyl | 122-138 |
| 43 | H | H | OCH₃ | -CH₂-CN | ¹H-NMR |
| 44 | H | H | OCH₃ | CH₂=CHCH₂- | ¹H-NMR |
| 45 | H | H | OCH₃ | H | 186-198 |
| 46 | Cl | H | CH₃ | -CH₃ | 112-122 |
| 47 | Cl | H | CH₃ | H | 160-162 |
| 48 | H | H | OCH₂CH₃ | -CH₃ | 91-95 |
| 49 | H | H | OCH₂CH₃ | -CH₂CH₃ | 111-113 |
| 50 | H | H | OCH₂CH₃ | H | 183-186 |
| 51 | Cl H | | CH₃ | C₆H₅-CH₂- | 132-135 |
| 52 | Cl | H | CH₃ | -CH(CH₃)₂ | 86-94 |
| 53 | Cl H | | CH₃ | prop-2-ynyl | ¹H-NMR |
| 54 | Cl H | | CH₃ | H₂C=CHCH₂- | 95-96 |
| 55 | Cl | H | CH₃ | FH₂CCH₂- | 115-121 |
| 56 | H | H | OCH₂CH₃ | C₆H₅-CH₂- | oil |
| 57 | H | H | OCH₂CH₃ | prop-2-ynyl | 105-112 |
| 58 | H | H | OCH₂CH₃ | -CH₂-CN | 129-134 |
| 59 | H | H | OCH₂CH₃ | CH₂=CHCH₂- | oil |
| 60 | H | H | OCH₂CH₃ | -CH₂-CH₂-CH₃ | 113-115 |
| 61 | H | H | OCH₂CH₃ | cyclopropyl-CH₂ | 128-130 |
| 62 | Cl | H | CH₃ | -CH₂-CN | 134-138 |
| 63 | H | H | OCH₂CH₃ | -CH₂-CF₃ | oil |
| 64 | H | H | OCH₂CH=CH₂ | -CH₂-CH₃ | oil |
| 65 | H | H | OCH(CH₃)₂ | -CH₂-CH₃ | oil |
| 66 | H | H | OCHF₂ | -CH₂-CH₃ | 98-100 |
| 67 | H | H | OCH(CH₃)₂ | H | 132-136 |
| 68 | H | H | OCH(CH₃)₂ | prop-2-ynyl | oil |
| 69 | H | H | OCH(CH₃)₂ | -CH₂CN | oil |
| 70 | H | H | OCH(CH₃)₂ | cyclopropyl | oil |
| 71 | H | H | OCH(CH₃)₂ | -CH(CH₃)₂ | oil |
| 72 | H | H | OCH(CH₃)₂ | C₆H₅-CH₂- | oil |
| 73 | H | H | OCH(CH₃)₂ | -CH₂-CH₃ | oil |
| 74 | Br | H | CH₃ | H | 149-151 |
| 75 | H | H | CH₃ | H | 171-174 |
| 76 | H | H | OCH(CH₃)₂ | O-CH₂-CH₃ | oil |
| 77 | H | H | OCH(CH₃)₂ | -CH₂-CH₂-CH₃ | oil |
| 78 | H | H | OCHF₂ | H | 135-137 |
| 79 | H | H | OCHF2 | -CH₂-C≡CH | 65-70 |
| 80 | H | H | OCH₂CHClCH₂Cl | H | 123-129 |
| 81 | H | H | OCH(CH₃)₂ | -CH₃ | 82-91 |
| 82 | H | H | OCH₃ | -CH₂-c-C₃H₅ | 92-95 |
| 83 | H | H | OCH₃ | -c-C₃H₅ | 142-148 |
| 84 | H | H | OCH₃ | -O-CH₂-CH₃ | 138-143 |
| 85 | H | H | OCH₃ | -CH₂-CH₂-CN | 123-130 |
| 86 | H | H | OCH₃ | -CH₂-CH₂-S-CH₃ | oil |
| 87 | H | H | OCH₃ | -CH₂-CH₂-S(O)₂-CH₃ | 157-160 |
| 88 | H | H | OCH₃ | -CH₂-CH₂F | 134-140 |
| 89 | H | H | OCHF₂ | CH₃ | 122-128 |
| 90 | H | H | OCH₃ | -CH₂-CF₃ | 136-141 |
| 91 | H | H | OCH₃ | -CH₂-CHF₂ | 116-118 |
| 92 | H | H | OCH₃ | -O-CH₃ | 136-139 |
| 93 | Br | H | OCH₃ | -CH₂-C≡CH | 110-115 |
| 94 | H | H | OCH₃ | -CH₂-CH₂-N(CH₃)₂ | 94-97 |
| 95 | Br | H | OCH₃ | -CH₂-C₆H₅ | 134-136 |
| 96 | H | H | OCHF₂ | -CH₂-CF₃ | 120-138 |
| 97 | H | H | OCHF₂ | -CH₂-C₆H₅ | 115-117 |
| 98 | H | H | OCHF₂ | -c-C₃H₅ | 87-91 |
| 99 | H | H | OCHF₂ | -CH₂-CH₂-S-CH₃ | ¹H-NMR |
| 100 | Br | H | OCH₃ | -CH₃ | 168-173 |
| 101 | H | H | OCHF₂ | -CH₂-CH=CH₂ | 75-78 |
| 102 | H | H | OCHF₂ | -CH₂-c-C₃H₅ | ¹H-NMR |
| 103 | H | H | OCHF₂ | -CH₂-CH₂-CH₃ | 54-58 |
| 104 | H | H | OCHF₂ | -CH₂-CH₂-O-CH₃ | ¹H-NMR |
| 105 | H | H | OCHF₂ | -CH₂-CH₂-CN | 83-88 |
| 106 | H | H | OCHF₂ | -CH-(CH₃)₂ | 72-74 |
| 107 | H | H | OCHF₂ | -CH₂-CHF₂ | 92-96 |
| 108 | H | H | OCHF₂ | -O-CH₃ | oil |
| 109 | H | H | CF₃ | -CH₂-CH₃ | 81-86 |
| 110 | H | H | CF₃ | -CH₂-C≡CH | 106-111 |
| 111 | H | H | CF₃ | -CH₂-C₆H₅ | 106-108 |
| 112 | H | H | CF₃ | -CH₃ | 104-113 |
| 113 | H | H | CF₃ | -CH₂-CH=CH₂ | 71-73 |
| 114 | H | H | CF₃ | -CH-(CH₃)₂ | 65-67 |
| 115 | H | H | CF₃ | -CH₂-CH₂-CH₃ | 62-66 |
| 116 | H | H | CF₃ | -CH₂-c-C₃H₅ | oil |
| 117 | H | H | CF₃ | -CH₂-CF₃ | oil |
| 118 | H | H | CF₃ | -CH₂-CH₂-S-CH₃ | oil |
| 119 | H | H | CF₃ | -c-C₃H₅ | 94-96 |
| 120 | H | H | CF₃ | -O-CH₂-CH₃ | 118-120 |
| 121 | H | H | CF₃ | -CH₂-CH₂-SO₂-CH₃ | 169-171 |
| 122 | H | H | CH₃ | -O-CH₂-CH₃ | 118-121 |
| 123 | H | H | CH₃ | -O-CH₃ | 136-140 |
| 124 | H | H | CH₃ | -cyclobutyl | HPLC/MS |
| 125 | H | H | CH₃ | -cyclopentyl | HPLC/MS |
| 126 | H | H | CH₃ | -cyclohexyl | HPLC/MS |
| 127 | H | H | CH₃ | -cyclopropyl | HPLC/MS |
| 128 | H | H | CH₃ | -C(CH₃)₂-CH₂-CH₃ | HPLC/MS |
| 129 | H | H | CH₃ | -CH₂-CH₂-CH₂-N(C₂H₅)₂ | HPLC/MS |
| 130 | H | H | CH₃ | -CH(CH₃)-CH(CH₃)₂ | HPLC/MS |
| 131 | H | H | CH₃ | -CH(CH₃)-C(CH₃)₃ | HPLC/MS |
| 132 | H | H | CH₃ | -C(CH₃)₃ | HPLC/MS |
| 133 | H | H | CH₃ | -C(CH₃)(C₂H₅)-CH₂-CH₃ | HPLC/MS |
| 134 | H | H | CH₃ | -C(CH₃)₂-CH₂-CH₂-CH₃ | HPLC/MS |
| 135 | H | H | CH₃ | -CH₂-CH₂-N[CH(CH₃)₂]₂ | HPLC/MS |
| 136 | H | H | CH₃ | -CH₂-CH₂-O-C₂H₅ | HPLC/MS |
| 137 | H | H | CH₃ | -CH(C₂H₅)₂ | HPLC/MS |
| 138 | H | H | CH₃ | -CH(CH₃)-CH₂-CH(CH₃)₂ | HPLC/MS |
| 139 | H | H | CH₃ | -CH(C₂H₅)-CH₂-O-CH₃ | HPLC/MS |
| 140 | H | H | CH₃ | -C(CH₃)₂-C≡CH | HPLC/MS |
| 141 | H | H | CH₃ | -CH(CH₃)-CH₂-O-C₂H₅ | HPLC/MS |
| 142 | H | H | CH₃ | -CH(CH₃)-CH₂-O-CH₃ | HPLC/MS |
| 143 | H | H | CH₃ | -CH₂-CH(CH₃)-C₂H₅ | HPLC/MS |
| 144 | H | H | CH₃ | -CH(CH₃)-CH₂-S-CH₃ | HPLC/MS |
| 145 | H | H | CH₃ | -CH₂-CH(OCH₃)₂ | ¹H-NMR |
| 146 | H | H | CH₃ | -CH₂-CH₂-C(CH₃)₃ | HPLC/MS |
| 147 | H | H | CH₃ | -CH₂-CH(OC₂H₅)₂ | HPLC/MS |
| 148 | H | H | CH₃ | -CH₂-CH₂-S-CH₃ | HPLC/MS |
| 149 | H | H | CH₃ | -CH₂-CH(CH₃)₂ | HPLC/MS |
| 150 | H | H | CH₃ | -CH₂-CH₂-CH(CH₃)₂ | HPLC/MS |
| 151 | H | H | CH₃ | -CH₂-CH₂-CH₂-O-CH₃ | HPLC/MS |
| 152 | H | H | CH₃ | -CH₂-CH(CH₃)-O-CH₃ | HPLC/MS |
| 153 | H | H | CH₃ | -CH₂-CH(CH₃)-CH₂-C₂H₆ | HPLC/MS |
| 154 | H | H | CH₃ | -CH₂-CH₂-CH₂-S-CH₃ | HPLC/MS |
| 155 | H | H | CH₃ | -C(CH₃)₂-CH₂-S-C₂H₅ | HPLC/MS |
| 156 | H | H | CH₃ | -C(CH₃)₂-CH₂-S-CH₃ | HPLC/MS |
| 157 | H | H | CH₃ | -CH(CH₃)-CH₂-N(CH₃)₂ | HPLC/MS |
| 158 | H | H | CH₃ | -C(CH₃)(n-C₃H₇)₂-C≡CH | HPLC/MS |
| 159 | H | H | CH₃ | -C(CH₃)₂-CH=CH₂ | HPLC/MS |
| 160 | H | H | CH₃ | -CH(CH₃)-C(O)-O-CH₃ | HPLC/MS |
| 161 | H | H | CH₃ | -CH(CH₃)-c-C₃H₅ | HPLC/MS |
| 162 | H | H | CH₃ | -CH₂-CF₃ | HPLC/MS |
| 163 | H | H | CH₃ | -CH₂-CH₂-O-CH₃ | HPLC/MS |
| 164 | H | H | CH₃ | -CH(CH₃)-C₂H₅ | HPLC/MS |
| 165 | H | H | CH₃ | CH(CH₃)₂ | HPLC/MS |
| 166 | H | H | CH₃ | -C(CH₃)₂-CH₂-CN | HPLC/MS |
| 167 | H | H | CH₃ | -CH₂-CH₂-CH₂-N(CH₃)₂ | HPLC/MS |
| 168 | H | H | CH₃ | -CH₂-CH₂-CH₂-CH₂-CH₃ | HPLC/MS |
| 169 | H | H | CH₃ | -CH₂-CH₂-F | HPLC/MS |
| 170 | H | H | CH₃ | -CH₂-CH₂-CH₂-O-C₂H₅ | HPLC/MS |
| 171 | H | H | CH₃ | -CH₂-CH₂-O-CH(CH₃)₂ | HPLC/MS |
| 172 | H | H | CH₃ | -CH(CH₃)-CH₂-Cl | HPLC/MS |
| 173 | H | H | CH₃ | -CH₂-CH₂-CH₂-Cl | HPLC/MS |
| 174 | H | H | CH₃ | -CH₂-C≡C-CH₂-Cl | HPLC/MS |
| 175 | H | H | CH₃ | -CH₂-C(O)-O-CH₃ | HPLC/MS |
| 176 | H | H | CH₃ | -CH₂-CH₂-CH₂-Br | HPLC/MS |
| 177 | H | H | CH₃ | -CH₂-CH₂-CH₂-CH₃ | HPLC/MS |
| 178 | H | H | CH₃ | -CH₂-CH₂-S-C₂H₅ | HPLC/MS |
| 179 | CN | H | CH₃ | -CH₂-CH₃ | 114-119 |
| 180 | CN | H | CH₃ | -CH₃ | 172-175 |
| 181 | CN | H | CH₃ | -CH₂-C≡CH | 95-105 |
| 182 | CN | H | CH₃ | H | oil |
| 183 | CN | H | CH₃ | -CH₂-CH=CH₂ | 83-95 |
| 184 | CN | H | CH₃ | -CH₂-CH₂-CH₃ | 95-99 |
| 185 | CN | H | CH₃ | -CH₂-CH₂-F | oil |
| 186 | CN | H | CH₃ | -cyclopropyl | oil |
| 187 | CN | H | CH₃ | -O-CH₃ | 139-142 |
| 188 | OCH₃ | H | CH₃ | -CH₂-CH₃ | 171-174 |
| 189 | OCH₃ | H | CH₃ | -CH₂-C≡CH | 151-155 |
| 190 | OCH₃ | H | CH₃ | -H | 171-180 |
| 191 | OCH₃ | H | CH₃ | -CH₃ | 171-175 |

In examples 1-191 of table PII, R⁴ is hydrogen.
c-C₃H₅: cyclopropyl;
n-C₃H₇: n-propyl
*Some compounds of table PII were characterized by ¹H-NMR. The signals are characterized by chemical shift (ppm) vs. tetramethylsilane, by their multiplicity and by their integral (relativ number of hydrogen atoms given). The following abbreviations are used to characterize the multiplicity of the signals: m = multiplett, t = triplett, d = doublett and s = singulett.
- Example 35:: 2.06 (t, 1H), 2.72 (s, 3H), 3.92 (m, 2H), 5,56 (t, 1H), 7.85 (d, 1H), 7.92 (d, 1H), CDCl₃
- Example 38:: 2.66 (s, 3H), 3.67 (m, 2H), 5.12 (d, 1H), 5.21 (d, 1H), 5.30 (t, 1H), 5.74 (m, 1H), 7.56 (d, 1H), 7.62 (t, 1H), 7.95 (d, 1H), CDCl₃
- Example 43:: 4.04 (s, 3H), 4.13 (d, 2H), 6.15 (t, 1H), 7.30 (m, 1H), 7.72 (m, 2H), CD- Cl₃
- Example 44:: 3.67 (m, 2H), 4.04 (s, 3H),5.11 (d, 1H), 5.23 (m, 2H), 5.76 (m, 1H), 7.23 (dd, 1H), 7.68 (m, 2H), CDCl₃
- Example 53:: 2.07 ( m, 1H), 2.72 (s, 3H), 3.95 (m, 2H), 5.52 (t, 1H), 7.72 (d, 1H), 7.95 (d, 1H), CDCl₃
- Example 99:: 2.05 ( s, 3H), 2.66 (t, 2H), 3.28 (q, 2H), 5.62 (t, 1H), 6.73 (t, 1H), 7.59 (d, 1H), 7.77 (t, 1H), 7.99 (d, 1H), CDCl₃
- Example 102:: 0.13 (m, 2H), 0.31 (m, 2H), 0.90 (m, 1H), 2.95 (t, 2H), 5.32 (t, 1H), 6.72 (t, 1H), 7.57 (d, 1H), 7.77 (t, 1H), 8.00 (d, 1H), CDCl₃
- Example 104:: 3.27 ( s, 3H), 3.33 (m, 2H), 3.43 (m, 2H), 5.56 (t, 1H), 6.75 (t, 1H), 7.58 (d, 1H), 7.77 (t, 1H), 8.00 (d, 1H), CDCl₃
- Example 145:: 2.65 (s, 3H), 3.15 (pt, 2H), 3.3 (s, 6H), 4.35 (t, 1H), 5.65 (t, 1H) 7.55 (d, 1H), 7.6 (t, 1H), 7.9 (d, 1H), CDCl₃
**Some compounds of table PII were characterized by coupled High Performance Liquid Chromatography / mass spectrometry (HPLC/MS).
HPLC column: RP-18 column (Chromolith Speed ROD from Merck KgaA, Germany). Elution: acetonitrile + 0.1 % trifluoroacetic acid (TFA) / water in a ratio from 5:95 to 95:5 in 5 minutes at 40 °C.
MS: Quadrupol electrospray ionisation, 80 V (positiv modus)
Example 124: 2.813 min, m/z = 273 [M+Na]⁺
Example 125: 3.043 min, m/z = 287 [M+Na]⁺
Example 126: 3.260 min, m/z = 279 [M+H]⁺
Example 127: 2.486 min, m/z = 237 [M+H]⁺
Example 128: 3.198 min, m/z = 267 [M+H]⁺
Example 129: 1.955 min, m/z = 310 [M+H]⁺
Example 130: 3.244 min, m/z = 267 [M+H]⁺
Example 131: 3.438 min, m/z = 281 [M+H]⁺
Example 132: 3.004 min, m/z = 253 [M+H]⁺
Example 133: 3.483 min, m/z = 303 [M+H]⁺
Example 134: 3.533 min, m/z = 281 [M+H]⁺
Example 135: 2.091 min, m/z = 324 [M+H]⁺
Example 136: 2.534 min, m/z = 269 [M+H]⁺
Example 137: 3.154 min, m/z = 267 [M+H]⁺
Example 138: 3.413 min, m/z = 303 [M+H]⁺
Example 139: 2.761 min, m/z = 283 [M+H]⁺
Example 140: 2.740 min, m/z = 263 [M+H]⁺
Example 141: 2.802 min, m/z = 283 [M+H]⁺
Example 142: 2.596 min, m/z = 269 [M+H]⁺
Example 143: 3.225 min, m/z = 267 [M+H]⁺
Example 144: 3.836 min, m/z = 285 [M+H]⁺
Example 146: 3.430 min, m/z = 281 [M+H]⁺
Example 147: 2.934 min, m/z = 335 [M+Na]⁺
Example 148: 2.677 min, m/z = 271 [M+H]⁺
Example 149: 2.989 min, m/z = 253 [M+H]⁺
Example 150: 3.254 min, m/z = 267 [M+H]⁺
Example 151: 2.443 min, m/z = 269 [M+H]⁺
Example 152: 2.481 min, m/z = 269 [M+H]⁺
Example 153: 3.501 min, m/z = 281 [M+H]⁺
Example 154: 2.750 min, m/z = 285 [M+H]⁺
Example 155: 3.362 min, m/z = 335 [M+Na]⁺
Example 156: 3.116 min, m/z = 321 [M+Na]⁺
Example 157: 1.740 min, m/z = 282 [M+H]⁺
Example 158: 3.249 min, m/z = 291 [M+H]⁺
Example 159: 2.985 min, m/z = 265 [M+H]⁺
Example 160: 2.364 min, m/z = 283 [M+H]⁺
Example 161: 2.919 min, m/z = 265 [M+H]⁺
Example 162: 2.644 min, m/z = 301 [M+Na]⁺
Example 163: 2.177 min, m/z = 255 [M+H]⁺
Example 164: 2.917 min, m/z = 253 [M+H]⁺
Example 165: 2.570 min, m/z = 239 [M+H]⁺
Example 166: 2.500 min, m/z = 278 [M+H]⁺
Example 167: 3.314 min, m/z = 282 [M+H]⁺
Example 168: 3.297 min, m/z = 267 [M+H]⁺
Example 169: 2.259 min, m/z = 243 [M+H]⁺
Example 170: 2.709 min, m/z = 283 [M+H]⁺
Example 171: 2.814 min, m/z = 283 [M+H]⁺
Example 172: 2.733 min, m/z = 273 [M+H]⁺
Example 173: 2.729 min, m/z = 273 [M+H]⁺
Example 174: 2.743 min, m/z = 283 [M+H]⁺
Example 175: 2.187 min, m/z = 269 [M+H]⁺
Example 176: 2.935 min, m/z = 317 [M+H]⁺
Example 177: 3.090 min, m/z = 253 [M+H]⁺
Example 178: 2.956 min, m/z = 285 [M+H]⁺

**Table PIII:**

| Example no. | R³ | R⁴ | R¹ | R² | m.p. [°C] |
|---|---|---|---|---|---|
| 1. | H | Cl | CH₃ | CH₂CH₃ | 119-123 |
| 2. | H | Br | CH₃ | CH₂CH₃ | 141-144 |

In examples 1,2 of table PIII, R⁵ is hydrogen.

The term seed embraces seeds and plant propagules of all kinds including but not limited to true seeds, seed pieces, suckers, corms, bulbs, fruit, tubers, grains, cuttings, cut shoots and the like and means in a preferred embodiment true seeds.

The compounds of formula I are used for the protection of the seed from soil pests and the resulting plant's roots and shoots against soil pests and foliar insects. The protection of the resulting plant's roots and shoots is preferred. More preferred is the protection of resulting plant's shoots from piercing and sucking insects, wherein the protection from aphids is most preferred.

The present invention therefore comprises a method for the protection of seeds from soil insects and of the seedlings' roots and shoots from soil and foliar insects comprising contacting the seeds before sowing and/or after pregermination with a compound of the general formula I, preferably to a method, wherein the plant's roots and shoots are protected, more preferably to a method, wherein the plants shoots are protected form piercing and sucking insects, most preferably to a method, wherein the plants shoots are protected from aphids.

The term soil insects and foliar insects encompasses the following genera and species:
millipedes (Diplopoda), hemiptera (homoptera and heteroptera), Orthoptera,
lepidopterans (Lepidoptera), for example *Agrotis ipsilon, Agrotis segetum, Chilo ssp., Euxoa ssp., Momphidae, Ostrinia nubilalis, and Phthorimaea operculella,* beetles (Coleoptera), for example *Agriotes lineatus, Agriotes obscurus, Aphthona euphoridae, Athous haemorrhoidalis, Atomaria linearis, Cetonia aurata, Ceuthorrhynchus assimilis, Ceuthorrhynchus napi, Chaetocnema tibialis, Ctenicera ssp., Diabrotica longicornis, Diabrotica speciosa, Diabrotica semi-punctata, Diabrotica virgifera, Limonius californicus, Melanotus communis, Otiorrhynchus ovatus, Phyllobius pyri, Phyllophaga sp., Phyllophaga cuyabana, Phyllophaga triticophaga, Phyllopertha horticola, Phyllotreta nemorum, Phyllotreta striolata, Popillia japonica, Sitona lineatus* and *Sitophilus granaria,*
flies (Diptera), for example *Chrysomya bezziana, Chrysomya hominivorax, Chrysomya macellaria, Contarinia sorghicola, Cordylobia anthropophaga, Dacus cucurbitae, Dacus oleae, Dasineura brassicae, Delia antique, Delia coarctata, Delia platura, Delia radicum, Fannia canicularis, Gasterophilus intestinalis, Geomyza Tripunctata, Glossina morsitans, Haematobia irritans, Haplodiplosis equestris, Hypoderma lineata, Lucilia caprina, Lucilia cuprina, Lucilia sericata, Lycoria pectoralis, Mayetiola destructor, Muscina stabulans, Oestrus ovis, Opomyza florum, Oscinella frit, Pegomya hysocyami, Phorbia antiqua, Phorbia brassicae, Phorbia coarctata, Psila rosae, Rhagoletis cerasi, Rhagoletis pomonella, Tabanus bovinus, Tipula oleracea* and *Tipula paludosa,*
thrips (Thysanoptera), e.g. Thrips simplex,
ants (Hymenoptera), e.g. *Atta capiguara, Atta cephalotes, Atta laevigata, Atta robusta, Atta sexdens, Atta texana, Monomorium pharaonis, Solenopsis geminata* and *Solenopsis invicta, Pogonomyrmex ssp.* and *Pheidole megacephala,*
termites (Isoptera), *e.g. Coptotermes ssp,*
springtails (Collembola), *e.g. Onychiurus ssp.*
insects from the order of the lepidopterans (*Lepidoptera*), for example *Agrotis ypsilon, Agrotis segetum, Alabama argillacea, Anticarsia gemmatalis, Argyresthia conjugella, Autographa gamma, Bupalus piniarius, Cacoecia murinana, Capua reticulana, Cheimatobia brumata, Choristoneura fumiferana, Choristoneura occidentalis, Cirphis unipuncta, Cydia pomonella, Dendrolimus pini, Diaphania nitidalis, Diatraea grandiosella, Earias insulana, Elasmopalpus lignosellus, Eupoecilia ambiguella, Evetria bouliana, Feltia subterranea, Galleria mellonella, Grapholitha funebrana, Grapholitha molesta, Heliothis armigera, Heliothis virescens, Heliothis zea, Hellula undalis, Hibernia defoliaria, Hyphantria cunea, Hyponomeuta malinellus, Keiferia lycopersicella, Lambdina fiscellaria, Laphygma exigua, Leucoptera coffeella, Leucoptera scitelia, Lithocolletis blancardella, Lobesia botrana, Loxostege sticticalis, Lymantria dispar, Lymantria monacha, Lyonetia clerkella, Malacosoma neustria, Mamestra brassicae, Orgyia pseudotsugata, Ostrinia nubilalis, Panolis flammea, Pectinophora gossypiella, Peridroma saucia, Phalera bucephala, Phthorimaea operculella, Phyllocnistis citrella, Pieris brassicae, Plathypena scabra, Plutella xylostella, Pseudoplusia includens, Rhyacionia frustrana, Scrobipalpula absoluta, Sitotroga cerealella, Sparganothis pilleriana, Spodoptera frugiperda, Spodoptera littoralis, Spodoptera litura, Thaumatopoea pityocampa, Tortrix viridana, Trichoplusia ni* and *Zeiraphera canadensis,*
beetles (*Coleoptera*), for example *Agrilus sinuatus, Agriotes lineatus, Agriotes obscurus, Amphimallus solstitialis, Anisandrus dispar, Anthonomus grandis, Anthonomus pomorum, Atomaria linearis, Blastophagus piniperda, Blitophaga undata, Bruchus rufimanus, Bruchus pisorum, Bruchus lentis, Byctiscus betulae, Cassida nebulosa, Cerotoma trifurcata, Ceuthorrhynchus assimilis, Ceuthorrhynchus napi, Chaetocnema tibialis, Conoderus vespertinus, Crioceris asparagi, Diabrotica longicornis, Diabrotica 12-punctata, Diabrotica virgifera, Epilachna varivestis, Epitrix hirtipennis, Eutinobothrus brasiliensis, Hylobius abietis, Hypera brunneipennis, Hypera postica, Ips typographus, Lema bilineata, Lema melanopus, Leptinotarsa decemlineata, Limonius californicus, Lissorhoptrus oryzophilus, Melanotus communis, Meligethes aeneus, Melolontha hippocastani, Melolontha melolontha, Oulema oryzae, Ortiorrhynchus sulcatus, Otiorrhynchus ovatus, Phaedon cochleariae, Phyllotreta chrysocephala, Phyllophaga sp., Phyllopertha horticola, Phyllotreta nemorum, Phyllotreta striolata, Popillia japonica, Sitona lineatus* and *Sitophilus granaria,*
dipterans (*Diptera*), for example *Aedes aegypti, Aedes vexans, Anastrepha ludens, Anopheles maculipennis, Ceratitis capitata, Chrysomya bezziana, Chrysomya hominivorax, Chrysomya macellaria, Contarinia sorghicola, Cordylobia anthropophaga, Culex pipiens, Dacus cucurbitae, Dacus oleae, Dasineura brassicae, Fannia canicularis, Gasterophilus intestinalis, Glossina morsitans, Haematobia irritans, Haplodiplosis equestris, Hylemyia platura, Hypoderma lineata, Liriomyza sativae, Liriomyza trifolii, Lucilia caprina, Lucilia cuprina, Lucilia sericata, Lycoria pectoralis, Mayetiola destructor, Musca domestica, Muscina stabulans, Oestrus ovis, Oscinella frit, Pegomya hysocyami, Phorbia antiqua, Phorbia brassicae, Phorbia coarctata, Rhagoletis cerasi, Rhagoletis pomonella, Tabanus bovinus, Tipula oleracea* and *Tipula paludosa,*
thrips (*Thysanoptera*), e.g. *Frankliniella fusca, Frankliniella occidentalis, Frankliniella tritici, Scirtothrips citri, Thrips oryzae, Thrips palmi* and *Thrips tabaci,*
hymenopterans (*Hymenoptera*), e.g. *Athalia rosae, Atta cephalotes, Atta sexdens, Atta texana, Hoplocampa minuta, Hoplocampa testudinea, Monomorium pharaonis, Solenopsis geminata* and *Solenopsis invicta,*
heteropterans (*Heteroptera*), e.g. *Acrosternum hilare, Blissus leucopterus, Cyrtopeltis notatus, Dysdercus cingulatus, Dysdercus intermedius, Eurygaster integriceps, Euschistus impictiventris, Leptoglossus phyllopus, Lygus lineolaris, Lygus pratensis, Nezara viridula, Piesma quadrata, Solubea insularis* and *Thyanta perditor,*
aphids, such as homopterans (*Homoptera*), e.g. *Acyrthosiphon onobrychis, Adelges laricis, Aphidula nasturtii, Aphis fabae, Aphis forbesi, Aphis pomi, Aphis gossypii, Aphis grossulariae, Aphis schneideri, Aphis spiraecola, Aphis sambuci, Acyrthosiphon pisum, Aulacorthum solani, Brachycaudus cardui, Brachycaudus helichrysi, Brachycaudus persicae, Brachycaudus prunicola, Brevicoryne brassicae, Capitophorus horni, Cerosipha gossypii, Chaetosiphon fragaefolii, Cryptomyzus ribis, Dreyfusia nordmannianae, Dreyfusia piceae, Dysaphis radicola, Dysaulacorthum pseudosolani, Dysaphis plantaginea, Dysaphis pyri, Empoasca fabae, Hyalopterus pruni, Hyperomyzus lactucae, Macrosiphum avenae, Macrosiphum euphorbiae, Macrosiphon rosae, Megoura viciae, Melanaphis pyrarius, Metopolophium dirhodum, Myzodes persicae, Myzus ascalonicus, Myzus cerasi, Myzus varians, Nasonovia ribis-nigri, Nilaparvata lugens, Pemphigus bursarius, Perkinsiella saccharicida, Phorodon humuli, Psylla mali, Psylla piri, Rhopalomyzus ascalonicus, Rhopalosiphum maidis, Rhopalosiphum padi, Rhopalosiphum insertum, Sappaphis mala, Sappaphis mali, Schizaphis graminum, Schizoneura lanuginosa, Sitobion avenae, Trialeurodes vaporariorum, Toxoptera aurantiiand,* and *Viteus vitifolii;*
termites (*Isoptera*), e.g. *Calotermes flavicollis, Leucotermes flavipes, Reticulitermes lucifugus* und *Termes natalensis*;
orthopterans (*Orthoptera*), e.g. *Acheta domestica, Blatta orientalis, Blattella germanica, Forficula auricularia, Gryllotalpa gryllotalpa, Locusta migratoria, Melanoplus bivittatus, Melanoplus femur-rubrum, Melanoplus mexicanus, Melanoplus sanguinipes, Melanoplus spretus, Nomadacris septemfasciata, Periplaneta americana, Schistocerca americana, Schistocerca peregrina, Stauronotus maroccanus* and *Tachycines asynamorus ;*
Arachnoidea, such as arachnids (*Acarina*), e.g. of the families *Argasidae, Ixodidae* and *Sarcoptidae,* such as *Amblyomma americanum, Amblyomma variegatum, Argas persicus, Boophilus annulatus, Boophilus decoloratus, Boophilus microplus, Dermacentor silvarum, Hyalomma truncatum, Ixodes ricinus, Ixodes rubicundus, Ornithodorus moubata, Otobius megnini, Dermanyssus gallinae, Psoroptes ovis, Rhipicephalus appendiculatus, Rhipicephalus evertsi, Sarcoptes scabiei,* and Eriophyidae spp. such as *Aculus schlechtendali, Phyllocoptrata oleivora* and *Eriophyes sheldoni*; Tarsonemidae spp. such as *Phytonemus pallidus* and *Polyphagotarsonemus latus*; Tenuipalpidae spp. such as *Brevipalpus phoenicis;* Tetranychidae spp. such as *Tetranychus cinnabarinus, Tetranychus kanzawai, Tetranychus pacificus, Tetranychus telarius* and *Tetranychus urticae, Panonychus ulmi, Panonychus citri, and oligonychus pratensis;*
Nematodes, especially plant parasitic nematodes such as root knot nematodes, *Meloidogyne hapla, Meloidogyne incognita, Meloidogyne javanica,* and other Meloidogyne species; cyst-forming nematodes, *Globodera rostochiensis* and other Globodera species; *Heterodera avenae, Heterodera glycines, Heterodera schachtii, Heterodera trifolii,* and other Heterodera species; Seed gall nematodes, Anguina species; Stem and foliar nematodes, Aphelenchoides species; Sting nematodes, *Belonolaimus longicaudatus* and other Belonolaimus species; Pine nematodes, *Bursaphelenchus xylophilus* and other Bursaphelenchus species; Ring nematodes, Criconema species, Criconemella species, Criconemoides species, Mesocriconema species; Stem and bulb nematodes, *Ditylenchus destructor, Ditylenchus dipsaci* and other Ditylenchus species; Awl nematodes, Dolichodorus species; Spiral nematodes, *Heliocotylenchus multicinctus* and other Helicotylenchus species; Sheath and sheathoid nematodes, Hemicycliophora species and Hemicriconemoides species; Hirshmanniella species; Lance nematodes, Hoploaimus species; false rootknot nematodes, Nacobbus species; Needle nematodes, *Longidorus elongatus* and other Longidorus species; Lesion nematodes, *Pratylenchus neglectus, Pratylenchus penetrans, Pratylenchus curvitatus, Pratylenchus goodeyi* and other Pratylenchus species; Burrowing nematodes, *Radopholus similis* and other Radopholus species; Reniform nematodes, *Rotylenchus robustus* and other Rotylenchus species; Scutellonema species; Stubby root nematodes, *Trichodorus primitivus* and other Trichodorus species, Paratrichodorus species; Stunt nematodes, *Tylenchorhynchus claytoni,* Tylenchorhynchus dubius and other Tylenchorhynchus species; Citrus nematodes, Tylenchulus species; Dagger nematodes, Xiphinema species; and other plant parasitic nematode species.
Piercing and sucking insects comprise the following genera and species :
thrips (*Thysanoptera*), e.g. *Frankliniella fusca, Frankliniella occidentalis, Frankliniella tritici, Scirtothrips citri, Thrips oryzae, Thrips palmi* and *Thrips tabaci,*
hymenopterans (*Hymenoptera*), e.g. *Athalia rosae, Atta cephalotes, Atta sexdens, Atta texana, Hoplocampa minuta, Hoplocampa testudinea, Monomorium pharaonis, Solenopsis geminata* and *Solenopsis invicta,*
orthopterans (*Orthoptera*), e.g. *Acheta domestica, Blatta orientalis, Blattella germanica, Forficula auricularia, Gryllotalpa gryllotalpa, Locusta migratoria, Melanoplus bivittatus, Melanoplus femur-rubrum, Melanoplus mexicanus, Melanoplus sanguinipes, Melanoplus spretus, Nomadacris septemfasciata, Periplaneta americana, Schistocerca americana, Schistocerca peregrina, Stauronotus maroccanus* and *Tachycines asynamorus ;*
and aphids, such as homopterans (*Homoptera*), e.g. *Acyrthosiphon onobrychis, Adelges laricis, Aphidula nasturtii, Aphis fabae, Aphis forbesi, Aphis pomi, Aphis gossypii, Aphis grossulariae, Aphis schneideri, Aphis spiraecola, Aphis sambuci, Acyrthosiphon pisum, Aulacorthum solani, Brachycaudus cardui, Brachycaudus helichrysi, Brachycaudus persicae, Brachycaudus prunicola, Brevicoryne brassicae, Capitophorus horni, Cerosipha gossypii, Chaetosiphon fragaefolii, Cryptomyzus ribis, Dreyfusia nordmannianae, Dreyfusia piceae, Dysaphis radicola, Dysaulacorthum pseudosolani, Dysaphis plantaginea, Dysaphis pyri, Empoasca fabae, Hyalopterus pruni, Hyperomyzus lactucae, Macrosiphum avenae, Macrosiphum euphorbiae, Macrosiphon rosae, Megoura viciae, Melanaphis pyrarius, Metopolophium dirhodum, Myzodes persicae, Myzus ascalonicus, Myzus cerasi, Myzus varians, Nasonovia ribis-nigri, Nilaparvata lugens, Pemphigus bursarius, Perkinsiella saccharicida, Phorodon humuli, Psylla mali, Psylla piri, Rhopalomyzus ascalonicus, Rhopalosiphum maidis, Rhopalosiphum padi, Rhopalosiphum insertum, Sappaphis mala, Sappaphis mali, Schizaphis graminum, Schizoneura lanuginosa, Sitobion avenae, Trialeurodes vaporariorum, Toxoptera aurantiiand,* and *Viteus vitifolii;*

Examples of aphids such as homopterans (*Homoptera*) are e.g. *Acyrthosiphon onobrychis, Adelges laricis, Aphidula nasturtii, Aphis fabae, Aphis forbesi, Aphis pomi, Aphis gossypii, Aphis grossulariae, Aphis schneideri, Aphis spiraecola, Aphis sambuci, Acyrthosiphon pisum, Aulacorthum solani, Brachycaudus cardui, Brachycaudus helichrysi, Brachycaudus persicae, Brachycaudus prunicola, Brevicoryne brassicae, Capitophorus horni, Cerosipha gossypii, Chaetosiphon fragaefolii, Cryptomyzus ribis, Dreyfusia nordmannianae, Dreyfusia piceae, Dysaphis radicola, Dysaulacorthum pseudosolani, Dysaphis plantaginea, Dysaphis pyri, Empoasca fabae, Hyalopterus pruni, Hyperomyzus lactucae, Macrosiphum avenae, Macrosiphum euphorbiae, Macrosiphon rosae, Megoura viciae, Melanaphis pyrarius, Metopolophium dirhodum, Myzodes persicae, Myzus ascalonicus, Myzus cerasi, Myzus varians, Nasonovia ribis-nigri, Nilaparvata lugens, Pemphigus bursarius, Perkinsiella saccharicida, Phorodon humuli, Psylla mali, Psylla piri, Rhopalomyzus ascalonicus, Rhopalosiphum maidis, Rhopalosiphum padi, Rhopalosiphum insertum, Sappaphis mala, Sappaphis mali, Schizaphis graminum, Schizoneura lanuginosa, Sitobion avenae, Trialeurodes vaporariorum, Toxoptera aurantiiand,* and *Viteus vitifolii;*

As outlined above, the use of the compounds of formula I and compositions containing them for combating piercing and sucking pests is preferred, wherein the combating of aphids is especially preferred.

Suitable target seeds and plant propagules are various crop seeds, fruit species, vegetables, spices and ornamental seed, for example corn/maize (sweet and field), durum wheat, soybean, wheat, barley, oats, rye, triticale, bananas, rice, cotton, sunflower, potatoes, pasture, alfalfa, grasses, turf, sorghum, rapeseed, Brassica spp., sugar beet, eggplants, tomato, lettuce, iceberg lettuce, pepper, cucumber, squash, melon, bean, dry-beans, peas, leek, garlic, onion, cabbage, carrot, tuber such as sugar cane, tobacco, coffee, turf and forage, cruciferous, cucurbits, grapevines, pepper, fodder beet, oil seed rape, pansy, impatiens, petunia and geranium, preferably seeds of barley, wheat, oats, sorghum, cotton, soybean, and sugarbeet and seed pieces of potatoes.

In addition, the active ingredient may also be used for the treatment seeds from plants, which tolerate the action of herbicides or fungicides or insecticides owing to breeding, including genetic engineering methods.

For example, the active ingredient can be employed in treatment of seeds from plants, which are resistant to herbicides from the group consisting of the sulfonylureas, imidazolinones, glufosinate-ammonium or glyphosate-isopropylammonium and analogous active substances (see for example, EP-A-0242236, EP-A-242246) (WO 92/00377) (EP-A-0257993, U.S. Pat. No. 5,013,659) or in transgenic crop plants, for example cotton, with the capability of producing Bacillus thuringiensis toxins (Bt toxins) which make the plants resistant to certain pests (EP-A-0142924, EP-A-0193259),

Furthermore, the active ingredient can also be used also for the treatment of seeds from plants, which have modified characteristics in comparison with existing plants consist, which can be generated for example by traditional breeding methods and/or the generation of mutants, or by recombinant procedures). For example, a number of cases have been described of recombinant modifications of crop plants for the purpose of modifying the starch synthesized in the plants (e.g. WO 92/11376, WO 92/14827, WO 91/19806) or of transgenic crop plants having a modified fatty acid composition (WO 91/13972).

The seed treatment application of the active ingredient is carried out by spraying or dusting the seeds before sowing of the plants and before emergence of the plants.

The compounds of formula I are effective through both direct and indirect contact and ingestion, and also through trophallaxis and transfer.

For use according to the present invention, the compounds I can be converted into the customary formulations, e.g. solutions, emulsions, suspensions, dusts, powders, pastes and granules. The use form depends on the particular purpose; it is intended to ensure in each case a fine and uniform distribution of the compound on the seed according to the invention.

The formulations are prepared in a known manner, e.g. by extending the active ingredient with solvents and/or carriers or further auxiliaries such as pigemenhts, antifreezing agents emulsifiers and dispersants, if desired. Solvents/auxiliaries, which can be used, are essentially:
water, aromatic solvents (for example Solvesso products, xylene), paraffins (for example mineral fractions), alcohols (for example methanol, butanol, pentanol, benzyl alcohol), ketones (for example cyclohexanone, gamma-butyrolactone), pyrrolidones (NMP, NOP), acetates (glycol diacetate), glycols, fatty acid dimethylamides, fatty acids and fatty acid esters. In principle, solvent mixtures may also be used.

Carriers such as ground natural minerals (e.g. kaolins, clays, talc, chalk) and ground synthetic minerals (e.g. highly disperse silica, silicates); emulsifiers such as nonionic and anionic emulsifiers (e.g. polyoxyethylene fatty alcohol ethers, alkylsulfonates and arylsulfonates) and dispersants such as lignin-sulfite waste liquors and methylcellulose.

Suitable surfactants are alkali metal, alkaline earth metal and ammonium salts of lignosulfonic acid, naphthalenesulfonic acid, phenolsulfonic acid, dibutylnaphthalenesulfonic acid, alkylarylsulfonates, alkyl sulfates, alkylsulfonates, fatty alcohol sulfates, fatty acids and sulfated fatty alcohol glycol ethers, furthermore condensates of sulfonated naphthalene and naphthalene derivatives with formaldehyde, condensates of naphthalene or of naphthalenesulfonic acid with phenol, octylphenol, nonylphenol, alkylphenyl polyglycol ethers, tributylphenyl polyglycol ether, tristearylphenyl polyglycol ether, alkylaryl polyether alcohols, alcohol and fatty alcohol/ethylene oxide condensates, ethoxylated castor oil, polyoxyethylene alkyl ethers, ethoxylated polyoxypropylene, lauryl alcohol polyglycol ether acetal, sorbitol esters, lignin-sulfite waste liquors and methylcellulose and ethylene oxide / propylene oxide block copolymers.

Substances which are suitable for the preparation of directly sprayable solutions, emulsions, pastes or oil dispersions are mineral oil fractions of medium to high boiling point, such as kerosene or diesel oil, furthermore coal tar oils and oils of vegetable or animal origin, aliphatic, cyclic and aromatic hydrocarbons, for example toluene, xylene, paraffin, tetrahydronaphthalene, alkylated naphthalenes or their derivatives, methanol, ethanol, propanol, butanol, cyclohexanol, cyclohexanone, isophorone, strongly polar solvents, for example dimethyl sulfoxide, N-methylpyrrolidone and water.

Powders, materials for spreading and dusts can be prepared by mixing or concomitantly grinding the active substances with a solid carrier.

Granules, for example coated granules, impregnated granules and homogeneous granules, can be prepared by binding the active ingredients to solid carriers. Examples of solid carriers are mineral earths such as silica gels, silicates, talc, kaolin, attaclay, limestone, lime, chalk, bole, loess, clay, dolomite, diatomaceous earth, calcium sulfate, magnesium sulfate, magnesium oxide, ground synthetic materials, fertilizers, such as, for example, ammonium sulfate, ammonium phosphate, ammonium nitrate, ureas, and products of vegetable origin, such as cereal meal, tree bark meal, wood meal and nutshell meal, cellulose powders and other solid carriers.

Binders can be added to improve the adhesion of the active materials on the seeds after treatment. Suitable adhesives are block copolymers EO/PO surfactants but also polyvinylalcoholsl, polyvinylpyrrolidones, polyacrylates, polymethacrylates, polybutenes, polyisobutylenes, polystyrene, polyethyleneamines, polyethyleneamides, polyethyleneimines (Lupasol®, Polymin®), polyethers, polyurethans and copolymers derived from these polymers.

Optionally, also pigments can be included in the formulation. Suitable pigments or dyes for seed treatment formulations are pigment blue 15:4, pigment blue 15:3, pigment blue 15:2, pigment blue 15:1, pigment blue 80, pigment yellow 1, pigment yellow 13, pigment red 112, pigment red 48:2, pigment red 48:1, pigment red 57:1, pigment red 53:1, pigment orange 43, pigment orange 34, pigment orange 5, pigment green 36, pigment green 7, pigment white 6, pigment brown 25, basic violet 10, basic violet 49, acid red 51, acid red 52, acid red 14, acid blue 9, acid yellow 23, basic red 10, basic red 108. anti-freezing agents such as glycerin, ethylene glycol, propylene glycol can be added to the formulation.

In general, the formulations comprise from 0.01 to 95% by weight, preferably from 0.1 to 90% by weight, of the active ingredient. The active ingredients are employed in a purity of from 90% to 100%, preferably 95% to 100% (according to NMR spectrum).

The following are examples of formulations:
1. Products for direct application or for application after dilution with water
   A) Soluble concentrates (LS)
      10 parts by weight of the active compounds are dissolved in water or in a water-soluble solvent. As an alternative, wetters or other auxiliaries are added. The active compound dissolves upon dilution with water.
   B) Dispersible concentrates (DC)
      20 parts by weight of the active compounds are dissolved in cyclohexanone with addition of a dispersant, for example polyvinylpyrrolidone. Dilution with water gives a dispersion.
   C) Emulsifiable concentrates (EC)
      15 parts by weight of the active compounds are dissolved in xylene with addition of calcium dodecylbenzenesulfonate and castor oil ethoxylate (in each case 5% strength). Dilution with water gives an emulsion.
   D) Emulsions (ES)
      40 parts by weight of the active compounds are dissolved in xylene with addition of calcium dodecylbenzenesulfonate and castor oil ethoxylate (in each case 5% strength). This mixture is introduced into water by means of an emulsifier (Ultraturax) and made into a homogeneous emulsion. Dilution with water gives an emulsion.
   E) Suspensions (FS)
      In an agitated ball mill, 20 parts by weight of the active compounds are comminuted with addition of dispersant, wetters and water or an organic solvent to give a fine active compound suspension. Dilution with water gives a stable suspension of the active compound.
   F) Water-dispersible granules and water-soluble granules (WG, SG)
      50 parts by weight of the active compounds are ground finely with addition of dispersants and wetters and made into water-dispersible or water-soluble granules by means of technical appliances (for example extrusion, spray tower, fluidized bed). Dilution with water gives a stable dispersion or solution of the active compound.
   G) Water-dispersible powders and water-soluble powders (SS, WS)
      75 parts by weight of the active compounds are ground in a rotor-stator mill with addition of dispersant, wetters and silica gel. Dilution with water gives a stable dispersion or solution with the active compound.
   H) Gel-Formulation (GF)
      In an agitated ball mill, 20 parts by weight of the active compounds are comminuted with addition of 10 parts by weight of dispersants, 1 part by weight of a gelling agent wetters and 70 parts by weight of water or of an organic solvent to give a fine active compounds suspension. Dilution with water gives a stable suspension of the active compounds, whereby a formulation with 20% (w/w) of active compounds is obtained.
2. Products to be applied undiluted
   I) Dustable powders (DS)
      5 parts by weight of the active compounds are ground finely and mixed intimately with 95% of finely divided kaolin. This gives a dustable product.
   J) Granules (GR, FG, GG, MG)
      0.5 part by weight of the active compounds is ground finely and associated with 95.5% carriers. Current methods are extrusion, spray-drying or the fluidized bed. This gives granules to be applied undiluted.

Conventional seed treatment formulations include for example flowable concentrates FS, solutions LS, powders for dry treatment DS, water dispersible powders for slurry treatment WS, water-soluble powders SS and emulsion ES and EC. Application to the seeds is carried out before sowing, either directly on the seeds or after having pregerminated the latter.

In a preferred embodiment, a FS formulation is used. Typcially, a FS formulation may comprise 1-800 g/l of active ingredient, 1-200 g/l Surfactant, 0 to 200 g/l antifreezing agent, 0 to 400 g/l of binder, 0 to 15 g/I of a pigment and up to 1 liter of a solvent, preferably water.

The active ingredients can be used as such, in the form of their formulations or the use forms prepared therefrom, eg. in the form of directly sprayable solutions, powders, gels, suspensions or dispersions, emulsions, oil dispersions, pastes, dustable products, materials for spreading, or granules, microcapsules (CS), pellets or tablets, by means of spraying, atomizing, dusting, spreading or pouring. The use forms depend entirely on the intended purposes; it is intended to ensure in each case the finest possible distribution of the active ingredients according to the invention.

Aqueous use forms can be prepared from emulsion concentrates, pastes or wettable powders (sprayable powders, oil dispersions) by adding water. To prepare emulsions, pastes or oil dispersions, the substances, as such or dissolved in an oil or solvent, can be homogenized in water by means of a wetter, tackifier, dispersant or emulsifier. Alternatively, it is possible to prepare concentrates composed of active substance, wetter, tackifier, dispersant or emulsifier and, if appropriate, solvent or oil, and such concentrates are suitable for dilution with water.

The active ingredient concentrations in the ready-to-use products can be varied within relatively wide ranges. In general, they are from 0.01 to 80%, preferably from 0.1 to 50%.

Various types of oils, wetters, adjuvants, herbicides, fungicides, other pesticides, or bactericides may be added to the active ingredients, if appropriate just immediately prior to use. These agents usually are admixed with the agents according to the invention in a weight ratio of 1:100 to 100:1.

The application rates vary with the crops. In the treatment of seed, the application rates of the compounds of formula I are generally from 0.1 g to 10 kg of compounds of formula I per 100 kg of seeds, desirably 0.25 kg of compounds of formula I per 100 kg of seeds. In general, rates from 1 g to 5 kg compounds of formula I per 100 kg of seeds, more desirably from 1 g to 2.5 kg per 100 kg of seeds are suitable. For specific crops such as lettuce the rates can be higher.

The term seed treatment comprises all suitable seed treatment techniques known in the art, such as seed dressing, seed coating, seed dusting, seed soaking and seed pelleting.

In the control of pests, the application of the compound of formula I or of the composition comprising it is carried out by spraying or dusting the seeds or the soil (and thereby the seeds) after sowing, wherein treating the seeds prior to sowing is preferred.

A further subject of the invention is a method of treating the seed in the seed drill with a granular formulation containing the active ingredient or a composition comprising it, with optionally one or more solid or liquid, agriculturally acceptable carriers and/or optionally with one or more agriculturally acceptable surfactants. This method is advantageously employed in seedbeds of cereal, maize, cotton and sunflower.

For cereals and maize, the rates for compounds of formula I are between 50 and 1000 g/ha.

The seed comprises the inventive mixtures in an amount of from 0.1 g to 100 kg per 100 kg of seed.

The following list of pesticides together with which the compounds according to the invention can be used, is intended to illustrate the possible combinations, but not to impose any limitation:

The insecticide is selected from the group consisting of
Organophosphates: Acephate, Azinphos-methyl, Chlorpyrifos, Chlorfenvinphos, Diazinon, Dichlorvos, dimethylvinphos, dioxabenzofos, Dicrotophos, Dimethoate, Disulfoton, Ethion, EPN, Fenitrothion, Fenthion, Isoxathion, Malathion, Methamidophos, Methidathion, Methyl-Parathion, Mevinphos, Monocrotophos, Oxydemetonmethyl, Paraoxon, Parathion, Phenthoate, Phosalone, Phosmet, Phosphamidon, Phorate, Phoxim, Pirimiphos-methyl, Profenofos, Prothiofos, primiphos-ethyl, pyraclofos, pyridaphenthion, Sulprophos, Triazophos, Trichlorfon; tetrachlorvinphos, vamidothion;
Carbamates: Alanycarb, Benfuracarb, Bendiocarb, Carbaryl, BPMC, carbofuran, Carbosulfan, Fenoxycarb, Furathiocarb, Indoxacarb, Methiocarb, Methomyl, Oxamyl, Pirimicarb, Propoxur, Thiodicarb, Triazamate;
Pyrethroids: Bifenthrin, Cyfluthrin, cycloprothrin, Cypermethrin, Deltamethrin, Esfenvalerate, Ethofenprox, Fenpropathrin, Fenvalerate, Cyhalothrin, Lambda-Cyhalothrin, Permethrin, Silafluofen, Tau-Fluvalinate, Tefluthrin, Tralomethrin, alpha-cypermethrin, zeta-cypermethrin, permethrin;
Neonicotinoides: acetamiprid, clothianidin, Dinotefuran, Flonicamid, Imidacloprid, Nitenpyram, Thiamethoxam, thiacloprid;
Arthropod growth regulators: a) chitin synthesis inhibitors: benzoylureas: Chlorfluazuron, Diflubenzuron, Flucycloxuron, Flufenoxuron, Hexaflumuron, Lufenuron, Novaluron, Teflubenzuron, Triflumuron; Buprofezin, Diofenolan, Hexythiazox, Etoxazole, Clofentazine; b) ecdysone antagonists: Halofenozide, Methoxyfenozide, Tebufenozide; c) juvenoids: Pyriproxyfen, Methoprene, Fenoxycarb; d) lipid biosynthesis inhibitors: Spirodiclofen;
Various: Abamectin, Acequinocyl, Amitraz, Azadirachtin, bensultap Bifenazate, Cartap, Bensultap,Chlorfenapyr, Chlordimeform, Cyromazine, Diafenthiuron, Diofenolan, Emamectin benzoate, Endosulfan, Ethiprole, Fenazaquin, Fipronil, Formetanate, Formetanate hydrochloride, gamma-HCH Hydramethylnon, Indoxacarb, isoprocarb, metolcarb, nitenpyram, Pyridaben, Pymetrozine, Spinosad, Sulfur, Tebufenpyrad, Thiocyclam, XMC, xylylcarb, Pyridalyl, Pyridalyl, Flonicamid, Fluacypyrim, Milbemectin, Spiromesifen, Flupyrazofos, NC 512, Tolfenpyrad, Flubendiamide, Bistrifluron, Benclothiaz, Pyrafluprole, Pyriprole, Amidoflumet, Flufenerim, Cyflumetofen, Acequinocyl, Lepimectin, Profluthrin, Dimefluthrin, Metaflumizone, a tetronic acid of the following formula 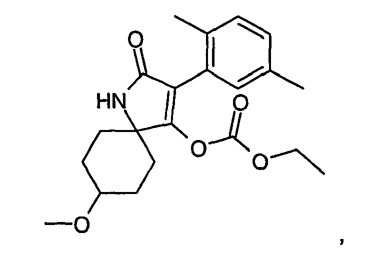 an aminoiso-thiazole of the following formula 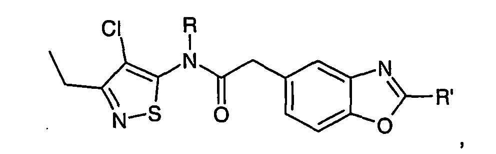 in which
   R is -CH₂O CH₃ or H; and
   R^{'} is -CF₂CF₂ CF₃;
   an anthranilamide of the following formula

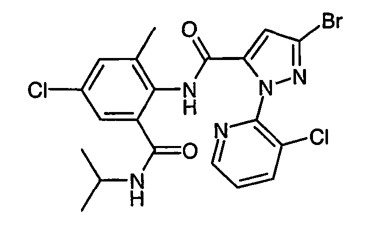

In general, "pesticidally effective amount" means the amount of active ingredient needed to achieve an observable effect on growth, including the effects of necrosis, death, retardation, prevention, and removal, destruction, or otherwise diminishing the occurrence and activity of the target organism. The pesticidally effective amount can vary for the various compounds/compositions used in the invention. A pesticidally effective amount of the compositions will also vary according to the prevailing conditions such as desired pesticidal effect and duration, weather, target species, locus, mode of application, and the like.

The pesticidal action of the compounds is demonstrated by the following experiments:
Biological example 1: Experimental compounds set forth in Table B.1 were evaluated to determine their insecticidal efficacy for control of foliar aphids when applied as seed treatments.

**Table B.1:**

| | | | | | | |
|---|---|---|---|---|---|---|
| 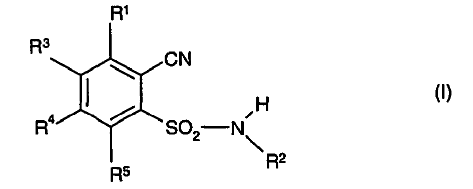 | | | | | | |

| Example no. | R³ | R⁵ | R¹ | R⁴ | R² | m.p. [ °C] |
|---|---|---|---|---|---|---|
| 30 | H | H | CH₃ | H | -CH₂CH₃ | 98-103 |
| 31 | H | H | CH₃ | H | prop-2-ynyl | 104-107 |
| 66 | H | H | OCHF₂ | H | -CH₂-CH₃ | 98-100 |
| 89 | H | H | OCHF₂ | H | CH₃ | 122-128 |
| 103 | H | H | OCHF₂ | H | -CH₂-CH₂-CH₃ | 54-58 |
| 106 | H | H | OCHF₂ | H | -CH-(CH₃)₂ | 72-74 |
| 107 | H | H | OCHF₂ | H | -CH₂-CHF₂ | 92-96 |

### Compound Preparation

Experimental compounds were formulated by dissolving 10.5 mg technical material in 45 µl acetone then adding 255 µl 0.05% aqueous TWEEN 20 (polyoxyethylene (20) sorbitan monolaurate).

### Cotton Seed Treatment

Twenty-five cotton seeds (variety Sure-Grow 747) were placed in a 20-ml glass vial and then 150 µl of the compound formulation were pipetted onto the side of the vial just above the seeds. Vials were vortexed for 30 seconds to rapidly spin the seeds within the vial to apply the compound to the seeds. Treated seeds were then air-dried. Solvent blank controls are created by treating seeds with a 15% acetone / 0.05% aqueous TWEEN 20 solution.

### Insecticide Efficacy Evaluation

Twenty-four cotton seeds were planted in Metro Mix potting mix in twelve 7.6-cm-square pots, 2 seeds per pot. Crop selectivity was determined by comparing seedling emergence and recording any foliar and shoot symptoms.

Seedling plants were thinned to one plant per pot. At the cotyledon stage 6 plants per treatment were infested with cotton aphids (*Aphis gossypii*) by manually transferring circa 25 aphids to each plant on a piece of leaf tissue cut from a donor plant that was infested with aphids. The exact number of aphids transferred to each plant was recorded.

Four days after infestation, live aphids on each plant were counted. The aphid population increase for each control plant was calculated by dividing the final aphid population by the initial population. The median aphid population increase on the solvent blank controls was then calculated. This median aphid population increase was used to determine the expected final aphid population expected on each treated plant by multiplying the initial aphid population on the treated plant by the median aphid population increase of the solvent blank controls.

All compounds listed in table B.1 showed significant reduction of the aphid population. Compounds 30,31 and 66 showed a reduction of more than 45% in aphid population and compounds 89,103,106 and 107 showed a reduction of more than 95% in aphid population.

## Claims

1. A method for the protection of seeds from soil insects and of the seedlings' roots and shoots from soil and foliar insects comprising contacting the seeds before sowing and/or after pregermination with a 2-cyanobenzenesulfonamide compound of the general formula I 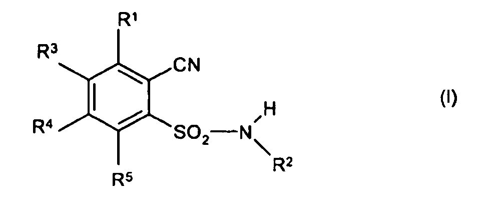 where
R¹ is C₁-C₄-alkyl, C₁-C₄-haloalkyl, C₁-C₄-alkoxy or C₁-C₄-haloalkoxy;
R² is hydrogen, C₁-C₆-alkyl, C₂-C₆-alkenyl, C₂-C₆-alkinyl, C₃-C₈-cycloalkyl or C₁-C₄-alkoxy, wherein the five last-mentioned radicals may be unsubsti- tuted, partially or fully halogenated and/or may carry one, two, or three radicals selected from the group consisting of C₁-C₄-alkoxy, C₁-C₄-alkylthio, C₁-C₄-alkylsulfinyl, C₁-C₄-alkylsulfonyl, C₁-C₄-haloalkoxy, C₁-C₄- haloalkylthio, C₁-C₄-alkoxycarbonyl, cyano, amino, (C₁-C₄-alkyl)amino, di- (C₁-C₄-alkyl)amino, C₃-C₈-cycloalkyl and phenyl, it being possible for phenyl to be unsubstituted, partially or fully halogenated and/or to carry one, two or three substituents selected from the group consisting of C₁-C₄-alkyl, C₁-C₄- haloalkyl, C₁-C₄-alkoxy, C₁-C₄-haloalkoxy; and
R³, R⁴ and R⁵ are independently of one another selected from the group consist- ing of hydrogen, halogen, cyano, nitro, C₁-C₆-alkyl, C₃-C₈-cycloalkyl, C₁-C₄- haloalkyl, C₁-C₄-alkoxy, C₁-C₄-alkylthio, C₁-C₄-alkylsulfinyl, C₁-C₄- alkylsulfonyl, C₁-C₄-haloalkoxy, C₁-C₄-haloalkylthio, C₂-C₆-alkenyl, C₂-C₆- alkinyl, C₁-C₄-alkoxycarbonyl, amino, (C₁-C₄-alkyl)amino, di-(C₁-C₄- alkyl)amino, aminocarbonyl, (C₁-C₄-alkyl)aminocarbonyl and di-(C₁-C₄- alkyl)aminocarbonyl;
or the enantiomers or salts thereof,
in pesticidally effective amounts.

2. A method as claimed in claim 1 wherein in the compound of formula I R¹ is C₁-C₂-alkyl, C₁-C₂-alkoxy or C₁-C₂-haloalkoxy.

3. A method as claimed in claim 2, wherein in the compound of formula I as claimed in claim 2 R¹ is methyl.

4. A method as claimed as claimed in claim 2 wherein in formula I R¹ is methoxy.

5. A method as claimed in claim 1 wherein in formula I R¹ is C₁-C₄-haloalkoxy.

6. A method as claimed in claim 5 wherein in formula I R¹ is C₁-haloalkoxy, in particular difluormethoxy.

7. A method as claimed in claim 1 wherein in formula I R2 is selected from the group consisting of hydrogen, a hydrocarbon radical having from 1 to 4 carbon atoms, C₁-C₄-haloalky, C₁-C₄-alkoxy-C₁-C₄-alkyl, C₁-C₄-alkylthio-C₁-C₄-alkyl and C₂-C₄-alkinyl.

8. A compound as claimed in claim 7 wherein R² is hydrogen, methyl, ethyl, 1-methylethyl, prop-2-yn-1-yl or 2-difluoroethyl.

9. A method as claimed in claim 1 where in formula I at least one of the radicals R³, R⁴ and R⁵ is different from hydrogen.

10. A method as claimed in claim 9 where R³ is halogen.

11. A method as claimed in claim 1 where R¹ is difluormethoxy and R³, R⁴ and R⁵ represent hydrogen.

12. A method as claimed in claim 1 where in formula I the radicals R³, R⁴ and R⁵ represent hydrogen.

13. The method according any of claims 1 to 12, wherein the compound of formula I is applied in an amount of from 0,1 g to 10 kg per 100 kg of seeds.

## Patentansprüche

1. Verfahren zum Schützen von Samen gegen Bodeninsekten und zum Schützen der Wurzeln und Sprosse der Keimlinge gegen Bodeninsekten und Blattinsekten, bei dem man die Samen vor dem Säen und/oder nach dem Vorkeimen mit einer 2-Cyanobenzolsulfonamidverbindung der allgemeinen Formel I 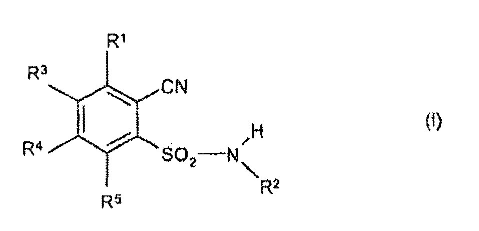 in der
R¹ C₁-C₄-Alkyl, C₁-C₄-Halogenalkyl, C₁-C₄-Alkoxy oder C₁-C₄-Halogenalkoxy bedeutet;
R² Wasserstoff, C₁-C₆-Alkyl, C₂-C₆-Alkenyl, C₂-C₆- Alkinyl, C₃-C₈-Cycloalkyl oder C₁-C₄-Alkoxy, wobei die fünf letztgenannten Reste unsubstituiert oder teilweise oder vollständig halogeniert sein können und/oder einen, zwei oder drei Reste ausgewählt aus der Gruppe bestehend aus C₁-C₄-Alkoxy, C₁-C₄-Alkylthio, C₁- C₄-Alkylsulfinyl, C₁-C₄-Alkylsulfonyl, C₁-C₄- Halogenalkoxy, C₁-C₄-Halogenalkylthio, C₁-C₄- Alkoxycarbonyl, Cyano, Amino, (C₁-C₄- Alkyl) amino, Di-(C₁-C₄-alkyl)amino, C₃-C₈- Cycloalkyl und Phenyl tragen können, wobei das Phenyl unsubstituiert, teilweise oder vollständig halogeniert sein kann und/oder einen, zwei oder drei Substituenten ausgewählt aus der Gruppe bestehend aus C₁-C₄-Alkyl, C₁-C₄- Halogenalkyl, C₁-C₄-Alkoxy, C₁-C₄-Halogenalkoxy tragen kann, bedeutet; und
R³, R⁴ und R⁵ unabhängig voneinander aus der Gruppe bestehend aus Wasserstoff, Halogen, Cyano, Nitro, C₁-C₆-Alkyl, C₃-C₈-Cycloalkyl, C₁-C₄- Halogenalkyl, C₁-C₄-Alkoxy, C₁-C₄-Alkylthio, C₁- C₄-Alkylsulfinyl, C₁-C₄-Alkylsulfonyl, C₁-C₄- Halogenalkoxy, C₁-C₄-Halogenalkylthio, C₂-C₆- Alkenyl, C₂-C₆-Alkinyl, C₁-C₄-Alkoxycarbonyl, Amino, (C₁-C₄-Alkyl) amino, Di-(C₁-C₄-alkyl)amino, Aminocarbonyl, (C₁-C₄-Alkyl)aminocarbonyl und Di-(C₁-C₄-alkyl)aminocarbonyl ausgewählt sind;
oder den Enantiomeren oder Salzen davon;
in pestizidwirksamen Mengen in Kontakt bringt.

2. Verfahren nach Anspruch 1, wobei R¹ in der Verbindung der Formel I C₁-C₂-Alkyl, C₁-C₂-Alkoxy oder C₁-C₂-Halogenalkoxy bedeutet.

3. Verfahren nach Anspruch 2, wobei R¹ in der Verbindung der Formel I nach Anspruch 2 Methyl bedeutet.

4. Verfahren nach Anspruch 2, wobei R¹ in Formel I Methoxy bedeutet.

5. Verfahren nach Anspruch 1, wobei R¹ in Formel I C₁-C₄-Halogenalkoxy bedeutet.

6. Verfahren nach Anspruch 5, wobei R¹ in Formel I C₁-Halogenalkoxy, insbesondere Difluormethoxy, bedeutet.

7. Verfahren nach Anspruch 1, wobei R² in Formel I aus der Gruppe bestehend aus Wasserstoff, einem Kohlenwasserstoffrest mit 1 bis 4 Kohlenstoffatomen, C₁-C₄-Halogenalkyl, C₁-C₄-Alkoxy-C₁-C₄-alkyl, C₁-C₄-Alkylthio-C₁-C₄-alkyl und C₂-C₄-Alkinyl ausgewählt ist.

8. Verbindung nach Anspruch 7, wobei R² Wasserstoff, Methyl, Ethyl, 1-Methylethyl, Prop-2-in-1-yl oder 2-Difluorethyl bedeutet.

9. Verfahren nach Anspruch 1, wobei mindestens einer der Reste R³, R⁴ und R⁵ in Formel I nicht Wasserstoff bedeutet.

10. Verfahren nach Anspruch 9, wobei R³ Halogen bedeutet.

11. Verfahren nach Anspruch 1, wobei R¹ Difluormethoxy bedeutet und R³, R⁴ und R⁵ Wasserstoff bedeuten.

12. Verfahren nach Anspruch 1, wobei die Reste R³, R⁴ und R⁵ in Formel I Wasserstoff bedeuten.

13. Verfahren nach einem der Ansprüche 1 bis 12, wobei die Verbindung der Formel I in einer Menge von 0,1 g bis 10 kg pro 100 kg Samen appliziert wird.

## Revendications

1. Procédé pour la protection de semences vis-à-vis d'insectes du sol et de racines et pousses de semis vis-à-vis d'insectes du sol et foliaires, comportant l'étape consistant à mettre en contact les semences avant l'ensemencement et/ou après la prégermination avec un composé de 2-cyanobenzènesulfonamide de formule générale I 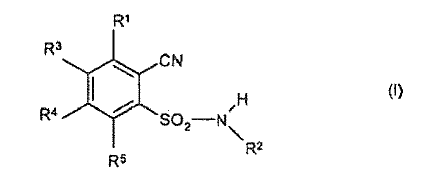 où
R¹ représente un alkyle en C₁-C₄, un halogénoalkyle en C₁-C₄, un alcoxy en C₁-C₄ ou un halogénoalcoxy en C₁-C₄ ;
R² représente l'hydrogène, un groupe alkyle en C₁-C₆, alcényle en C₂-C₆, alcynyle en C₂-C₆, cycloalkyle en C₃-C₈ ou alcoxy en C₁-C₄, où les cinq radicaux mentionnés en dernier peuvent être non substitués, partiellement ou totalement halogénés et/ou peuvent porter un, deux ou trois radicaux sélectionnés parmi le groupe constitué d'alcoxy en C₁-C₄, alkylthio en C₁-C₄, alkylsulfinyle en C₁-C₄, alkylsulfonyle en C₁-C₄, halogénoalcoxy en C₁-C₄, halogénoalkylthio en C₁-C₄, alcoxycarbonyle en C₁-C₄, cyano, amino, (alkyl)amino en C₁-C₄, di(alkyl)amino en C₁-C₄, cycloalkyle en C₃-C₈ et phényle, le groupe phényle pouvant être non substitué, partiellement ou totalement halogéné et/ou pouvant porter un, deux ou
trois substituants sélectionnés parmi le groupe constitué du groupe alkyle en C₁-C₄, halogénoalkyle en C₁-C₄, alcoxy en C₁-C₄, halogénoalcoxy en C₁-C₄ ; et
R³, R⁴ et R⁵ sont, indépendamment les uns des autres, sélectionnés parmi le groupe constitué d'hydrogène, halogène, cyano, nitro, alkyle en C₁-C₆, cycloalkyle en C₃-C₈, halogénoalkyle en C₁-C₄, alcoxy en C₁-C₄, alkylthio en C₁-C₄, alkylsulfinyle en C₁-C₄, alkylsulfonyle en C₁-C₄, halogénoalcoxy en C₁-C₄, halogénoalkylthio en C₁-C₄, alcényle en C₂-C₆, alcynyle en C₂-C₆, alcoxycarbonyle en C₁-C₄, amino, (alkyl)amino en C₁-C₄, di-(alkyl)amino en C₁-C₄, aminocarbonyle, (alkyl)aminocarbonyle en C₁-C₄ et di-(alkyl)aminocarbonyle en C₁-C₄ ;
ou les énantiomères ou sels de celui-ci, en quantités efficaces de manière pesticide.

2. Procédé selon la revendication 1, **caractérisé en ce que** dans le composé de formule I, R¹ est un alkyle en C₁-C₂, un alcoxy en C₁-C₂ ou un halogénoalcoxy en C₁-C₂.

3. Procédé selon la revendication 2, **caractérisé en ce que** dans le composé de formule I selon la revendication 2, R¹ est un groupe méthyle.

4. Procédé selon la revendication 2, **caractérisé en ce que** dans la formule I R¹ est un groupe méthoxy.

5. Procédé selon la revendication 1, **caractérisé en ce que** dans la formule I R¹ est un groupe halogénoalcoxy en C₁-C₄.

6. Procédé selon la revendication 5, **caractérisé en ce que** dans la formule I R¹ est un groupe halogénoalcoxy en C₁, en particulier difluorométhoxy.

7. Procédé selon la revendication 1, où dans la formule I, R² est sélectionné à partir du groupe constitué de l'hydrogène, un radical hydrocarbone ayant 1 à 4 atomes de carbone, un halogénoalkyle en C₁-C₄, un (alcoxy en C₁-C₄)-(alkyle en C₁-C₄), un (alkylthio en C₁-C₄) - (alkyle en C₁-C₄) et alcynyle en C₂-C₄.

8. Composé selon la revendication 7, **caractérisé en ce que** R² est de l'hydrogène, un groupe méthyle, éthyle, 1-méthyléthyle, prop-2-yn-1-yle ou 2-difluoroéthyle.

9. Procédé selon la revendication 1, où dans la formule I, au moins un des radicaux R³, R⁴ et R⁵ est différent de l'hydrogène.

10. Procédé selon la revendication 9, où R³ est un halogène.

11. Procédé selon la revendication 1, où R¹ est difluorométhoxy et R³, R⁴ et R⁵ représentent l'hydrogène.

12. Procédé selon la revendication 1, où dans la formule I, les radicaux R³, R⁴ et R⁵ représentent l'hydrogène.

13. Procédé selon l'une quelconque des revendications 1 à 12, **caractérisé en ce que** le composé de formule I est appliqué en une quantité de 0,1 g à 10 kg par 100 kg de semences.
